# EUROPEAN PATENT APPLICATION

(11) **EP 1 471 720 A1**
(43) Date of publication of application: **27.10.2004**
(21) Application number: 04018159.6
(22) Date of filing: 19.02.1998
(51) Int. Cl.: H04N 1/00, H04N 1/32, H04N 1/387

(54) **Edited image printing system and method**

(30) Priority: 19.02.1997 JP 4957397; 31.10.1997 JP 31612497
(62) Divisional of application: 98301215.4
(71) Applicant: Fuji Photo Film Co., Ltd., Kanagawa (JP)
(72) Inventor: Ohta, Yoshinori, Asaka-shi, Saitama (JP); Shiimori, Yoshiko, Asaka-shi, Saitama (JP); Haneda, Norihisa, Asaka-shi, Saitama (JP); Tanaka, Keisuke, Asaka-shi, Saitama (JP); Teshima, Atsushi, Asaka-shi, Saitama (JP)
(74) Representative: Tothill, John Paul

(57) **Abstract**

A user obtains a high-quality edited image in comparatively simple fashion without going to a processing laboratory. A image editing apparatus 1, a main server 30, an image server 31 and a printer server 32 are interconnected via a network so as to be capable of communicating with one another. The user generates an edited image from a plurality of images using the image editing apparatus 1. Editing information, which is for reproducing the edited image that has been generated, is transmitted from the image editing apparatus 1 to the main server 30. On the basis of the received editing information, the main server 30 retrieves image data, which is used in generating the edited image, stored in the main server 30 or in an image server 31, and generates edited image data. The edited image data that has been generated is transmitted to the printer server 32, which proceeds to print a high-quality edited image. The finished product, namely the edited image, it mailed to the user of the image editing apparatus 1.

## Description

This invention relates to a system and image communication method wherein an image editing apparatus, an image server and a printer server are capable of communicating with one another. The present invention relates further to the image editing apparatus, image server and printer server that construct this system, and to a recording medium for the communication of image data.

The development of personal computers has made it possible for a user to input images to his or her own computer, perform image editing using a plurality of images and produce one desired frame of an image. In a case where one frame of the edited image is printed, the usual practice is to employ a printer located in the user's own home.

The printer at the user's home, however, generally is inexpensive and therefore the image quality of the edited image printed often is not good. In order to obtain a high-quality print image, the medium (a floppy disk or the like) on which the image data representing the edited image has been recorded must be taken to a processing laboratory having a special-purpose printing apparatus and the image must be printed at the laboratory.

Depending upon the user, going to a processing laboratory to obtain a high-quality edited image may be too troublesome.

An object of the present invention is to so arrange it that a high-quality edited image can be printed comparatively simply.

The present invention provides an edited image printing method in an image communication system in which an image server, an image editing apparatus and a printer server are capable of communicating with one another.

The image editing apparatus generates an edited image of one frame using image data representing images of at least two frames and transmits information, which relates to generation of the edited image, to the image server.

The image server generates edited image data, which represents the edited image, based upon the information relating to generation of the edited image transmitted from the image editing apparatus, and transmits the edited image data that has been generated to the printer server.

The printer server prints the edited image using the edited image data transmitted from the image server.

The present invention provides also an image communication system suited to implementation of the edited image printing method mentioned above. The image communication system is a system in which the image server, the image editing apparatus and the printer server are capable of communicating with one another.

The image editing apparatus has image editing means for generating an edited image of one frame using image data representing images of at least two frames, and information transmitting means for transmitting, to the image server, information relating to generation of the edited image generated by the image editing means.

The image server has edited image data generating means for generating edited image data, which represents the edited image, based upon the information relating to generation of the edited image transmitted from the image editing apparatus, and edited image data transmitting means for transmitting, to the printer server, the edited image data generated by the edited image data generating means.

The printer server has printing means for printing the edited image using the edited image data transmitted from the image server.

In accordance with the present invention, an edited image is generated in the image editing apparatus, which usually is located at the user's home. The information relating to generation of the edited image is transmitted from the image editing apparatus to the image server.

Edited image data representing the edited image is generated in the image server based upon the information relating to generation of the edited image transmitted from the image editing apparatus, and the edited image data is transmitted from the image server to the printer server.

The edited image represented by the edited image data transmitted from the image server is printed by the printer server.

The printer server has a printing apparatus capable of high-quality printing, and printing of the edited image is carried out using this printing apparatus.

The edited image printed at the printer server would be delivered to the user of the image editing apparatus by cash on delivery (C.O.D.) mail, by way of example. The user of the image editing apparatus need not go to a processing laboratory but can acquire a high-quality edited image (the product) while remaining at home.

Several methods for generating the edited image are available. These will now be described.

A first method can be applied when image data representing images of a plurality of frames has been stored in the image server. The method includes transmitting image data, which represents images of at least two frames from among the images of the plurality of frames, from the image server to the image editing apparatus based upon a transmission command from the image editing apparatus, and generating the aforementioned edited image of one frame in the image editing apparatus using image data representing the images of at least two frames transmitted from the image server.

In this case, the image editing apparatus transmits image identification information for specifying the image data and information relating to editing of the edited image to the image server.

Image data corresponding to the images of at least two frames stored at the image server is retrieved in the image server based upon the image identification information, and edited image data representing the edited image is generated in the image server based upon the retrieved image data and the information relating to the editing of the edited image.

The image editing apparatus or image server may be arranged independently in the image communication system. Further, a recording medium on which a program for operating the image editing apparatus and image server in the manner set forth above has been recorded may be created.

The image data representing the images of at least two frames among the images of the plurality of frames is transmitted from the image server to the image editing apparatus based upon a transmission command from the image editing apparatus.

The user generates the edited image of one frame using the image data that has been transmitted from the image server. When the edited image is generated, the image editing apparatus transmits information relating to this editing and image identification information for specifying the images used in generation of the edited image to the image server.

On the basis of the image identification information, image data representing the images used in generation of the edited image is retrieved at the image server. When this image data is retrieved, the image server generates the edited image data based upon the retrieved image data and the information relating to editing.

The edited image data is supplied from the image server to the printer server, which proceeds to print the edited image.

A second method can be applied when first image data used in image editing has been stored in the image server and second image data used in image editing has been stored in the image editing apparatus. The first image data is transmitted from the image server to the image editing apparatus based upon a transmission command from the image editing apparatus, and an edited image of one frame is generated in the image editing apparatus using the first image data transmitted from the image server and the second image data that has been stored in the image editing apparatus.

Information relating to editing of the edited image, image identification information for specifying the first image data and the second image data used in the generation of the edited image are transmitted from the image editing apparatus to the image server.

The first image data that has been stored in the image server is retrieved at the image server based upon the image identification information, and the image server generates edited image data representing the edited image based upon the first image data that has been retrieved, the second image data that has been transmitted from the image editing apparatus and the information relating to generation of the edited image.

The image server or image editing apparatus constructing the image editing system may each be arranged independently. Further, a recording medium on which a program for operating the image editing apparatus and image server in the manner set forth above has been recorded may be created.

The first image data is transmitted from the image server to the image editing apparatus.

The image editing apparatus generates the edited image using the first image data transmitted from the image server and the second image data that has been stored.

The information relating to generation of the edited image, the image identification information for specifying the first image data and the second image data used in generation of the edited image are transmitted from the image editing apparatus to the image server.

The first image data is retrieved in the image server from the image identification information, and the image server generates the edited image data from the first image data that has been retrieved, the second image data transmitted from the image editing apparatus and the information relating to generation of the edited image.

The edited image data that has been generated is transmitted to the printer server, which proceeds to print the edited image.

Thus, the edited image can be generated using the second image data that has been stored in the image editing apparatus.

Since the edited image can be generated using image data that has not been stored in the image server, an edited image desired by the user of the image editing apparatus can be generated freely.

In this case also the user of the image editing apparatus can obtain a printed high-quality edited image without going to a processing laboratory.

A third method can be applied when first image data representing images of a plurality of frames has been stored in the image server and second image data used in image editing has been stored in the image editing apparatus. Specific first image data, which represents an image of at least one frame among the images of the plurality of frames, is transmitted from the image server to the image editing apparatus, and the image editing apparatus generates the edited image of one frame using the specific first image data transmitted from the image server and the second image data that has been stored in the image editing apparatus.

Information relating to editing of the edited image and image identification information for specifying the specific first image data as well as the second image data is transmitted from the image editing apparatus to the image server.

On the basis of the image identification information, the image server retrieves the specific first image data and second image data from the image data that has been stored in the image server, and the image server generates edited image data representing the edited image based upon the retrieved specific first image data and second image data and the image identification information.

The image server or image editing apparatus constructing the image editing system may each be arranged independently. Further, a recording medium on which a program for operating the image editing apparatus and image server in the manner set forth above has been recorded may be created.

The specific first image data is transmitted from the image server to the image editing apparatus. The second image data has been stored in the image editing apparatus, which generates the edited image using the specific first image data and second image data.

The image editing apparatus transmits the information relating to generation of the edited image and the image identification information to the image server. The image server retrieves the specific first image data and second image data based upon the image identification information.

The edited image data is generated from the specific first image data and second image data retrieved and the information relating to generation of the edited image. The edited image data is transmitted to the printer server, whereby the edited image is printed.

Thus, the user of the image editing apparatus can obtain a high-quality edited image without going to a processing laboratory.

Since the second image data need not be transmitted from the image editing apparatus to the image server, the time required for the transmission from the image editing apparatus to the image server can be shortened.

A fourth method can be applied when image data representing images of a plurality of mutually corresponding frames have been stored in the image server and image editing apparatus. The image editing apparatus generates an edited image of one frame using images of at least two frames from among a plurality of images represented by the image data that has been stored in the image editing apparatus.

The image editing apparatus transmits information relating to editing of the edited image and image identification information, which is for specifying images of at least two frames used in generation of the edited image, to the image server.

On the basis of the image identification information, the image server retrieves image data representing images of at least two frames used in generation of the edited image from image data that has been stored in the image server, and the image server generates the edited image from the retrieved image data, which represents images corresponding to the images of at least two frames, and the image identification information.

The image editing apparatus and image server constructing the image editing system may each be arranged independently. Further, a recording medium on which a program for operating the image editing apparatus and image server in the manner set forth above has been recorded may be created.

An edited image of one frame is generated using image data representing images of at least two frames stored in the image editing apparatus. The image editing apparatus transmits the information relating to generation of the edited image and the image identification information to the image server. On the basis of the image identification information, the image server retrieves the image data used in generation of the edited image. The printer server prints the edited image based upon the retrieved image data and the information relating to generation of the edited image.

Thus, the user of the image editing apparatus can obtain a printed, high-quality edited image without going to a processing laboratory.

In this case, the edited image can be generated, even in a case where the image server does not have the desired image, using the images that have been stored in the image editing apparatus. Moreover, since the information relating to generation of the edited image and the image identification information is transmitted to the image server but image data is not, rapid transmission is possible.

It is preferred that the image data for generation of the edited image be reduced-image (thumbnail image) data, which represents an image of reduced size, when the image data for generation of the edited image is transmitted from the image server to the image editing apparatus in order to generate the edited image.

Further, the edited image data is generated in the image server using printing image data having a resolution higher than that of the thumbnail image data.

Since the image data transmitted to the image editing apparatus is indicative of an image of reduced size, the quantity of data is small and the data can be transmitted rapidly. Since image data for printing having a resolution higher than that of the thumbnail data is used as the image data for editing, the printing of a high-quality edited image can be maintained.

It is preferred that the image data be transmitted to the image editing apparatus upon transmitting an authentication code from the image editing apparatus to the image editing apparatus and determining, on the basis of the authentication code, whether the transmission of the image data is permitted. This makes it possible for the image data to be used only by a specific user.

In a case where there are a plurality of image servers that are capable of communicating with the image editing apparatus, retrieval processing would be executed in the other image servers when image data has not been retrieved by the above-described retrieval processing.

In a case where the image data is such that payment of a royalty is required, based upon a copyright, for example, for use of the image data, it is determined whether the image data retrieved by the retrieval processing is indicative of an image requiring billing. In case of image data requiring billing, information relating to billing is related with the edited image data and the information relating to billing is stored in the image server and printer server. Since the information relating to billing is related with the edited image data, the user of the image editing apparatus can be notified that an image required billing is used and that a charge is being billed in a case where the edited image is printed and sent to the user of the image editing apparatus.

There are instances where printing of an edited image cannot be performed by the printer server owing to a printer server malfunction. In such case information relating to suspension of printing of the edited image is transmitted to either or both of the image editing apparatus and image server.

Either the user of the image editing apparatus or the operator of the image server or both can be notified of suspension of printing. If necessary, printing may be performed by another printer server and the use of the image editing apparatus can be so informed.

In a case where printing of the edited image is suspended, the information relating to billing that has been stored in the image server and printer server is deleted.

In a case where an edited image includes an image requiring billing and the fee for this image has been collected from the user of the image editing apparatus, an indication to this effect is stored in the image server and printer server. The information relating to billing may be deleted.

By accepting a fee for using the image server, information relating to such acceptance may be transmitted from the image server to the printer server. As a result, the operator of the printer server is capable of being notified that the operator of the image server accepted the fee for use of the image server.

Further, by accepting a fee for using the printer server, information relating to such acceptance may be transmitted from the printer server to the image server. As a result, the operator of the image server is capable of being notified that the operator of the printer server accepted the fee for use of the image server.

It is preferred that the information relating to fee acceptance be transmitted upon being encrypted. This makes it possible to prevent interception by another party.

The image data may be stored on a portable storage medium (a medium, such as a floppy disk or CD-ROM, that may be freely carried about). In such case the image data would be read out of the medium and stored in the image editing apparatus. It is preferred that the image data stored on the portable storage medium be thumbnail image data representing images of reduced size. This will make it possible to perform image editing using the edited image data as is (i.e., without sub-sampling the data). Since the quantity of data will be small, a great deal of data can be stored on the portable storage medium.

It may be so arranged that data other than image data requiring billing is stored on the portable storage medium. Since image data other than image data requiring billing is the object of the retrieval operation described above, it is unnecessary to judge whether billing is required or not.

The image server and printer server may be made the same apparatus in the description given below.

It can also be so arranged that when image data for generating the edited image is generated by the user of the image editing apparatus, the image data for generating the edited image is stored in the image server and the user of the generated image data for generating the edited image is requested to pay a fee for use.

In this case, the image data for generating the edited image data and information relating to the charge that corresponds to this image data for generating the edited image are transmitted from the image editing apparatus to the image server.

The image server stores the image data for generating the edited image and the information relating to billing that corresponds to this image data for generating the edited image, and relates the corresponding information relating to billing with the edited image data owing to the fact that the edited image data has been generated using the image data for generating the edited image.

On the basis of the information relating to billing that has been added onto the edited image data, a use fee can be collected from the user of the image data for generating the edited image.

The information relating to billing corresponding to the image data for generating the edited image may be made capable of modification. In such case the modified information relating to billing is related with the edited image data.

The fee for use of the image data for generating the edited image can be modified in dependence upon the mode of use of the image represented by the image data for generating the edited image. For example, in a case where an image represented by the image data for generating the edited image is utilized in an enlarged state, a high user's fee is set. If the image is utilized in a reduced state, a low user's fee is set.

The image data representing an image of one frame from images of at least two frames may be template image data representing the background of an image constituting the edited image. This makes it possible to edit images having various decorations. The user may be billed in regard to template image data as well.

The image server may be adapted to count the number of times the image data for generating the edited image is used. The fee for using the image data for generating the edited image, which fee is decided by the information relating to billing that corresponds to image data for generating the edited image, is set so as to decrease as the number of times the image data is used increases.

This makes it possible to provide better service for users that make frequent use of the image data.

In a case where an individual who has generated the image data for generating the edited image utilizes self-generated image data for generating the edited image, it is preferred that the image data for generating the edited image be free of charge even if it is the object of billing. In a case where an individual who is capable of using, free of charge, the image data for generating the edited image has been decided in advance and this individual has generated edited image data using the image data for generating the edited image, the operation for relating the corresponding information relating to billing with the edited image data is stopped.

In a preferred embodiment, an authentication server (authentication station) is provided, the authentication server determines whether the image editing apparatus, the image server and the printer server are legitimate and enables communication among the image editing apparatus, image server and printer server possible by determining that they are legitimate.

Thus, only a legitimate user is capable of performing image editing. An individual having no right to use the image editing apparatus, image server and printer server can be prevented for using them.

The image editing apparatus and printer server may be made the same apparatus. In such case the user can perform printing at home if the image editing apparatus is provided in the user's home.

It is preferred that limitation data that limits the number of times an edited image represented by the edited image data is printed be added onto the edited image data, and it is preferred that the printer server allow printing of the edited image up to the number of times which is the limit set by the limitation data. This makes it possible to prevent the edited image from being printed an unlimited number of times. This is especially useful when an image that is the object of billing is utilized as the edited image.

It is preferred that data relating to the status of generation of the edited image data in the image server be transmitted from the image server to the image editing apparatus.

By virtue of the fact that the image editing apparatus receives the data relating to status of generation, the user of the image editing apparatus is capable of being notified (by a display on a screen or by output of audio) of the status of generation.

The edited image data generated by the image server may be transmitted to the image editing apparatus. The image editing apparatus displays and prints the image represented by the received edited image data, as required.

The edited image data may be transmitted to the image editing apparatus which has transmitted the editing information etc. to the image server so that the image server generates the edited image, as well as to other image editing apparatuses.

Further, a format of the generated edited image data may be converted to a different format (to PostScript, HTML (Hyper Text Markup Language), PDF (Portable Document Format) and the like) in the image server. The possibility in which the user can obtain (the image editing apparatus of the user accesses the image server to obtain the edited image data and displays the edited image on the display unit or prints the edited image by the printer to enable the user to see the edited image) the edited image represented by the edited image data becomes high.

The edited image data which has been subjected to format conversion may be transmitted to the image editing apparatus. In this case, it becomes possible that an image format is designated in the image editing apparatus and that the format of the edited image data is converted to the designated format in the image server.

Further, according to the present invention, an image communication system in which an image editing apparatus and printer server are capable of communicating with each other is characterized in that image data representing images of a plurality of frames is stored in the image editing apparatus, an edited image of one frame is generated using image data representing images of at least two frames from among the stored image data, edited image data representing the generated edited image is transmitted to the printer server, and the printer server prints the edited image using the edited image data that has been transmitted.

The present invention provides also an edited image printing system suited to the edited image printing method described above.

More specifically, the present invention provides an image communication system in which an image editing apparatus, which has image data storage means in which image data representing images of a plurality of frames has been stored, and a printer server are capable of communicating with each other, wherein the image editing apparatus has image editing means for generating an edited image of one frame using image data representing images of at least two frames from among the image data that has been stored in the image data storage means, and edited image data transmitting means for transmitting the edited image data, which represents the edited image generated by the image editing means, to the printer server, and the printer server has printing means for printing the edited image using the edited image data that has been transmitted.

The image editing apparatus and printer server constructing the edited image printing system may each be arranged independently. Further, a recording medium on which a program for operating the image editing apparatus and image server in the manner set forth above has been recorded may be created.

In accordance with the present invention, the edited image data is created using the image data that has been stored in the image server. The edited image data that has been created is transmitted from the image editing apparatus to the printer server. The edited image is printed by the printer server.

Thus, in this aspect of the invention as well, the user of the image editing apparatus can obtain a high-quality, printed edited image without going to a processing laboratory.

In a case where the image data has been stored on a portable storage medium, it is possible to store the image data in the image editing apparatus by reading the image data out of the medium. In this case also the image data that has been stored on the portable storage medium preferably is reduced-image data.

Other features and advantages of the present invention will be apparent from the following description of preferred embodiments of the present invention, given by way of example only, taken in conjunction with the accompanying drawings, in which like reference characters designate the same or similar parts throughout the figures thereof, and in which:
Fig. 1 is a diagram illustrating the overall configuration of an image communication system;
Fig. 2 is a block diagram showing the electrical configuration of an image editing apparatus;
Fig. 3 is a block diagram showing the electrical configuration of an image server;
Fig. 4 is a block diagram showing the electrical configuration of a printer server;
Fig. 5 is a diagram showing folders generated by a main server;
Figs. 6 and 7 are diagrams showing an example of a free image;
Fig. 8 is a diagram showing an example of a copyright-protected image;
Fig. 9 is a diagram showing an example of a personal image;
Fig. 10 is a diagram showing an example of an edited image;
Fig. 11 is a diagram showing an example of a reduced-image (thumbnail image) file;
Figs. 12 and 13 are diagrams showing an example of an image file for printing purposes;
Fig. 14 is a diagram showing an example of an edited image file;
Figs. 15 to 19 are diagrams showing an example of utilization of an image communication system;
Figs. 20 to 25 are flowcharts illustrating image read-in processing;
Figs. 26 and 27 are diagrams illustrating an example of a display on a screen;
Figs. 28 to 36 are flowcharts illustrating image editing processing and image output processing;
Figs. 37 and 38 are diagrams illustrating an example of a display on a screen;
Fig. 39 is a diagram showing an example of editing information;
Figs. 40 and 41 are flowcharts of authentication processing;
Fig. 42 to 45 are flowcharts of processing for accepting order information and editing images;
Fig. 46 is a flowchart of server-to-server communication processing;
Figs. 47 and 48 are flowcharts of printing processing;
Fig. 49 is a flowchart of printing end processing;
Figs. 50 to 52 are diagrams showing an example of a display screen on a display unit of the image editing apparatus;
Fig. 53 is a diagram showing an overview of a billing processing procedure;
Figs. 54a - 54c are diagrams illustrating billing management files;
Fig. 55 is a diagram showing a billing management file;
Figs. 56a and 56b illustrate component images;
Fig. 57 is a diagram illustrating a template image;
Fig. 58 is a diagram showing an example of an image that has been stored in an image editing apparatus;
Fig. 59 is a diagram showing an example of an edited image;
Fig. 60 is a flowchart of processing for billing for registration of component images;
Fig. 61 is a diagram showing a component image registration file;
Figs. 62a, 62b and 62c are diagrams showing component image files;
Fig. 63 is a flowchart illustrating template image generation processing;
Figs. 64and 65 are flowcharts of processing for billing for registration of a template image;
Fig. 66 is a diagram showing a template image registration file;
Figs. 67a - 67c are diagrams illustrating template files;
Fig. 68 is a flowchart illustrating image editing processing;
Figs. 69 to 72 are flowcharts illustrating processing for billing for printing of an edited image;
Fig. 73 illustrates a printing fee discount table;
Fig. 74 illustrates an editing fee discount table;
Fig. 75 illustrates a paper cost discount table;
Fig. 76 illustrates a service category table;
Fig. 77 is a diagram showing the content of a database;
Fig. 78 is a diagram illustrating processing for accepting payment;
Fig. 79 is a diagram illustrating processing executed at occurrence of cancellation;
Fig. 80 is a diagram illustrating an authentication procedure;
Fig. 81 is a diagram showing an example of a case where the image editing apparatus and printer server are installed at the same location;
Fig. 82 is a diagram showing a file of copyright-protected images used;
Fig. 83 is a diagram showing a copyright-protected image use list file;
Fig. 84 is a diagram showing an example of a case where the image editing apparatus and printer server are installed at the same location; and
Fig. 85 is a diagram showing an edited image file for printing.
Fig. 86 is a flowchart illustrating printing an edited image in the image editing apparatus.
Figs. 87 and 88 are diagrams showing an example of a screen displayed on a display unit of the image editing apparatus.

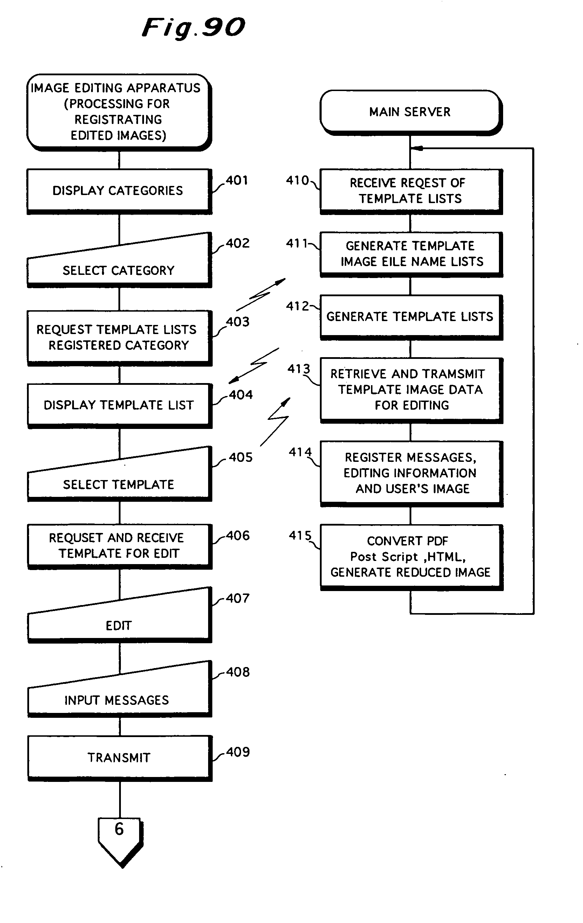

Figs. 89 to 93 are flowcharts illustrating printing an edited image in the image editing apparatus.

### DESCRIPTION OF THE PREFERRED EMBODIMENT

### (1) Configuration of image communication system

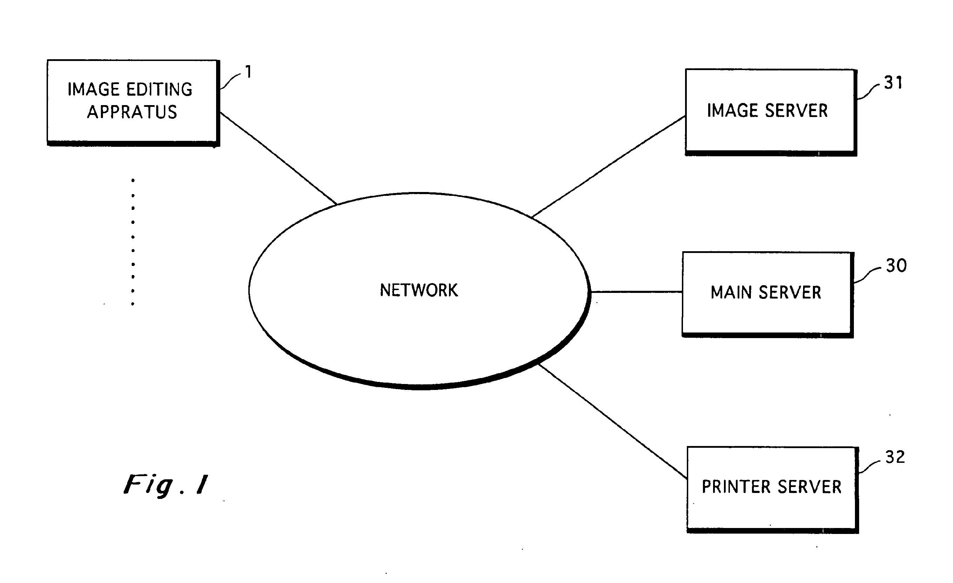

Fig. 1 illustrates the overall configuration of an image communication system embodying the present invention.

The image communication system comprises a plurality of image editing apparatus 1 (only one of which is illustrated in Fig. 1), a main server 30, an image server 31 and a printer server 32 interconnected via a network so as to be capable of communicating with one another. (Though the main server 30 and image server 31 are the same, here they have different names and reference characters for reasons of convenience in terms of the description.)

In accordance with this image communication system, the user of the image editing apparatus 1 generates an edited image of one frame using a plurality of images and information relating to the edited image is transmitted to the main server 30, whereupon the edited image is printed by the printer server 32. The edited image that has been printed is delivered to the user of the image editing apparatus 1 by mail. The information relating to the edited image includes information relating to the positions of the images constituting the edited image, image data representing the edited image, etc. The details will become clear in the description that follows.

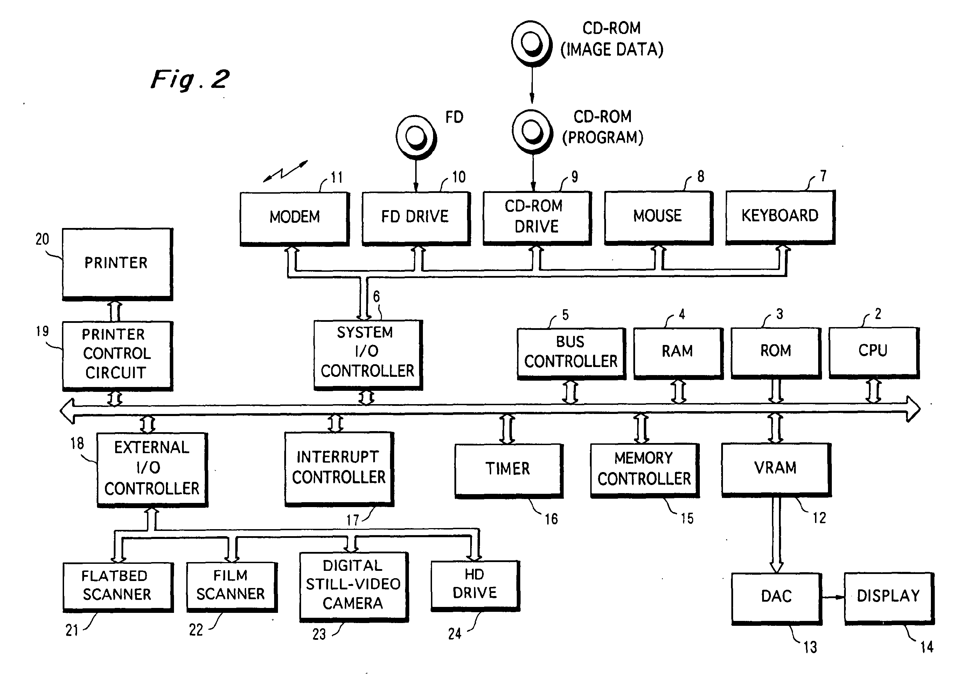

Fig. 2 is a block diagram showing the electrical configuration of the image editing apparatus 1. The image editing apparatus 1 usually is located in the user's home.

The overall operation of the image editing apparatus 1 is supervised by a CPU 2.

The image editing apparatus 1 includes a ROM 3, a RAM 4 for temporarily storing data, a VRAM 12 for temporarily storing data representing an image displayed on a display unit 14 in order that image editing may be performed, and a memory controller 15 for controlling readout of data from the ROM 3 as well as writing and reading of data to and from the RAM 4 and VRAM 12. Image data read out of the VRAM 12 is applied to a DA converter 13, whereby the image data is converted to an analog image signal so that an image is displayed on the display unit 14.

A bus controller 5, the memory controller 15 and a timer 16 are connected to the image editing apparatus 1.

A system I/O controller 6 is connected to the image editing apparatus 1. Connected to the system I/O controller 6 are a keyboard 7 and mouse 8 for accepting operation commands from the user of the image editing apparatus 1, a CD-ROM drive 9 for reading image data, an FD (floppy disk) drive 10 and a modem 11 for connecting to the network.

An external I/O controller 18 is connected to the image editing apparatus 1. A flatbed scanner 21, a film scanner 22, a digital still-video camera 23 and an HD (hard disk) drive 24 are connected to the external I/O controller 18. An operating program is stored on a hard disk (not shown) to and from which data can be freely written and read by the HD drive 24. (The operating program is installed in the image editing apparatus 1 and stored on the hard disk by loading a CD-ROM storing the program into the CD-ROM drive 9, described later, and reading the CD-ROM.) Prescribed processing, described later, is executed by the image editing apparatus 1 by reading the operating program stored on the hard disk.

A printer 20 for printing images and a printer control circuit 19 for controlling the printer 20 are connected to the image editing apparatus 1.

The user uses the image editing apparatus 1 to edit a desired image. The image editing processing will be described later in greater detail.

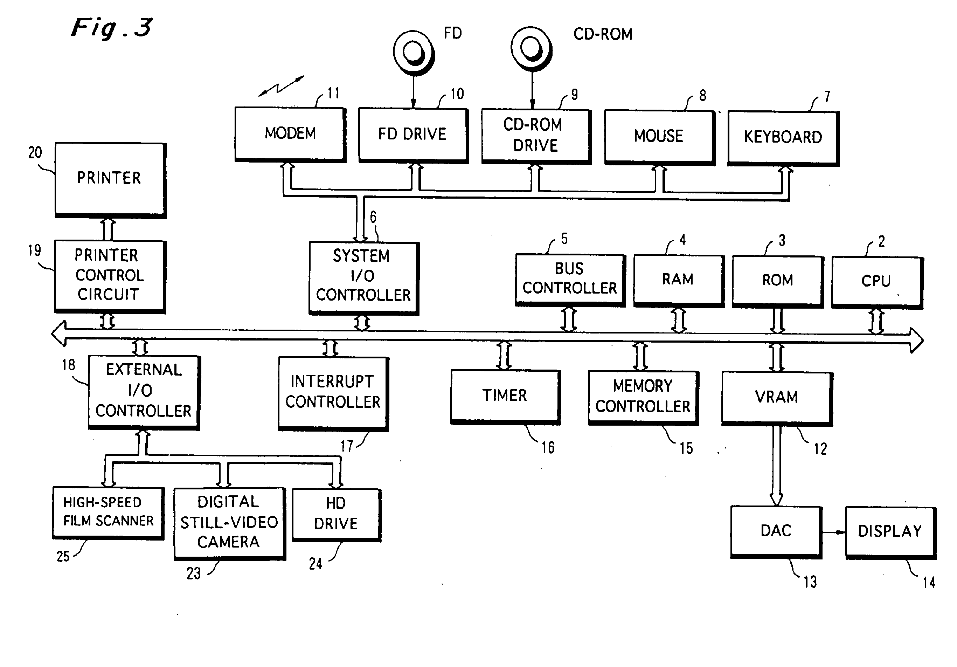

Fig. 3 is a block diagram illustrating the electrical configuration of the main server 30. Components in Fig. 3 identical with those shown in Fig.2 are designated by like reference characters and need not be described again. The image server 31 also has a construction identical with that of the main server 30. The operating program of the main server 30 (image server 31) is installed in the main server 30 (image server 31) and stored on the hard disk by loading a CD-ROM storing the program into the CD-ROM drive 9 and reading the CD-ROM.

A high-speed film scanner 25 is connected to the external I/O controller 18 included in the main server 30. Further, various files and folders, etc., are stored on a hard disk subjected to data read/write by the HD drive 24 connected to the external I/O controller 18.

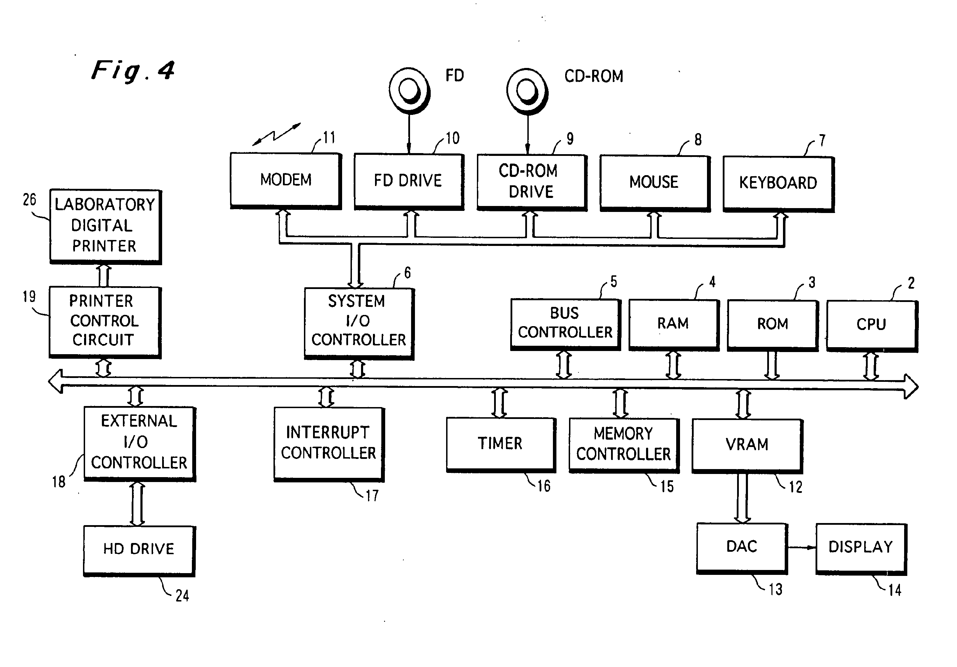

Fig. 4 is a block diagram illustrating the electrical configuration of the printer server 32. Components in Fig. 4 identical with those shown in Fig. 2 are designated by like reference characters and need not be described again. The operating program of the printer server 32 is installed in the printer server 32 and stored on the hard disk by loading a CD-ROM storing the program into the CD-ROM drive 9 and reading the CD-ROM.

The printer server 32 has a laboratory digital printer 26 that is connected to the printer control circuit 19. The laboratory digital printer 26 is a printer capable of high-quality printing and prints an image that has been edited by the user.

### (2) Arrangement of various files

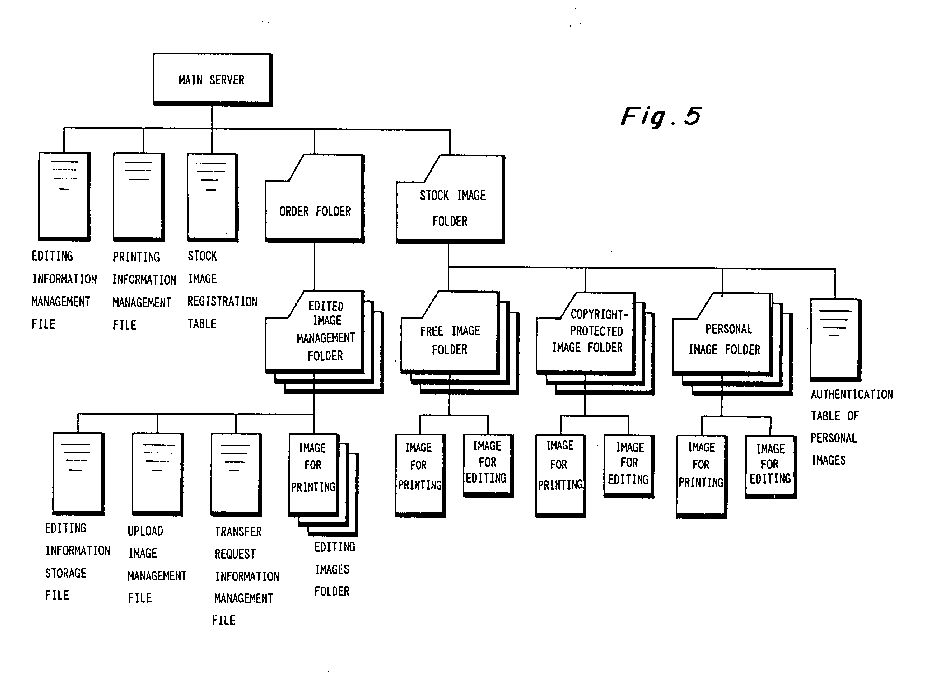

Fig. 5 illustrates the arrangement of various files and folders that have been stored on the hard disk connected to the main server 30. It goes without saying that the hard disk connected to the image server 31 also has a similar arrangement of files and folders.

An editing information management file manages an image editing ID issued in regard to editing information transmitted from the image editing apparatus 1.

The printing information management file manages printing information relating to edited image data transmitted from the main server 30 to the printer server 32. The printing information includes an image editing ID, an image file name of edited image data that is transmitted to the printer server 32, and the name of the printer server that is the destination of the transmission. The printing information is written in when the edited image data is transmitted to the printer server 32 and is deleted based upon notification of end of printing from the printer server 32.

A stock image registration table stores the file names of image data stored in a stock image folder, described later, of the main server 30. By verifying a file name that has been stored in the stock image registration table, it is possible to ascertain whether image data having the file name is present in the main server 30. In a case where there is an image upload from the image editing apparatus 1 or another image server 31, the file name of the image data is stored in the stock image registration table.

An order folder manages an edited image management folder that is for generating an edited image.

The edited image management folder is a folder for managing the image editing operation. The edited image management folder is generated when the image editing ID has been issued. After the edited image data has been transmitted to the printer server 32, the reading of data out of the edited image management folder is inhibited in order to protect copyright-protected images and personal images. The edited image management folder also is deleted based upon notification of end of printing from the printer server 32.

The edited image management folder includes an editing information file, an upload image management file, a transfer request information management file and images for editing.

The editing information file stores editing information, which is transmitted from the image editing apparatus 1, in correspondence with an image used in generating an edited image.

The upload image management file stores the file name of image data uploaded from the image editing apparatus 1. When image data designated by the editing information transmitted from the image editing apparatus 1 has not been stored in any image server, the file name of this image data is stored in the file in order to allow the user of the image editing apparatus 1 to upload this image data.

The transfer request information management file manages information issuing an image data transfer request to the image editing apparatus 1 or another image server 31. The transfer request information management file includes a file name of image data for which a transfer request has been issued, the quantity of image data, an in-transit flag indicating whether the transfer of the image data is finished, and a timer name of a timer started at the beginning of a transfer request.

The image file for editing purposes stores a large quantity of editing image data used to print an edited image.

The stock image folder holds image data that has been stored in the image server. The stock image folder holds a free image folder, a copyright-protected image folder and a personal image folder.

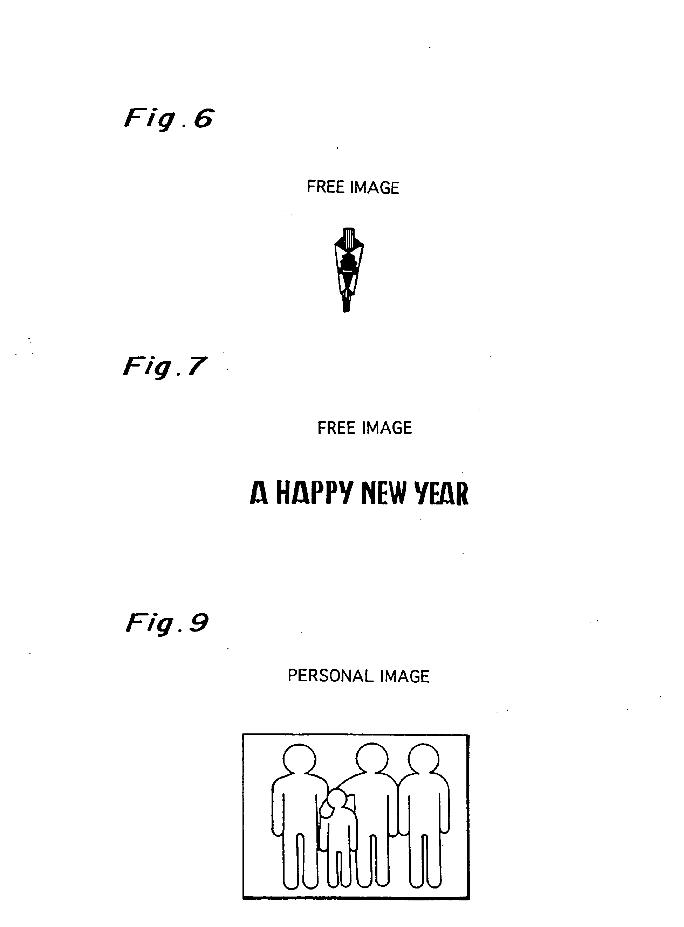

Free images, namely images that any user can use free of charge (see Figs. 6 and 7), are stored in the free image folder. Printing image data (an image file for printing purposes) used in printing of an edited image and reduced image data (a reduced image file) which the user employs to generate an edited image in the image editing apparatus 1 are stored, in corresponding form, in the free image folder.

Image data representing copyright-protected images the use whereof requires billing is stored in the copyright-protected image folder.

Data representing personal images only a specific user is allowed to use by authentication is stored in the personal image folder.

Image data for printing and reduced image data are stored in correspondence in both the copyright-protected image folder and personal image folder.

An authentication code for authorizing use of a personal image stored in the personal image folder is stored in the authentication table.

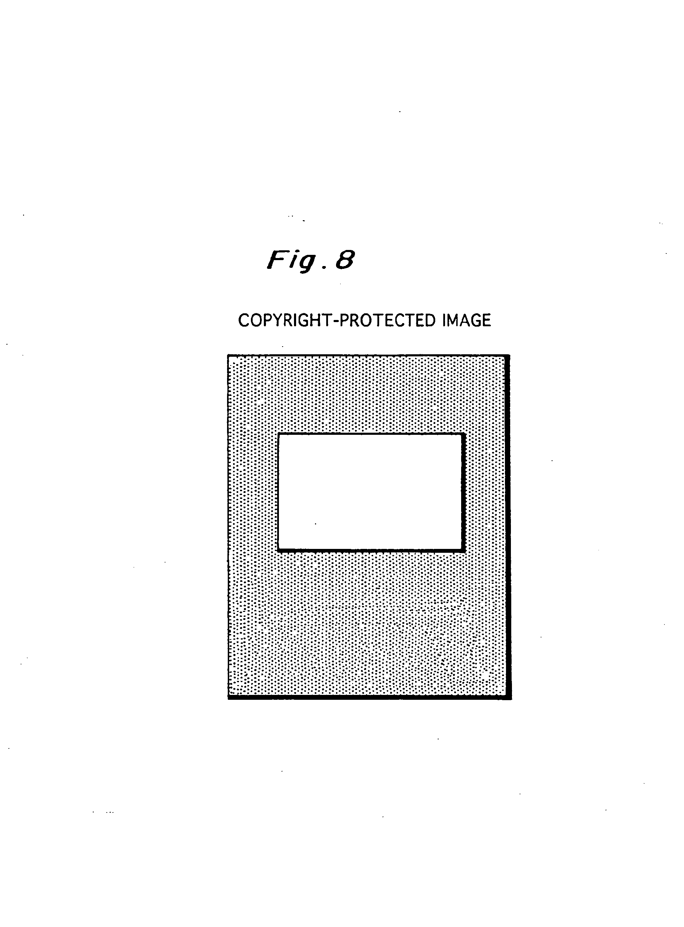

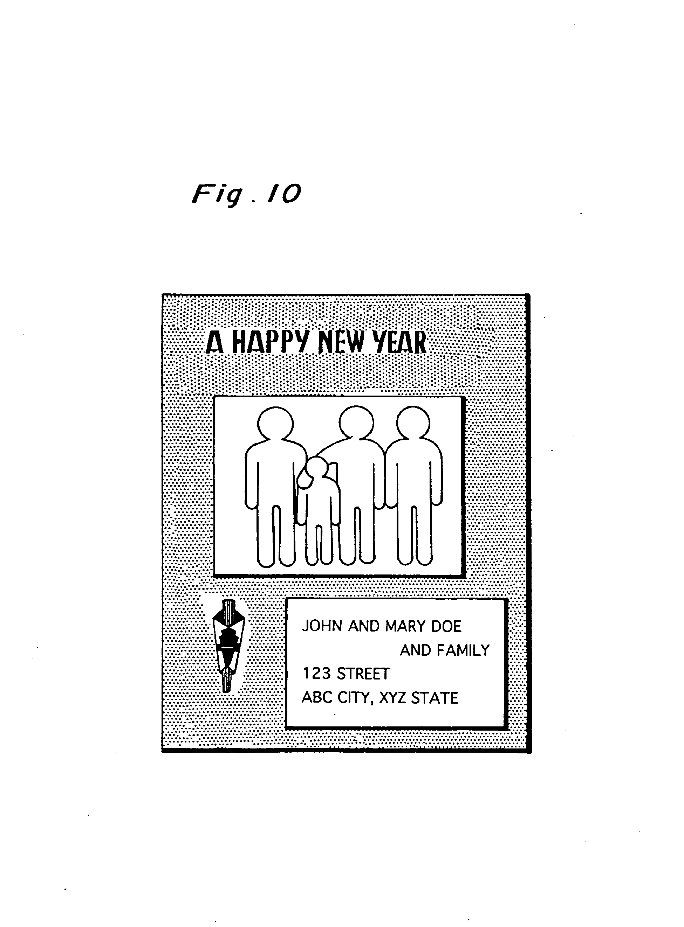

By way of example, an edited image shown in Fig. 10 is generated in the image editing apparatus 1 using images shown in Figs. 6 through 9.

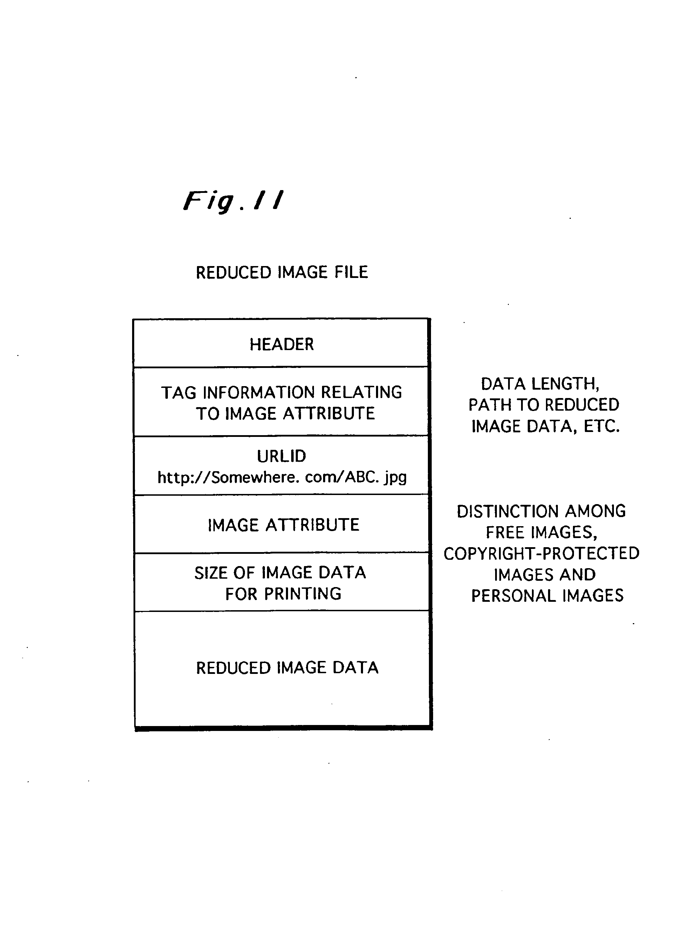

Fig. 11 illustrates the file structure of the reduced image file.

The reduced image file includes a header, information (data length, path to reduced image data, etc.) relating to image attributes, an URL ID, image attributes (distinction among free images, copyright-protected images and personal images), the size of image data for printing, and reduced image data.

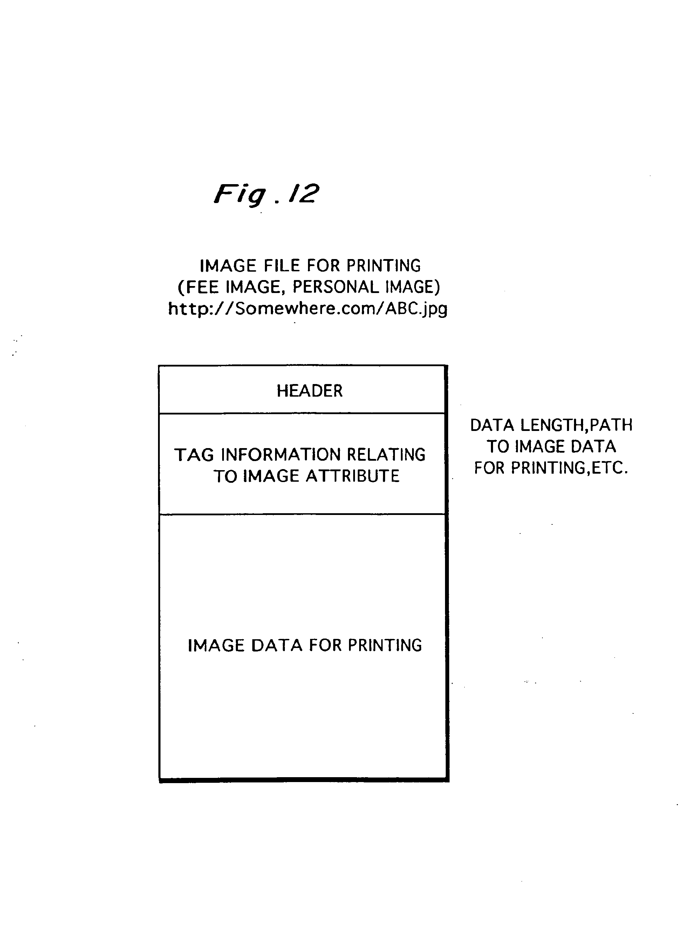

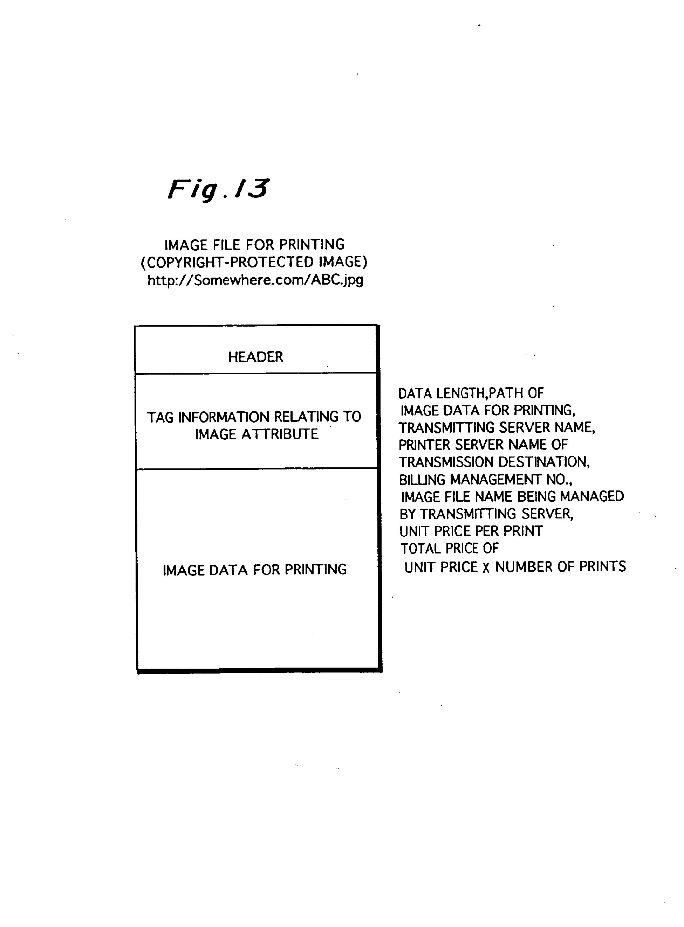

Figs. 12 and 13 illustrate the file structures of image files for printing.

Fig. 12 shows the file structure of a printing image file of free images and personal images, and Fig. 13 shows the file structure of a printing image file for copyright-protected images.

As shown in Fig. 12, the printing image file of free images and personal images includes a header, information (data length, path to reduced image data, etc.) relating to image attributes, and image data for printing.

As shown in Fig. 13, the information relating to image attributes in the case of a copyright-protected image includes, in addition to the data length and path to reduced image data, etc., the name of the transmitting server, the name of the printer server of destination of the edited image data, a billing management number, an image file name managed by the transmitting server, the number of prints ordered, the unit price per print and the total price.

A printing image file and its corresponding reduced image file are mapped by the URL ID.

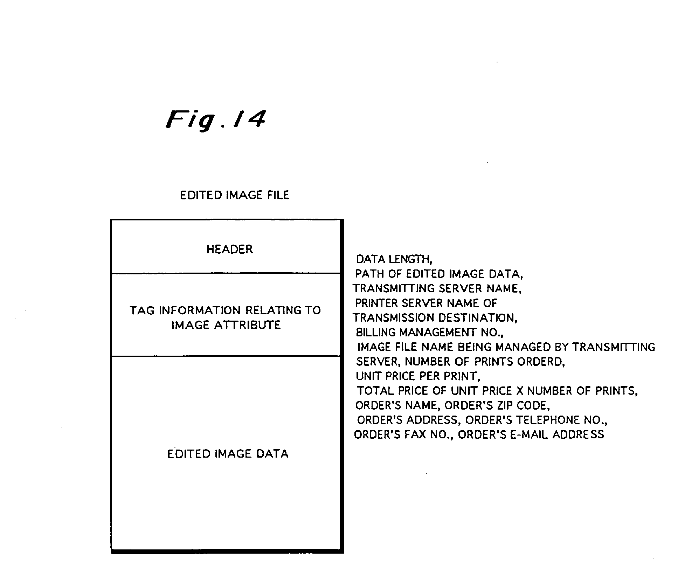

Fig. 14 illustrates the file structure of the edited image file.

The edited image file includes attribute information relating to image attributes and edited image data. The tag information relating to image attributes includes data length, path to edited image data, the name of the transmitting server, the name of the printer server of destination of the edited image data, a billing management number, an image file name managed by the transmitting server, the number of prints ordered, the unit price per print, the total price and the name, zip code, address, telephone number, FAX number and e-mail address of the ordering individual.

### (3) Examples of utilization of image communication system

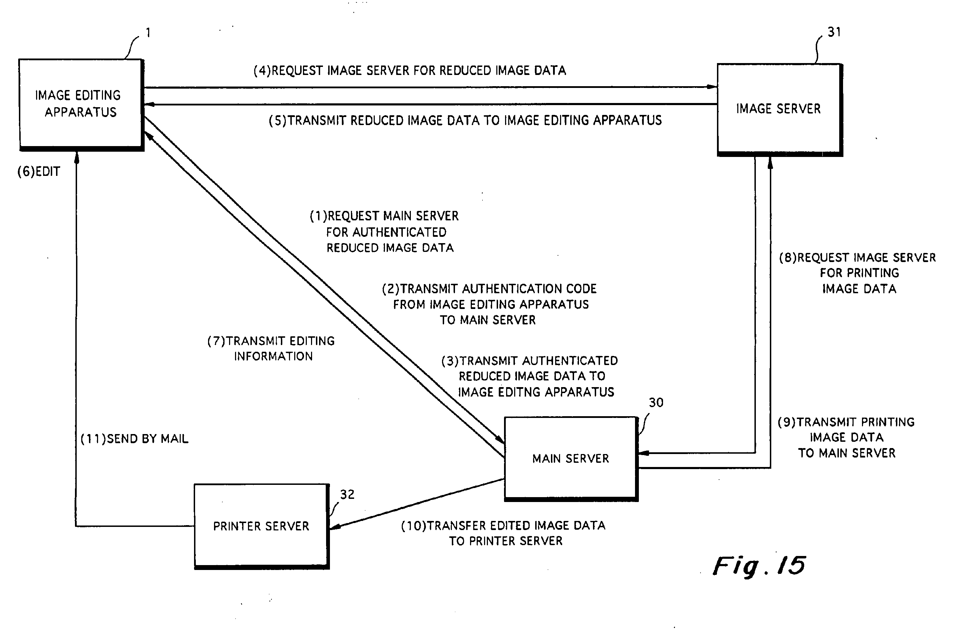

Figs. 15 through 19 illustrate examples in which the image communication system of this embodiment is utilized. Data sent and received in the image communication system is temporarily stored in the RAM 4 of each unit or server and, when necessary, is stored on a hard disk.

In Fig. 15, reduced image data representing images of reduced size stored in the main server 30 and image server 31 is downloaded to the image editing apparatus 1. The latter performs image editing using the reduced images represented by the reduced image data that has been downloaded.

In this case, in order to perform image editing, the user of the image editing apparatus 1 requests the main server 30 and image server 31 to transfer image data representing desired images. Upon receiving the transfer request from the image editing apparatus 1, the main server 30 and image server 31 send the image editing apparatus 1 the reduced image data of the image data that conforms to the transfer request.

The image editing apparatus 1 performs an image editing operation using the reduced image data transmitted from the main server 30 and image server 31. When image editing by the user ends, the editing information for generating an edited image is transmitted from the image editing apparatus 1 to the main server 30. At this time the image data is transmitted to the main server 30.

Upon receiving the editing information from the image editing apparatus 1, the main server 30, based upon the editing information received, generates edited image data representing the edited image. When image data necessary for generating the edited image data has not been stored in the main server 30, the latter communicates with another image server 31 and the image data is downloaded to the main server 30.

When the edited image data has been generated, this data is transmitted to the printer server 32 and is printed out thereby. The edited image that has been printed is mailed to the user of the image editing apparatus 1.

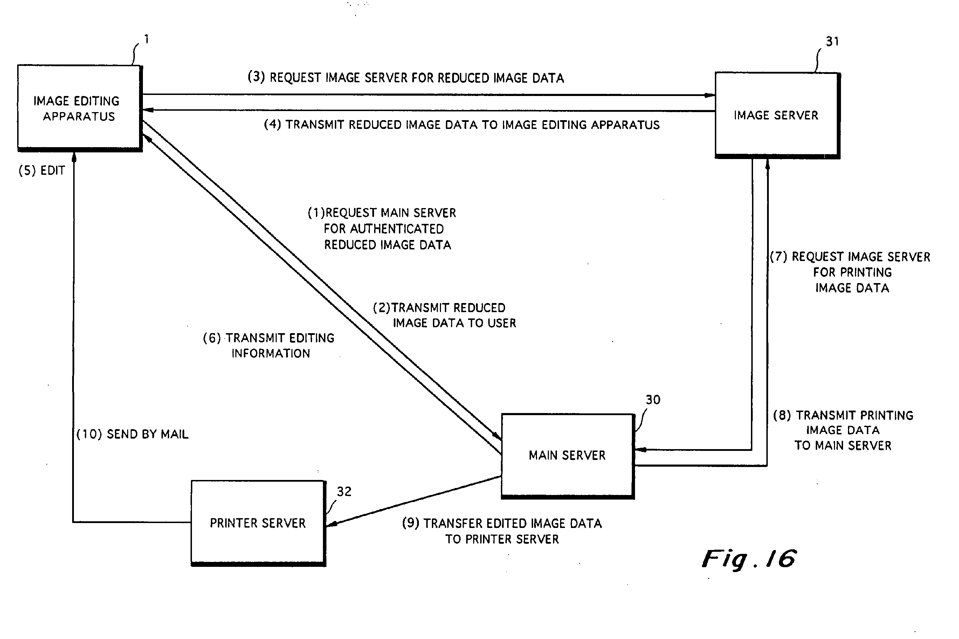

In Fig. 16, reduced image data representing images of reduced size stored in the main server 30 and image server 31 is downloaded to the image editing apparatus 1. The latter performs image editing using the reduced images represented by the reduced image data that has been downloaded as well as an image for printing represented by the printing image data that has been stored in the image editing apparatus 1.

In this case also reduced image data is downloaded from the main server 30 and image server 31 to the image editing apparatus 1. The image editing apparatus 1 performs an image editing operation using the reduced images represented by the downloaded reduced image data and the stored image for printing. If necessary, the CPU 2 executes processing for reducing the quantity of printing image data to that of the reduced image data. When image editing by the user ends, the editing information and the printing image data stored in the image editing apparatus 1 used in image editing are transmitted from the image editing apparatus 1 to the main server 30.

The main server 30 generates edited image data from the transmitted editing information and printing image data. The edited image data that has been generated is transmitted to the printer server 32, which proceeds to print the edited image.

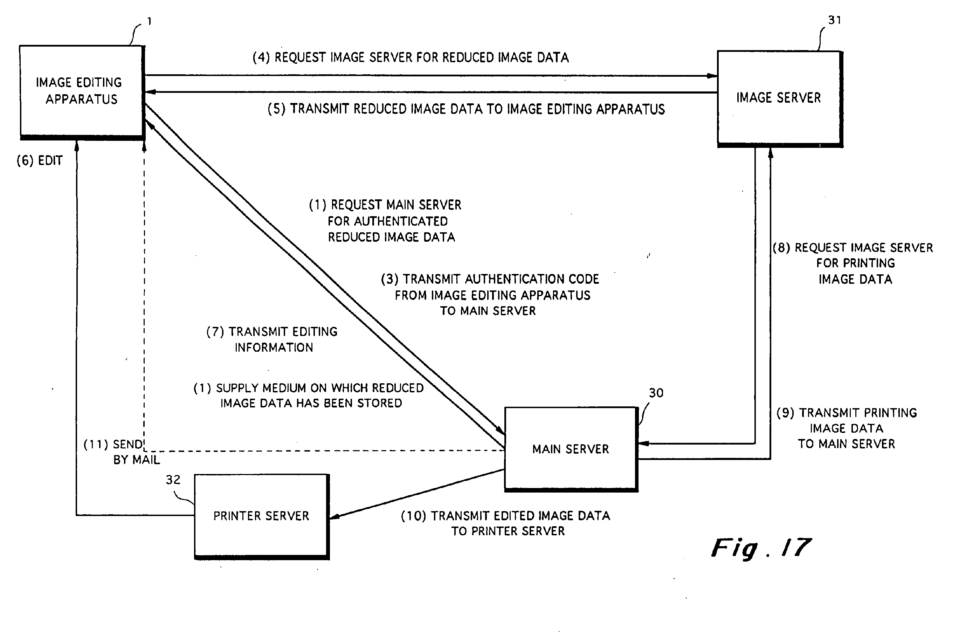

In Fig. 17, reduced image data that has been stored in the main server 30 and image server 31 is downloaded to the image editing apparatus 1. The latter performs image editing using the reduced images represented by the reduced image data that has been downloaded as well as reduced images that have been stored in the image editing apparatus 1.

Reduced image data read from a floppy disk is stored in the image editing apparatus 1.

When the user of the image editing apparatus 1 performs image editing using the downloaded reduced images and the stored reduced images, the editing information is transmitted from the image editing apparatus 1 to the main server 30. Image data is not transmitted from the image editing apparatus 1 to the main server 30.

On the basis of the editing information, the main server 30 retrieves printing image data used in generating an edited image. Edited image data is generated from the retrieved printing image data and editing information. The edited image data that has been generated is transmitted to the printer server 32. The latter prints the edited image.

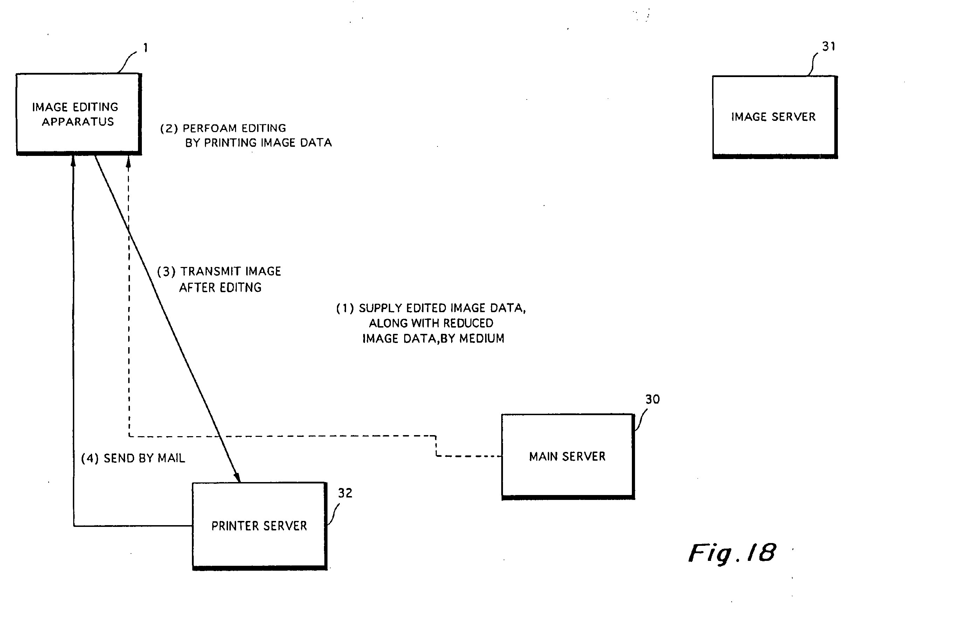

Fig. 18 shows an example in which edited image data is generated in the image editing apparatus 1.

In this example, printing image data and reduced image data read from a floppy disk have been stored in the image editing apparatus 1.

An edited image is generated using printing images represented by printing image data of a plurality of frames stored in the image editing apparatus 1. The edited image data representing the edited image that has been generated is transmitted from the image editing apparatus 1 to the printer server 32.

The printer server 32 prints the edited image using the edited image data that has been received.

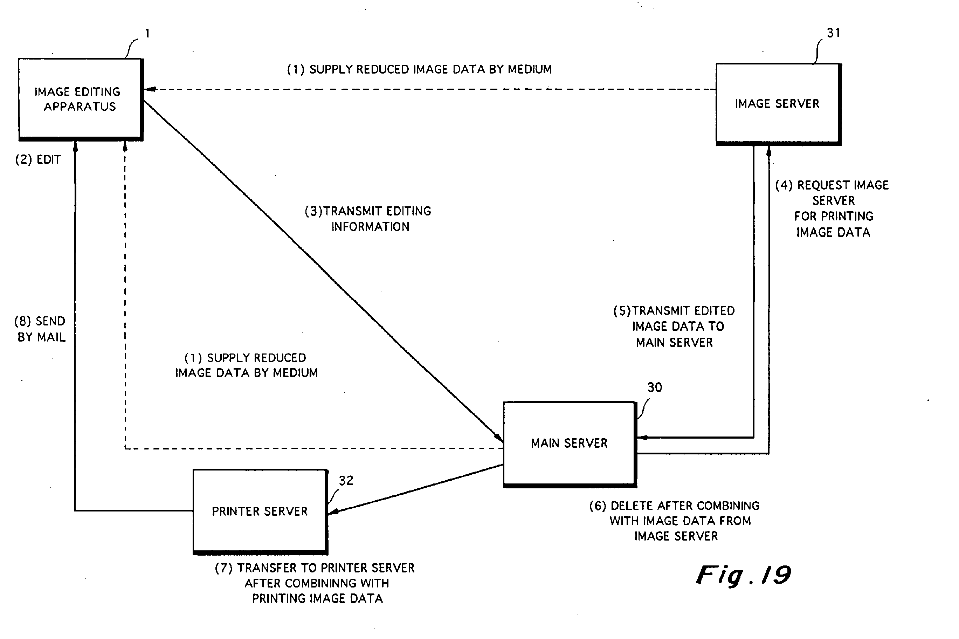

Fig. 19 shows an example in which an edited image is generated using thumbnail images represented by thumbnail image data that has been stored in the image editing apparatus 1.

Here the user performs image editing using reduced images represented by reduced image data (read from a floppy disk or the like) that has been stored in the image editing apparatus 1. Editing information is transmitted from the image editing apparatus 1 to the main server 30. On the basis of the editing information, the main server 30 retrieves printing image data that is for use in generating the edited image. Edited image data is generated from the printing image data that has been retrieved and it transmitted to the printer server 32. The latter prints the edited image.

### (4) Processing for reading in image in image editing apparatus

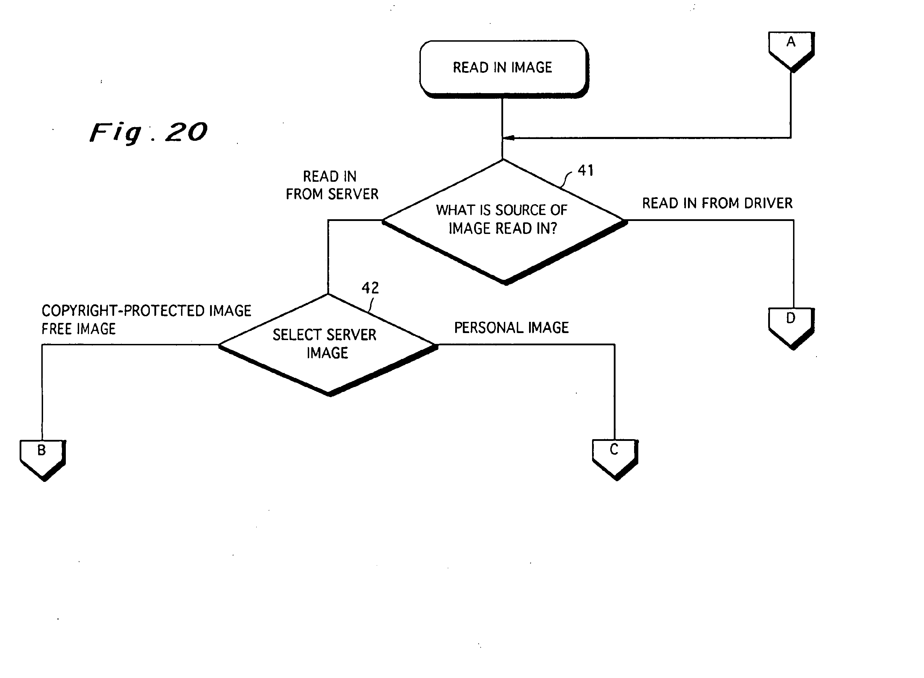

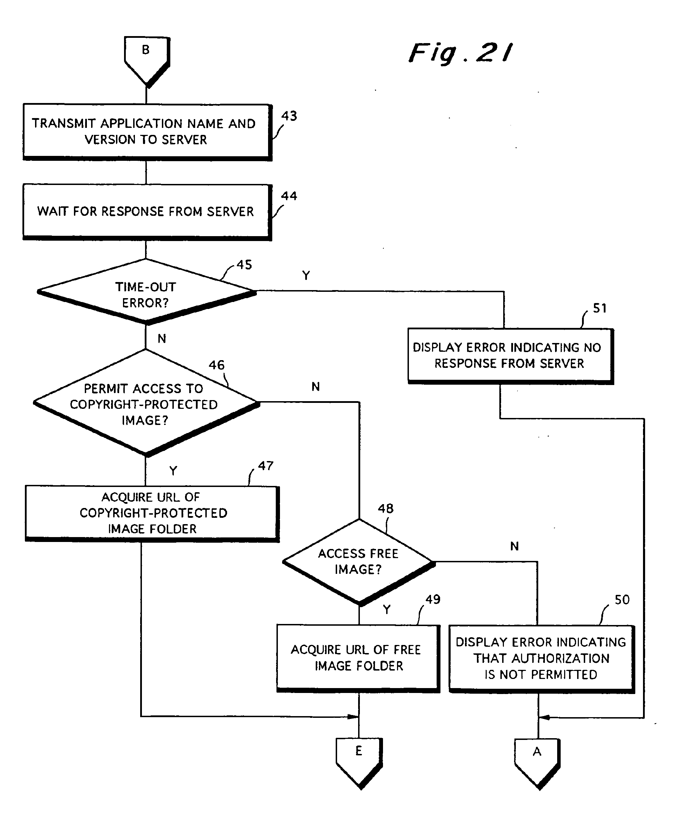

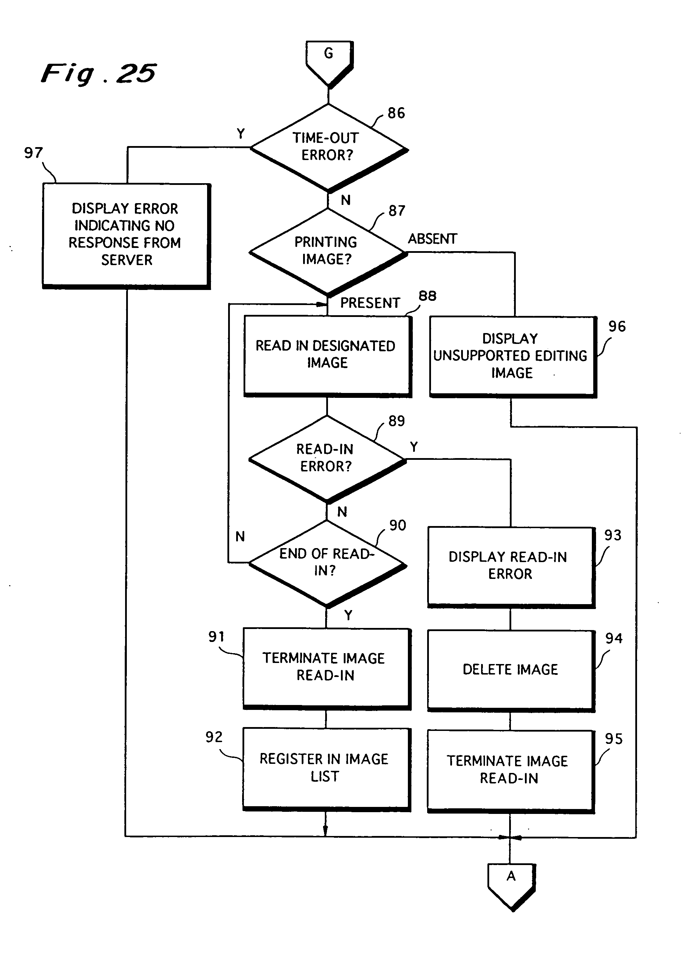

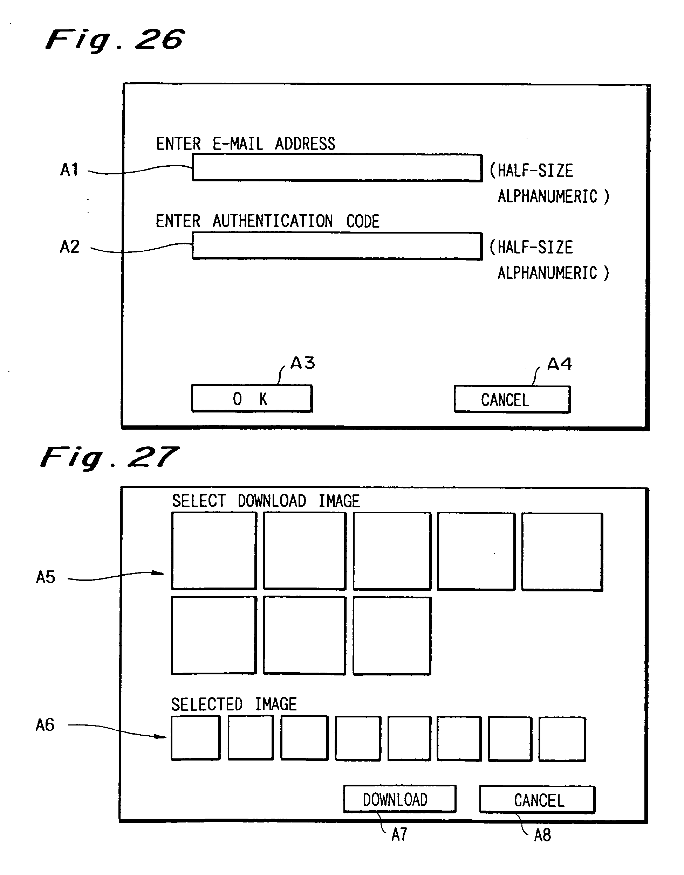

Figs. 20 through 25 are flowcharts illustrating the procedure of processing for reading in an image. This processing is executed in accordance with the operating program installed in the image editing apparatus 1. Figs. 26 and 27 are diagrams illustrating examples of screens displayed on the display unit 14 of the image editing apparatus 1 in image read-in processing.

First, it is determined whether an image is to be read in from a server (the main server 30 or image server 31) or from a driver (the CD-ROM drive 9 or FD drive 10) (step 41). The user already knows whether the image to be read in from the server is a copyright-protected image, free image or personal image and decides the type of image to be read from the server (step 42). In a case where the image to be read in is a copyright-protected image or free image, the application name of the software that controls the operation of the image editing apparatus 1 and the version name of this application are transmitted to the main server 30 (step 43).

A response from the main server 30 is awaited. If there is no response within a fixed period of time, it is judged that there is no response and an error is displayed on the display unit 14 (step 44; "YES" at step 45; step 51).

If a response is received from the main server 30 within the fixed period of time ("NO" at step 45), then the main server 30 determines whether access to a copyright-protected image is permitted (step 46). More specifically, on the basis of the application name that has been transmitted to the main server 30, it is determined whether the operating software of the image editing apparatus 1 is capable of freely storing, in readable fashion, the image data of a copyright-protected image downloaded from the main server 30. If the image data of the copyright-protected image cannot be freely stored in readable fashion, use of the copyright-protected image without permission can be prevented. Accordingly, access to the copyright-protected image is permitted ("YES" at step 46). If access is permitted, the URL of the copyright-protected image folder is acquired (step 47). As a result, an image selection screen, on which images represented by the reduced image data that has been stored in the copyright-protected image folder having the URL are displayed, is displayed on the display unit 14 of the image editing apparatus 1 (step 60), as shown in Fig. 27.

If access to a copyright-protected image is refused by the main server 30 ("NO" at step 46), then it is determined whether an image attempting to be accessed by the user is a free image (step 48). If the image is a free image, the URL of the free image folder is acquired (step 49). As a result, the image selection screen is displayed on the display unit 14 (step 60). If the image which the user is attempting to access is not a free image, it is judged that authorization is not allowed and an error is displayed (step 50).

If an image about to be downloaded from the main server 30 is a personal image (step 42), an authentication code input screen shown in Fig. 26 is displayed on the display unit 14 (step 52).

As shown in Fig. 26, the authentication code input screen has areas A1, A2, A3 and A4.

The area A1 displays an e-mail address entered by the user, and the area A2 displays an authentication code entered by the user. The area A3 is clicked by the user when the entered e-mail address or authentication code is correct. The area A4 is clicked by the user in order to cancel the entered e-mail address or authentication code when the address or code is incorrect.

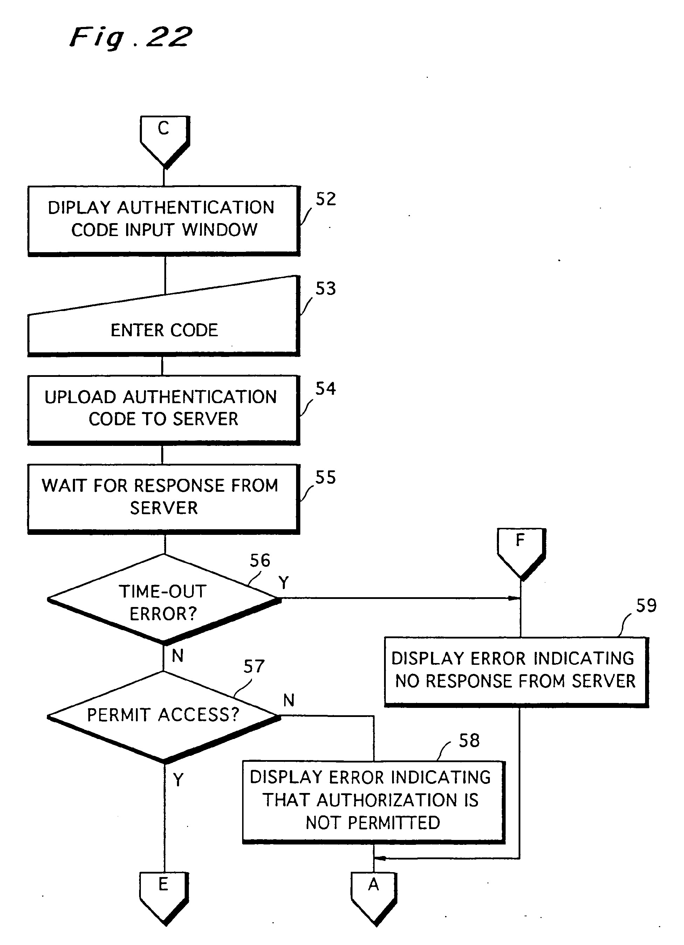

With reference again to Fig. 22, the authentication code is entered by the user (step 53) and the entered authentication code is uploaded to the main server 30 (step 54).

A response from the main server 30 is awaited. If there is no response within a fixed period of time, it is judged that there is no response and an error is displayed on the display unit 14 (step 55; "YES" at step 56; step 59). If a response is received from the main server 30, then it is determined whether access to a personal image is allowed.

If the authentication code entered by the user is not listed in the authentication table of the main server 30, then authorization is denied and this is displayed on the display unit 14 ("NO" at step 57; step 58).

When the selection screen shown in Fig. 27 is displayed, an image to be downloaded to the image editing apparatus 1 is selected by the user (steps 60, 61). The image selection screen includes areas A5, A6, A7 and A8, as shown in Fig. 27.

The area A5 displays images represented by the image data that has been recorded in the free image folder, copyright-protected image folder or personal image folder. If the user clicks an image displayed in area A5, this image is selected and the selected image is displayed in area A6. The area A7 is clicked when data representing a selected image is to be downloaded. The area A8 is clicked to cancel the data.

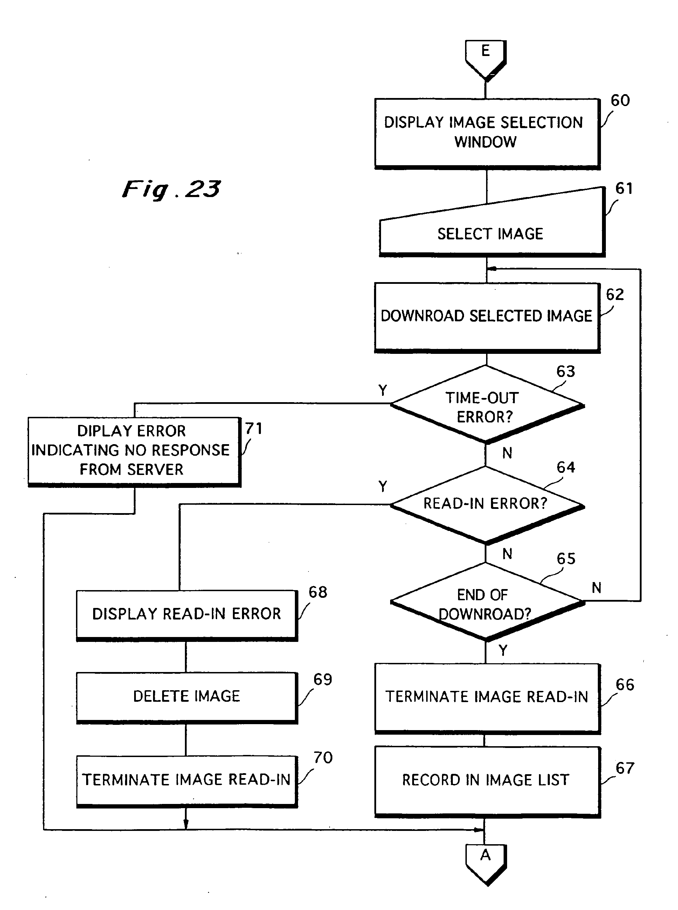

When an image is selected, data representing the file name of the image data representing this image is transmitted to the main server 30 and the image data that has been stored in the main server 30 is downloaded to the image editing apparatus 1 at step 62 in Fig. 23. Processing for retrieving the image data in the main server 30 will be described in detail later.

If there is no response from the main server 30 within a fixed period of time, it is judged that there is no response and an error is displayed on the display unit 14 ("YES" at step 63; step 71). If a read-in error occurs, a display to this effect is presented on the display unit 14 and the image data undergoing downloading is deleted. As a result, processing for reading in the image data ends temporarily ("YES" at step 64; steps 68, 69, 70). If necessary, the main server 30 would be accessed again.

If downloading of image data ends without a read-in error, then the image data is registered in the image list ("YES" at step 65; steps 66, 67). This image list is used in image editing in the image editing apparatus in a manner described later.

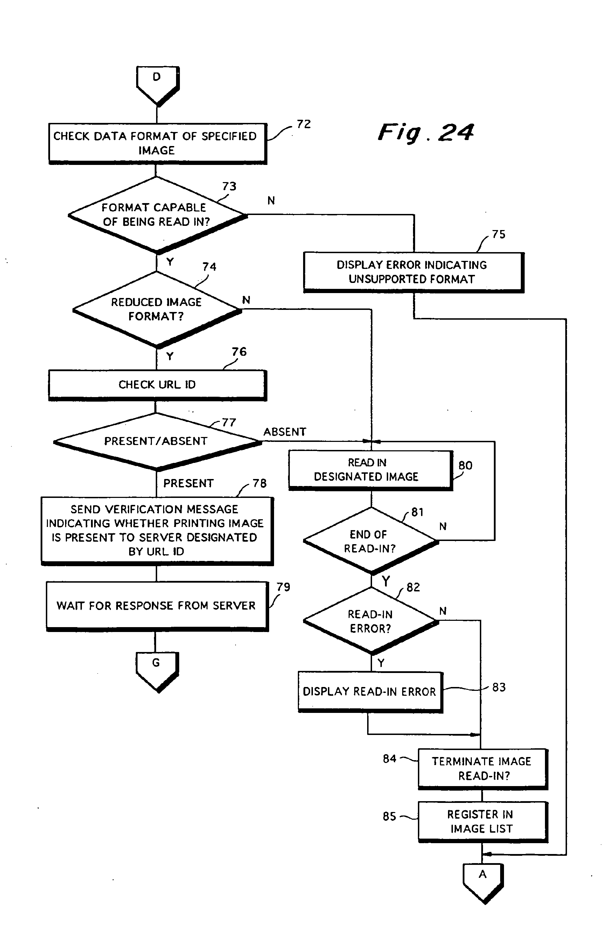

In a case where image data is to be read in from a driver, the format of image data representing the image to be read in is checked at step 72 in Fig. 24, this image data being among the image data recorded on the medium loaded in the driver. If the format is not one that makes it possible to read in this image data ("NO" at step 73), a display to this effect is presented on the display unit 14 (step 75). If the format is one that makes it possible to read in this image data ("YES" at step 73), then it is determined whether this image data is reduced image data (step 74).

If the data is not reduced image data ("NO" at step 74), this image data is judged to be high-quality image data for printing purposes, which data is of large quantity. This data is read (step 80). If a read-in error occurs while reading in of the image data is in progress, a display to this effect is presented ("YES" at steps 81, 82; step 83).

The image data that has been read in is registered in the image list in order to generate an edited image (steps 84, 85).

If the image data that has been stored on the medium is reduced image data ("YES" at step 74), it is determined whether this reduced image data has an assigned URL ID (step 77). If there is no URL ID, then the reduced image data is read in as is (step 80). If an URL ID has been assigned (step 77), a verification message indicating whether or not printing image data corresponding to the reduced image data read from the medium has been stored is transmitted to the server designated by this URL ID (step 78). If a response is not received from the server in a fixed period of time, an error display is presented (step 97).

If there is no printing image data that corresponds to the reduced image data ("NO" at step 87), it is judged that the reduced image data is not supported and the reduced image is displayed (step 96). If image data for printing is present, then this printing image data is transmitted from the server and is registered in the image list of the image editing apparatus 1 (steps 88 - 92). If a read-in error occurs when printing image data is being downloaded from the server, an error display is presented and printing image data that was in the process of being downloaded is deleted (steps 93 - 95).

An image list for generating an edited image is generated in the RAM 4 of the image editing apparatus 1 based upon the image read-in processing described above.

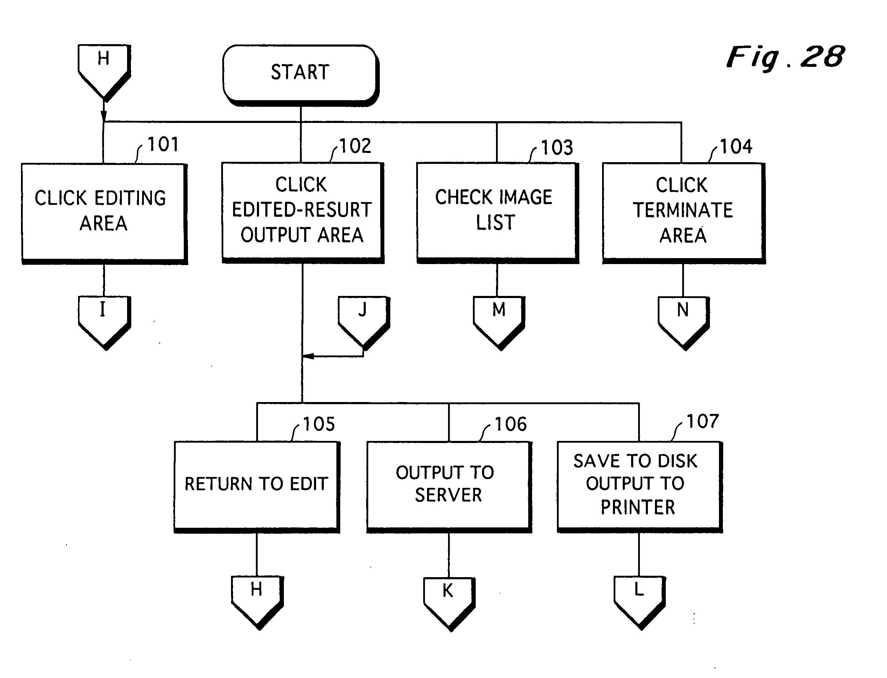

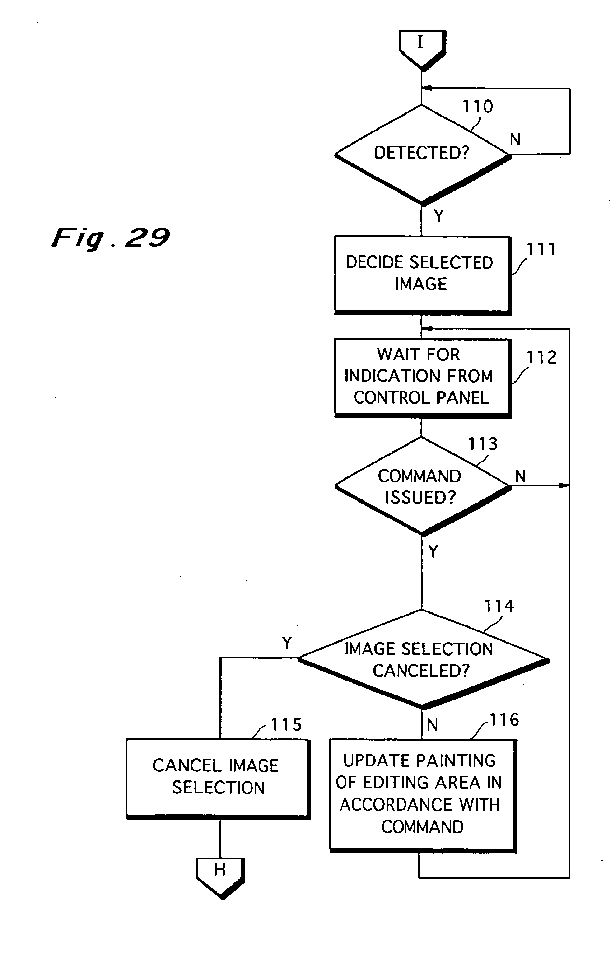

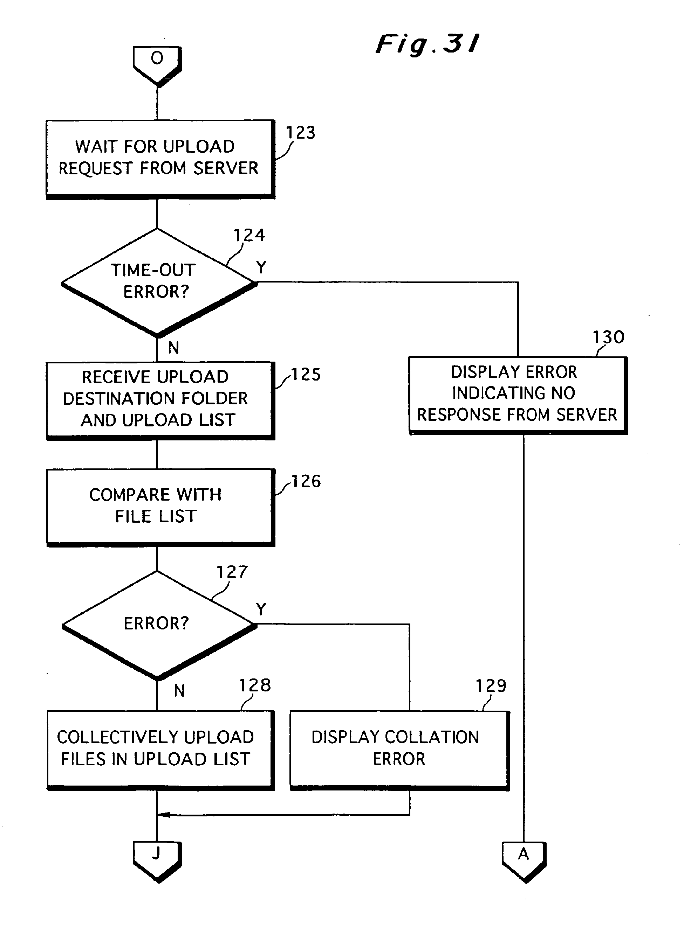

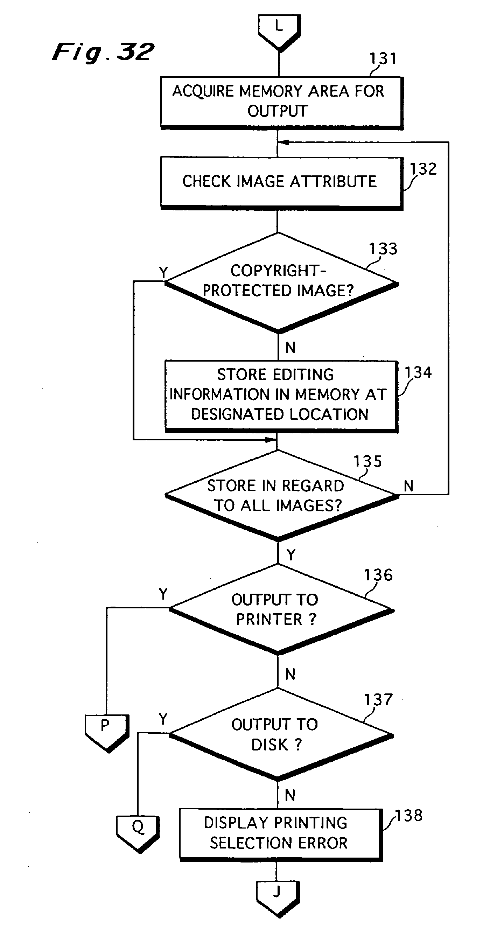

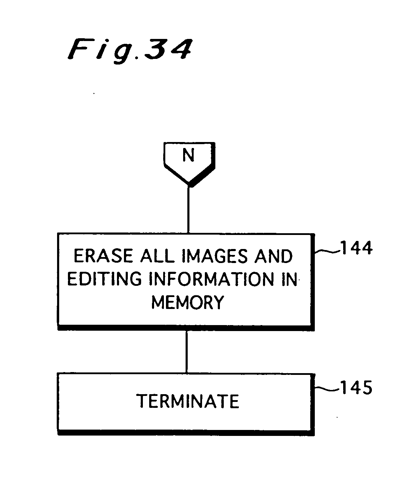

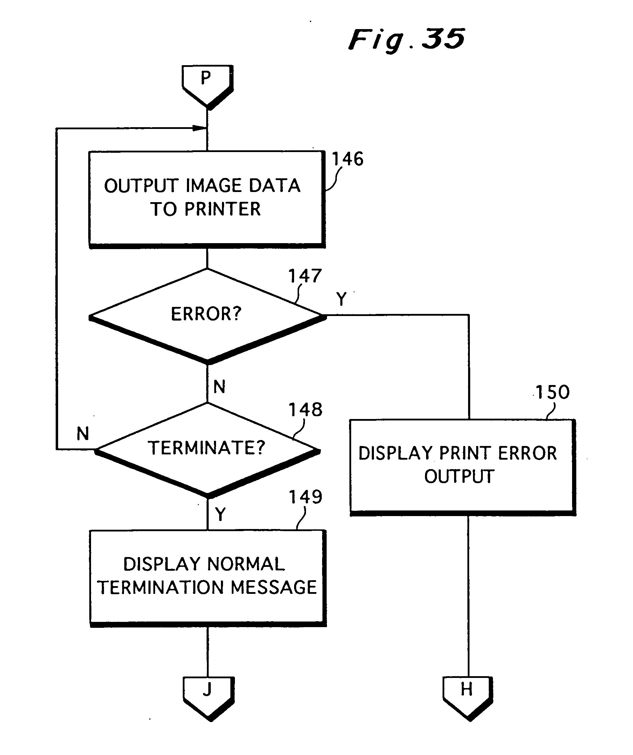

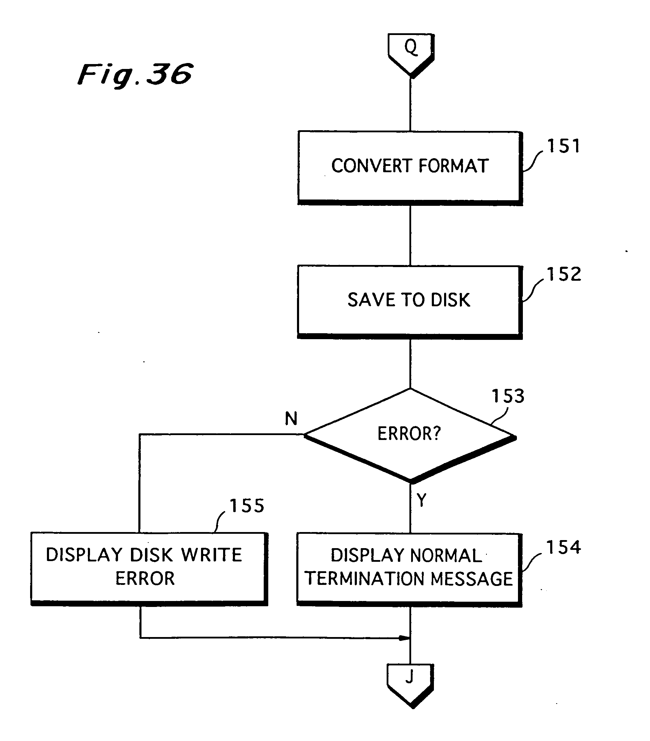

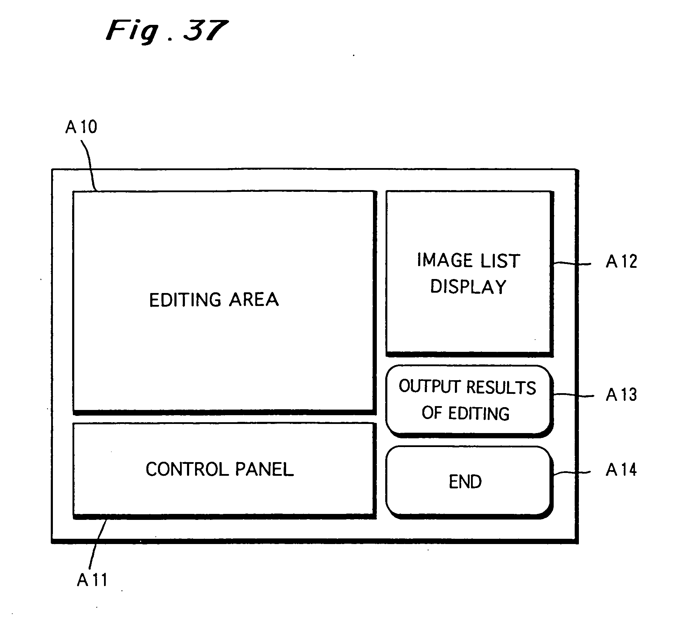

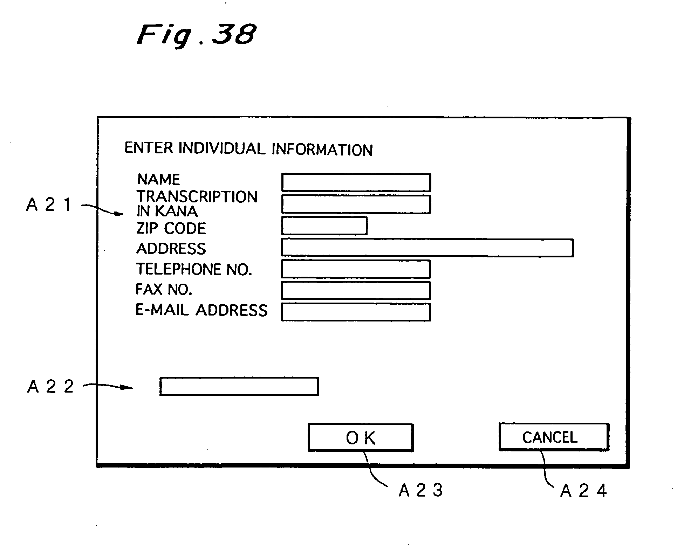

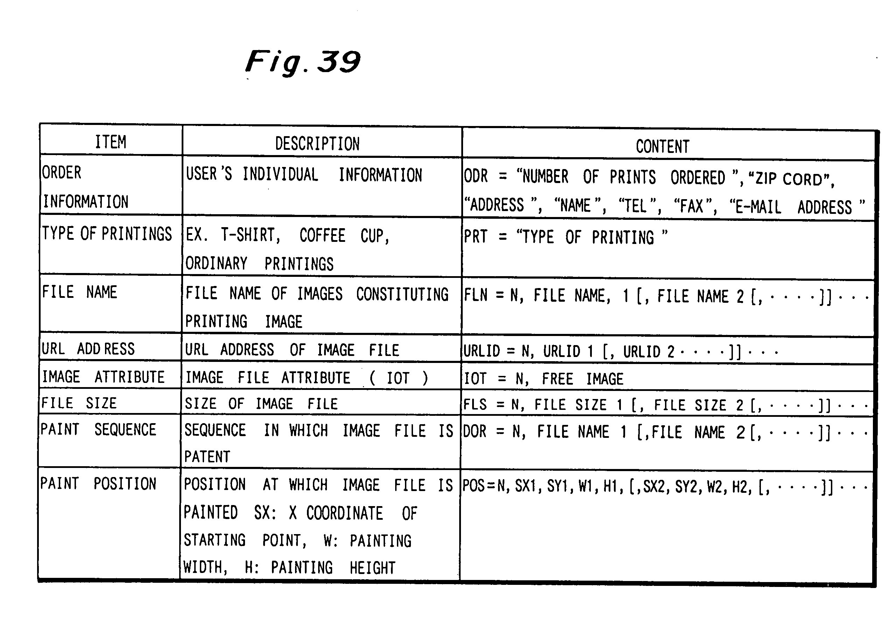

Fig. 28 through 36 are flowcharts illustrating the procedure of image editing processing and image output processing executed by the image editing apparatus 1. This processing also is executed in accordance with the operating program installed in the image editing apparatus 1. Figs. 37 and 38 are diagrams illustrating examples of screens displayed on the display unit 14. Fig.39 is diagram illustrating examples of editing information transmitted from the image editing apparatus 1 to the main server 30.

A screen illustrated in Fig. 37 is displayed on the display unit 14 of the image editing apparatus 1 in image editing and output processing. This screen includes areas A10, A11, A12, A13 and A14.

The area A10 is an editing area in which an edited image (see Fig. 10) is displayed. The area All is a control panel in which partitions for applying instructions for generating an edited image appear. The area A12 is an image list display area in which images (e.g. images shown in Fig. 6 through 9) that have been registered in the image list are displayed. The area A13 is an area for outputting results of editing. Editing information for generating an edited image is output by clicking on this area. Clicking the area A14 ends the image editing and output processing.

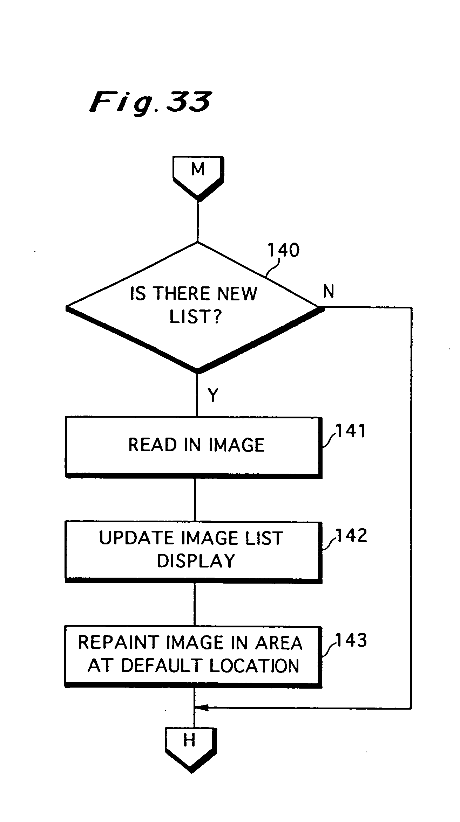

In image editing and output processing, checking of the image list is carried out first (step 103). If the image list is checked and is found to exist, the image data that has been registered in the image list is read in and the images are displayed in the image list display area at steps 140 - 143 in Fig. 33.

Next, when an image is to be edited, the editing area is clicked by the user (steps 101, 110). This establishes an image editing mode.

When image editing is performed, an image being displayed in the image list display area A12 is dragged to a desired position in the editing area by the user (step 111). If necessary, the user employs the control panel area All to command, say, adjustment of the sizes of the images constituting the edited image. If adjusting of the position, size, etc., of the edited image is finished, the image selection operation is canceled ("YES" at steps 112, 113, 114). If adjustment has not ended, then the painting of the editing area is updated in accordance with a command from the control panel (step 116).

When image editing ends, clicking the area for outputting the results of editing causes a transition to processing for outputting these results (step 102).

Processing for outputting results of editing includes a case in which output is delivered to a server and a case in which output is delivered to a medium, such as a disk, or to a printer.

In case of output to a server (step 106), editing information is subjected to a format conversion in such a manner that the information can be transmitted from the image editing apparatus 1 to the main server 30 (step 117). As shown in Fig. 39, the editing information includes order information, type of printing, file name, URL ID, image attribute, file size, plotting order and plotting signal. The editing information is generated by reading information (see Fig. 11) accompanying data representing an image selected in the image editing mode. When the format conversion ends, an order input screen of the kind shown in Fig. 38 is displayed on the display unit 14.

As shown in Fig. 38, the order input screen includes areas A21, A22, A23 and A24. The user enters order information while observing the data input screen. The order information includes personal information and number of prints ordered. The personal information consists of the name (and the transcription thereof in *kana*), zip code, address, telephone number, FAX number and e-mail address of the orderer (user), namely the individual ordering printing of the edited image. When this personal information is entered, it is displayed in area A21. When the number of ordered prints is entered, the number is displayed in area A22. If the entered personal information and number of ordered prints are correct, area A23 is clicked. If the entered personal information or number of ordered prints is incorrect, the area A24 is clicked.

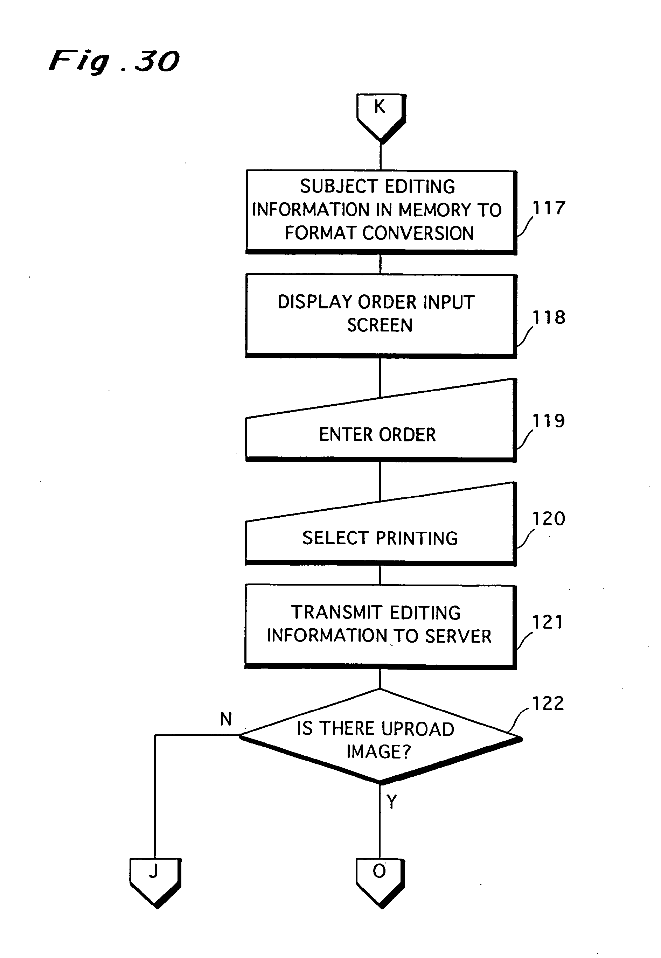

When order information is thus entered by the user at step 119 in Fig. 30, the user applies a print command to the image editing apparatus 1 (step 120). The print information that has undergone the format conversion is transmitted from the image editing apparatus 1 to the main server 30 in response to the print command. It goes without saying that the order information entered by the user also undergoes a format conversion.

If there is no upload image data from the user, then the program returns to the processing of step 105, 106 or 107.

If there is upload image data from the user ("YES" at step 122), an upload request from the main server 30 is awaited for a fixed period of time (step 123). If there is no upload request from the main server 30 within the fixed period of time, then it is construed that there is no answer from the server and an error display is presented ("YES" at step 124; step 130).

If image data having the file name of an image included in the editing information transmitted from the image editing apparatus 1 has not been stored in the main server 30 or in another image server 31, then it is judged that the user will upload image data that has been stored in his or her own image editing apparatus 1, cause the main server 30 to generate an edited image using this image data and cause the printer server 32 to print the edited image. Accordingly, an upload request is output from the main server 30 to the image editing apparatus 1. If the upload request is received from the main server 30 within the fixed period of time ("NO" at step 124), then the upload destination folder and a list (upload list) of image data to be uploaded are transmitted from the main server 30 to the image editing apparatus 1 (step 125).

The image editing apparatus 1 compares the upload list transmitted from the main server 30 and the file name of the image data to be transmitted to the main server 30 (step 126). If the result of the comparison is agreement ("NO" at step 127), then the image data specified by the upload list is transmitted from the image editing apparatus 1 to the main server 30 (step 128). In case of non-agreement ("YES" at step 127), a collation error is displayed on the display unit 14 (step 129). If the collation error occurs, then the image data would be uploaded again as necessary.

In a case where image data representing an edited image is saved on a disk or the edited image is printed using the printer of the image editing apparatus (step 107), first an area for the purpose of outputting the image data is acquired in the RAM 4 of the image editing apparatus 1 (step 131). Next, it is determined, based upon the image attributes accompanying the reduced image data, whether even one copyright-protected image is included among the images constituting the edited image (step 132; see Fig. 11).

If a copyright-protected image is not included ("NO" at step 133), the edited image is stored in the area of RAM 4 (step 134). If a copyright-protected image is not included in the edited image, the user can save or print the edited data freely.

If all image data representing the images constituting the edited image are to be stored in the RAM 4 in order to output the image, then it is determined, based upon a command from the user, whether the edited image is to be printed using the printer 20 or saved on a disk. If neither is specified, a print selection error is displayed on the display unit 14 (step 138).

In a case where the edited image is printed using the printer 20 ("YES" at step 136), the temporarily stored edited image data is read out of the RAM 4 and output to the printer 20 (step 146). If all of the edited image data has been output from the RAM 4 to the printer 20 normally, a display to this effect is presented on the display unit 14 (steps 147 - 149). If an error occurs in the output of the edited image from the RAM 4 to the printer 20, then print error is displayed on the display unit 14 (step 150). In such case printing would be executed again as necessary.

In a case where the edited image data is saved to disk ("YES" at step 137), the format of the edited image data is converted by the CPU 2 in order that it can be saved to the disk (step 151). If necessary, the edited image data is subjected to compression processing along with the format conversion processing.

If saving of the edited image data to the disk ends normally, then a display to this effect is presented on the display unit 14 (steps 153, 154). If an error occurs in the saving of the image data to the disk, then a write error message is displayed on the display unit 14 (step 155).

When all processing for image editing and image output ends, the end area A14 is clicked by the user. In response to the clicking operation, all of the image data and editing information stored temporarily in the RAM 4 is erased (steps 144, 145). Since copyright-protected image data is erased by this operation, the user can be prevented from using the copyright-protected image freely.

### (5) Authentication processing in main server

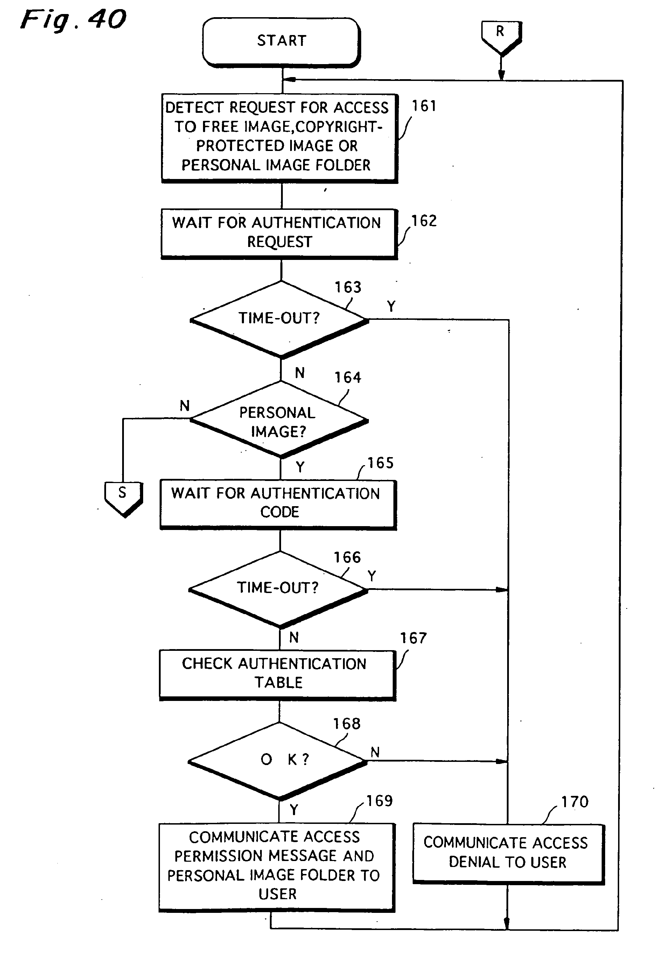

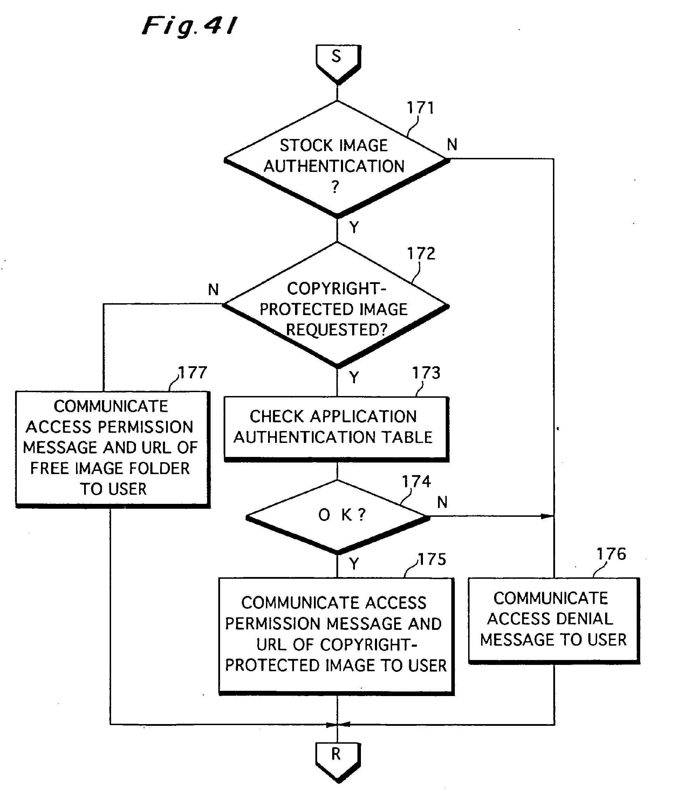

Figs. 40 and 41 are flowcharts illustrating the procedure of authentication processing executed in the main server 30. This processing is executed in accordance with the operating program that has been installed in the main server 30.

This authentication processing includes personal-image authentication carried out when personal image data is downloaded from the main server 30, and stock-image authentication carried out when copyright-protected image data or free image data is downloaded from the main server 30.

Execution of the authentication processing procedure is started by receiving editing information from the image editing apparatus 1 and detecting a request for access to a free image folder, copyright-protected image folder or personal image folder (step 161). An authentication request from the image editing apparatus 1 is awaited for a fixed period of time. If the fixed period of time elapses, data representing denial of access is transmitted to the image editing apparatus 1 (step 162, "YES" at steps 163, step 170).

If there is an authentication request within the fixed period of time, then it is determined whether the authentication is personal-image authentication (step 164). In case of personal-image authentication, receipt of an authentication code from the user of the image editing apparatus 1 is awaited (step 165). If the authentication code is received from the user within the fixed period of time, then the authentication code transmitted from the user and the authentication codes that have been stored in the main server 30 are compared (steps 166, 167). If the compared codes agree ("YES" at step 168), the URL of the personal image folder is transmitted to the user of the image editing apparatus 1 (step 169). Since the user thus obtains the URL of the personal image folder, the user can access this folder and can download the personal image data that has been stored in the personal image folder.

In a case where an authentication code is not transmitted from the user within the fixed period of time or the comparison with the authentication code stored in the authentication table results in non-agreement, then data representing access denial is communicated to the user (step 170).

In case of authentication of a stock image ("YES" at step 171), then it is determined whether image data for which downloading has been requested by the user is copyright-protected image (step 172). If a copyright-protected image has not been requested ("NO" at step 172), then the request is judged to be one for downloading free image data. Since free image data is allowed to be used freely by all users, data representing access permission and the URL of the free image data are transmitted to the user.

If the image data for which downloading has been requested is copyright-protected image data, it is determined, on the basis of the application name and version transmitted from the user and the application name that has been stored in an application authentication table, whether the application software of the image editing apparatus 1 is capable of storing, in freely readable fashion, the copyright-protected image data downloaded as set forth above (step 173).

If, on the basis of the application authentication table, it is determined that the image editing apparatus 1 is being operated by application software which allows downloading of copyright-protected image data ("YES" at step 174), data indicating access permission and the URL name of the copyright-protected image folder are transmitted to the user. As a result, the user is capable of downloading copyright-protected image data. If the application software of the image editing apparatus 1 does not allow downloading of copyright-protected image data, then data representing access denial is transmitted from the main server 30 to the image editing apparatus 1 (step 176).

### (6) Processing for receiving editing information and processing for editing images

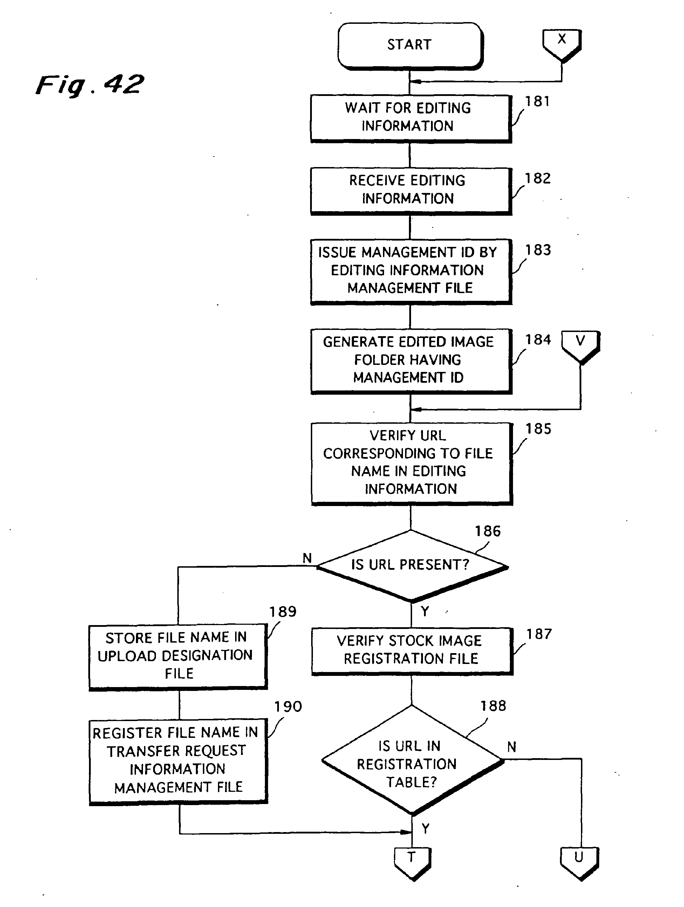

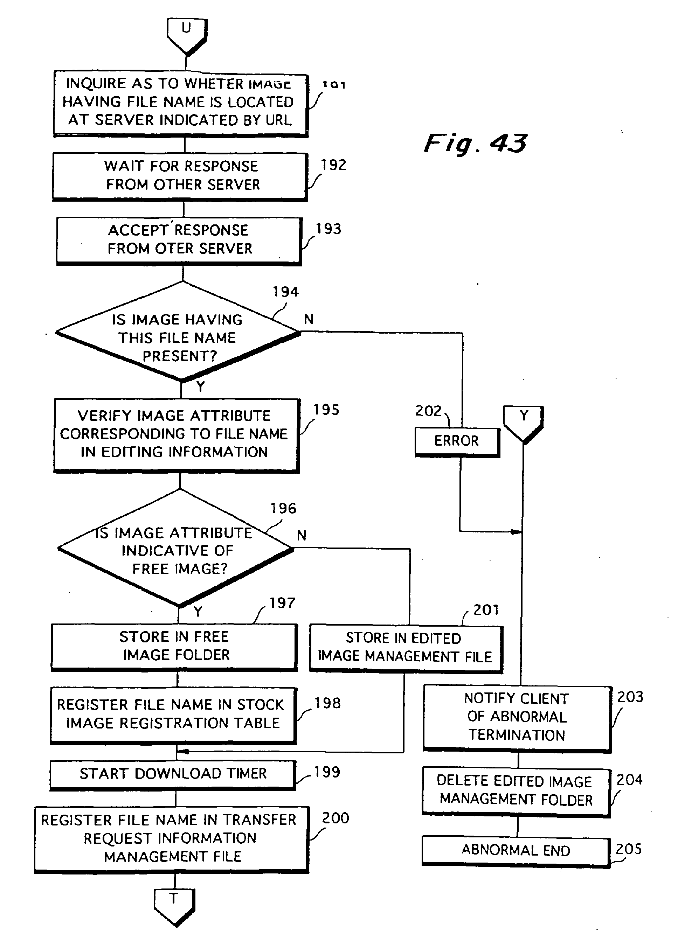

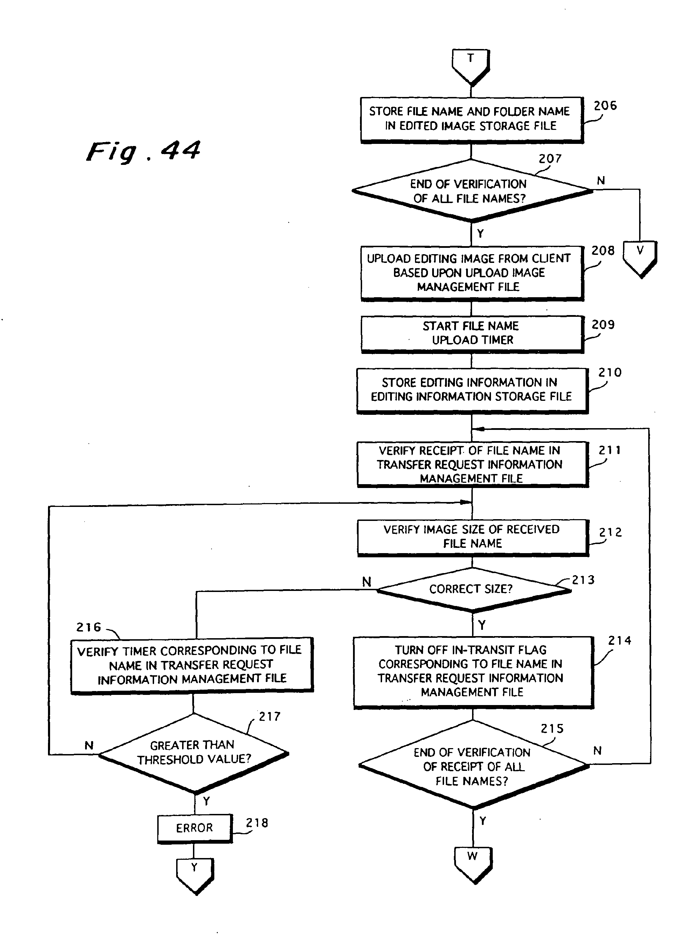

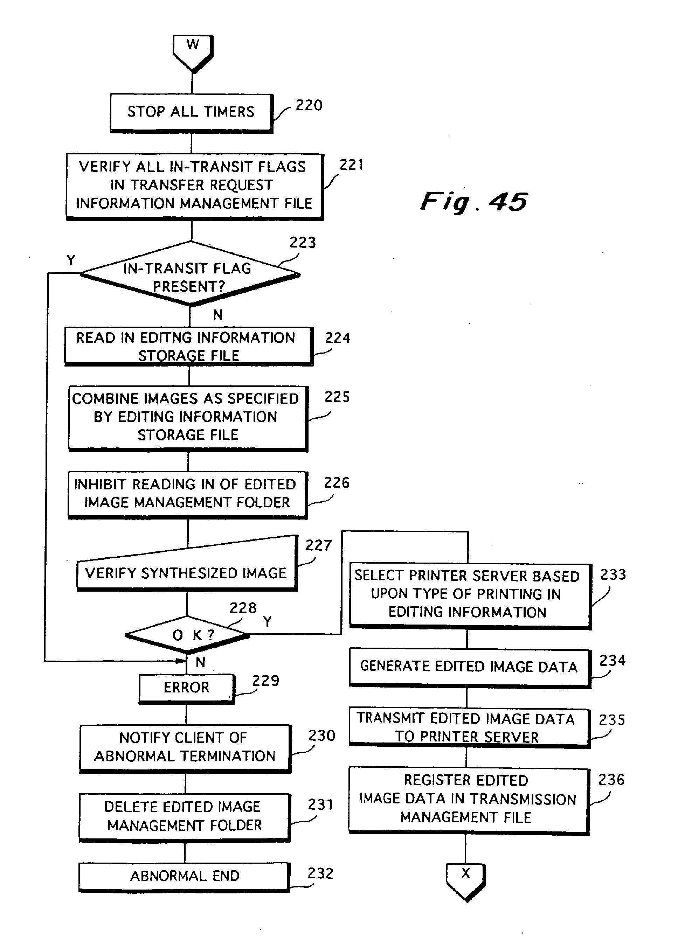

Figs. 42 through 45 are flowcharts illustrating the procedure of processing for receiving editing information transmitted from the image editing apparatus 1 and processing for editing images based upon the editing information. This processing is executed in accordance with the operating program that has been installed in the main server 30.

The processing is started by receiving the editing information from the image editing apparatus 1 (steps 181, 182).

When the editing information is received from the image editing apparatus 1, a management ID is issued in conformity with the editing information and the ID is registered in the editing information management file (step 183). Next, the edited image folder specified by the issued management ID is generated in order to generate the edited image data (step 184).

Next, it is determined whether the URL of an image constituting the received edited image is included in the received editing information.

If the URL of the image is included in the received editing information ("YES" at step 186), it is judged whether the image data representing this image has been stored in the main server 30 or image server 31, and a stock image registration table is verified (step 187). If the URL of an image recorded in the received editing information has been stored in the stock image registration table ("YES" at step 188), then the particular folder in which the URL of this image and the image data have been stored in stored in the image information storage file (step 206). If the URL of the image has not been stored in the editing information, then the image data constituting the edited image cannot be retrieved by the main server 30. This means that the edited image of the user cannot be generated unless the image data representing this image is transmitted from the image editing apparatus 1. Accordingly, the file name of this image is stored in the upload image management file (step 189) and in the transfer request information management file (step 190).

In a case where the URL of an image constituting the edited image is located in the editing information but is not located in the stock image registration table of the main server 30, it is conceivable that the image data representing this image has been stored in another image server 31. The main server 30, therefore, directs an inquiry to the other image server 31 to inquire as to whether image data having the URL of this image has been stored there (step 191).

On the basis of the stock image registration table possessed by the other image server 31, this other image server 31 determines whether the image data inquired about has been stored.

On the basis of reply data from the other image server 31, the main server 30 verifies whether the image data has been stored in the other image server 31 (steps 192, 193, 194). If the image data has not been stored in the other image server 31, an edited image cannot be generated based upon the editing information transmitted from the user. An error display, therefore, is presented on the display unit 14 of the main server 30 (step 202). Data indicating that the edited image cannot be generated and that processing terminated abnormally is transmitted to the user (step 203). Since the edited image cannot be generated, the edited image management folder is deleted (steps 204, 205).

In a case where image data not present in the main server 30 is that of an image constituting an edited image and has been stored in the other image server 31 ("YES" at step 194), the image attribute of the image stored in the editing information is verified (step 195). In a case where the image attribute is indicative of a free image ("YES" at step 196), the image data of the image that has been stored in the other image server 31 is transmitted to the main server 30 and is stored in the free image folder (step 197). The storage of the image information is accompanied by storage of the file name of the image data in the stock image registration table (step 198). In a case where the image attribute is not indicative of a free image (meaning that the image is a copyright-protected image or personal image) ("NO" at step 196), management will be too complicated if the same image data is stored in a plurality of image servers 31. Accordingly, the image data is stored in the edited image management folder that will be deleted subsequently (step 201).

When storage of the image data in the free image folder or edited image management folder begins, a timer starts keeping time (step 199) and the file name of the image data is stored in the transfer request information management file (step 200). Furthermore, the particular folder in which the image data has been stored is stored in the editing information storage file (step 206).

At the end of verification, in regard to all images constituting the edited image that has been stored in the editing information, as to whether the image data representing these images is located in the main server 30 or in the other image server 31 or is to be downloaded from the image editing apparatus 1 (step 207), the file name of image data to be uploaded by the user based upon the data that has been stored in the upload image management file is transmitted to the image editing apparatus 1 (step 208). In addition, an upload timer starts keeping time (step 209).

Next, data representing the editing information transmitted from the image editing apparatus 1 is stored in the editing information management file (step 210).

Reference is had to the transfer request information management file and the image data received by the main server 30 is verified as well as the image size (steps 211, 212). If the image data received by the main server 30 is not indicative of the verified image size, first it is determined whether reception of image data is in progress ("NO" at step 213; steps 216, 217). If reception of image data does not end upon elapse of a fixed period of time ("YES" at step 217), processing ends via an error step (step 218). If it is judged, based upon the image size thereof, that reception of the image data has been completed, then an in-transit flag in the transfer request information management file is cleared (step 214).

If it is determined by referring to the transfer request information management file that all image data to be received has been received by the main server 30, then timekeeping by all timers of the main server 30 is stopped ("YES" at step 215; step 220).

The transfer request information management table is referred to again to check for in-transit flags (step 221).

If there is even one in-transit flag, an error determination is made and this is transmitted to the image editing apparatus 1. Further, since generation of the edited image desired by the user is not possible, the editing information management folder is deleted (steps 229 - 232). If there is not a single in-transit flag in the transfer request information management file, it is construed that all image data to be transferred from the image editing apparatus 1 or other image server 31 has been received. As a result, generation of the edited image becomes possible.

In order to generate the edited image, reference is had to the edited image management file and edited image data is generated based upon editing information that has been stored in the edited image management file and data representing where the image data representing the edited image data has been stored (steps 224, 225). If the edited image data has been generated, it is stored temporarily in the RAM 4.

In order to prevent edited image data from being generated again, the reading in of data managed by the edited information management file is inhibited (step 226). The edited image data that has been generated is applied to the display unit 14. The operator of the main server 30 observes the edited image to verify the same (step 227). If the edited image is being displayed, then the printer server 32 best suited to the printing of the edited image is selected based upon the type of printing included in the editing information (step 233).

In order to print the edited image, the edited image data is generated again (step 234) and is transmitted to the printer server 32 that has been selected (step 235). The edited image data is registered in a transmission management file (step 236).

### (7) Server-to-server communication processing

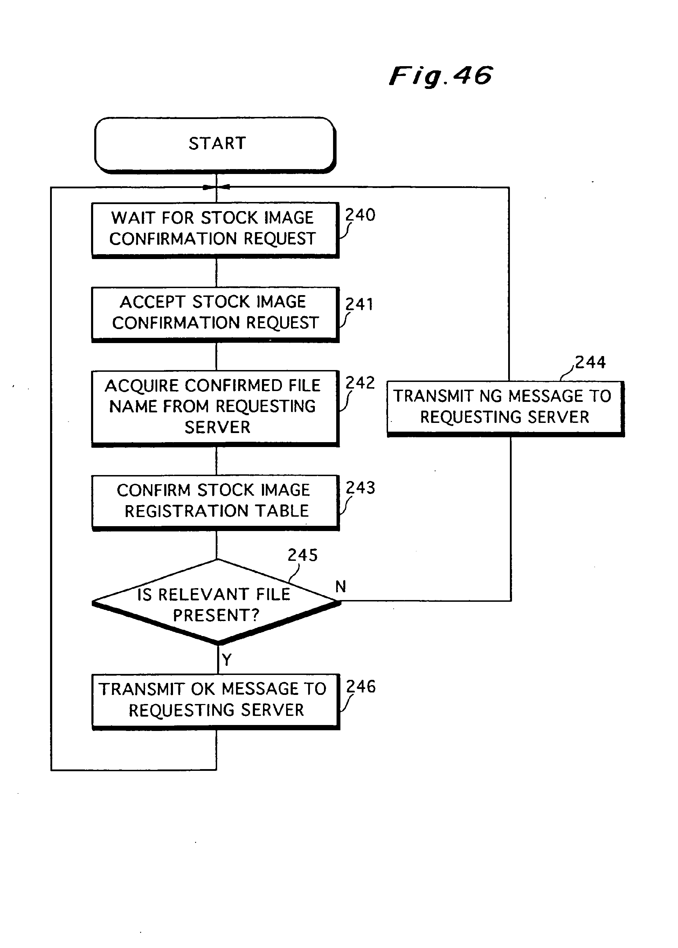

Fig. 46 is a flowchart illustrating processing for communication between the main server 30 and image server 31.

In a case where image data representing an image constituting an edited image is not present in the main server 30, the main server 30 sends an inquiry to the image server 31 in the manner described above. The processing of Fig. 46 is started by this inquiry. When the other image server 31 receives a confirmation request from the main server 30 (steps 240, 241), the file name of image data for which confirmation of the presence thereof has been requested is received by the image server 31 (step 242). The image server 31 confirms whether the received file name of the image data has been stored in the stock image registration table (step 243). If the file name has been stored in the stock image registration table, a message to this effect is transmitted to the main server 30 that issued the confirmation request and the image data having this file name is transmitted to the main server 30 as well (steps 245, 246). If the file name has not been stored in the stock image registration table, then a message to this effect is transmitted to the main server 30 that issued the confirmation request (steps 245, 244).

### (8) Printing processing by printer server

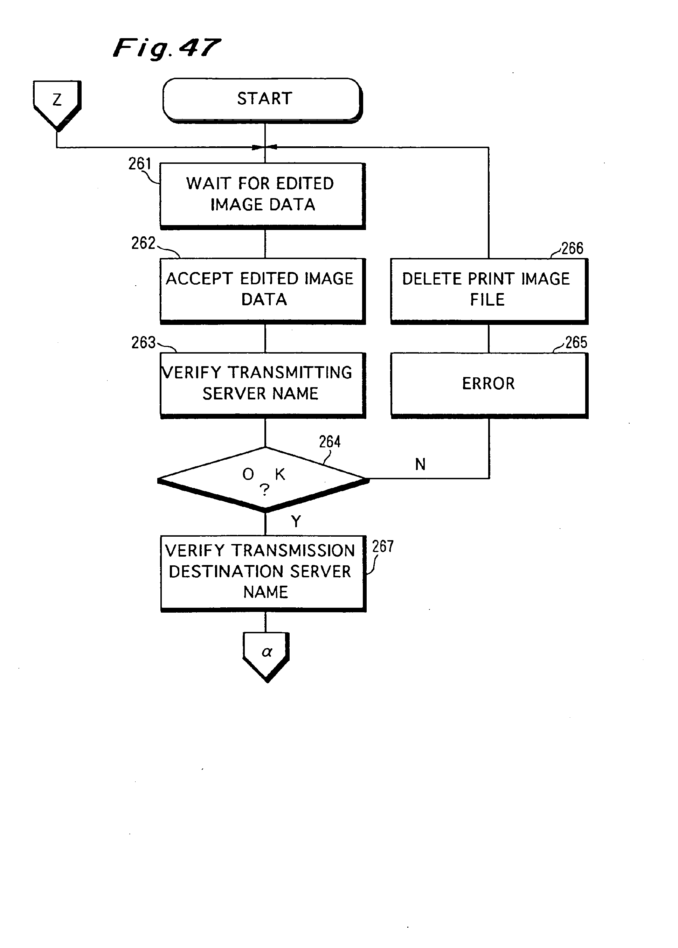

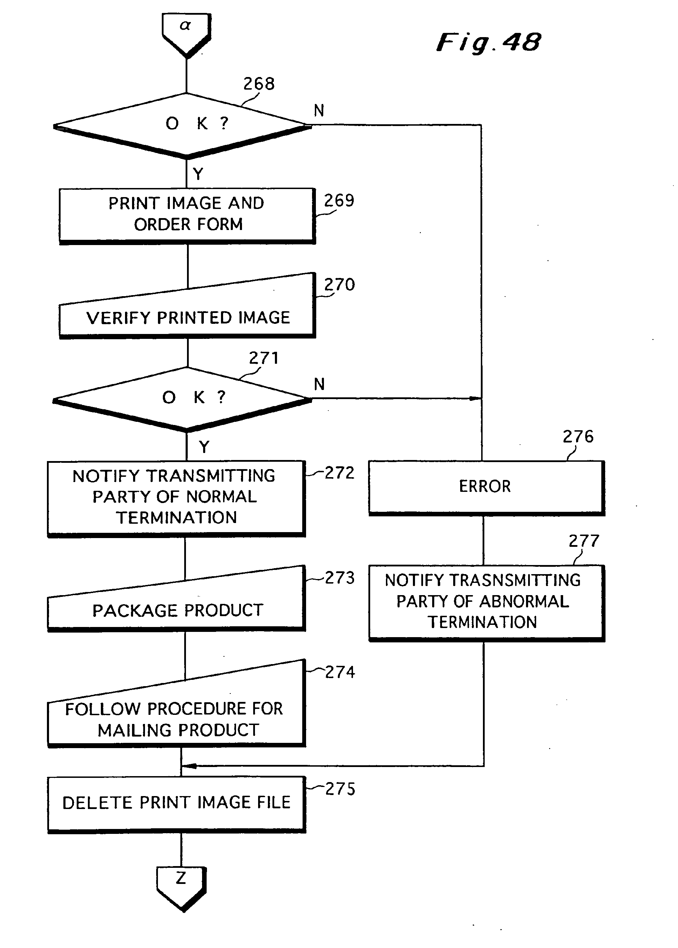

Figs. 47 and 48 are flowcharts illustrating the procedure of processing for printing an edited image in the printer server 32. This processing is executed in accordance with the operating program that has been installed in the printer server 32.

This processing starts in response to receipt of edited image data transmitted from the main server 30. A print image file (not shown) is generated in response to receipt of the edited image data.

When the edited image data is transmitted from the main server 30 (steps 261, 262), the printer server 32 verifies the transmitting server name and transmission destination server name included in tag information relating to image attributes and accompanying the edited image data. If both are verified, then the edited image represented by the edited image data and an order form are printed by the digital printer 26 for the processing laboratory (step 269). The order form is printed based upon storage of the image tag information accompanying the edited image data.

When the edited image is printed, the operator of the printer server 32 checks to see whether the edited image has been printed normally (step 270). If printing has been performed correctly, the printed matter is packaged by the operator of the printer server 32 and is sent to the user of the image editing apparatus 1 by C.O.D. (steps 272 - 274). As a result, the print image file storing the edited image data is deleted (step 275).

If the server name of the transmitting server cannot be verified in print processing, an error message is displayed and the print image file is deleted (steps 265, 266). In a case where it is judged that the transmitting server name or printed edited image is abnormal, an error display is presented and data representing abnormal termination is transmitted along with the edited image data (steps 276, 277).

### (9) Processing for ending printing by server

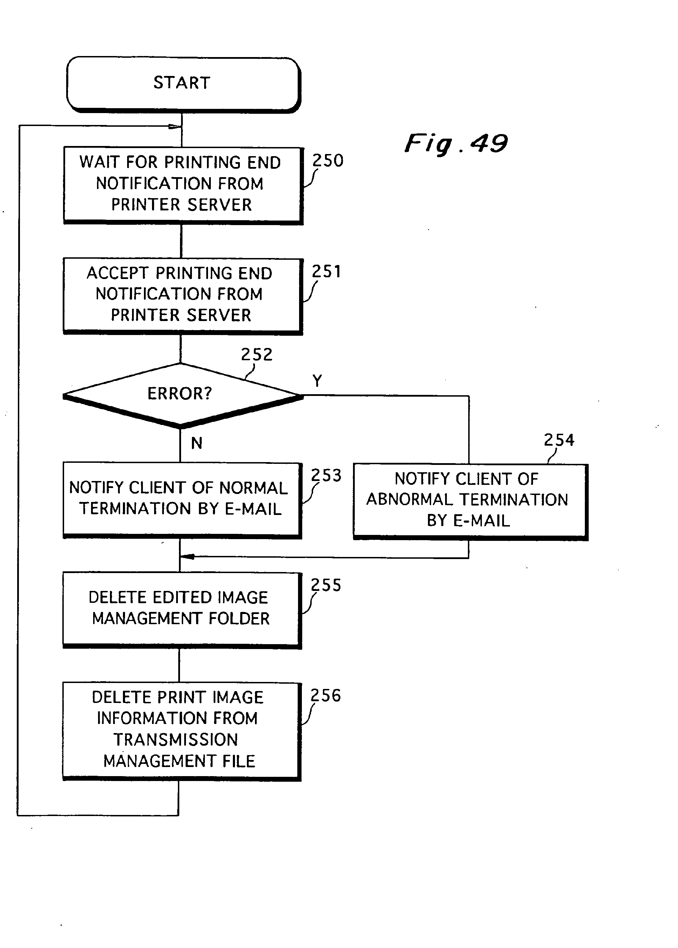

Fig. 49 is a flowchart illustrating a processing procedure executed by the server 30 or 31 in a case where the printing of an edited image has been completed in the printer server 32. This processing also is executed in accordance with the operating program that has been installed in the server 30 or 31.

The processing starts in response to receipt of data representing notification of end of printing of the edited image from the printer server 32.

When data representing end of printing is received from the printer server 32 (steps 250, 251), it is determined whether an error has occurred in printing (step 252). If an error has not occurred, data representing the fact that printing was performed normally is transmitted to the image editing apparatus 1 (step 253). As a result, the user of the image editing apparatus 1 can be notified of the fact that the edited image will be mailed at a later date. If an error has occurred, data representing the fact is transmitted to the image editing apparatus 1 (step 254). As a result, the user of the image editing apparatus 1 would edit the image again as necessary and transmit the edited image information to the main server 30.

Next, the edited image management folder is deleted and information relating to the edited image is deleted from the transmission management file (step 256).

### (10) Processing for verifying status of edited image generation

In a case where the image editing apparatus 1 has ordered the main server 30 to print an edited image in the manner described above, the user of the image editing apparatus 1 can be notified of the edited status of the edited image in the main server 30 and the printing status of the edited image in the printer server 32.

If, in a case where the user of the image editing apparatus 1 has been notified of editing status and printing status of the edited image, editing information is transmitted from the image editing apparatus 1 to the main server 30, data representing acceptance of the editing information and a characteristic verification ID are transmitted from the main server 30, which has received the editing information, to the image editing apparatus 1 that has transmitted the editing information.

When the editing status and printing status are to be verified, the user of the image editing apparatus 1 sends the transmitted verification ID to the main server 30. Upon receiving the verification ID transmitted from the image editing apparatus 1, the main server 30 sends the image editing apparatus 1 status data indicating the editing status and printing status. Upon receiving the status data, the image editing apparatus 1 displays the editing status and printing status of the edited image on the display unit 14 based upon the status data. By observing the display on the display unit 14 of the image editing apparatus 1, the user of the image editing apparatus 1 can be notified of the editing status and printing status of the edited image.

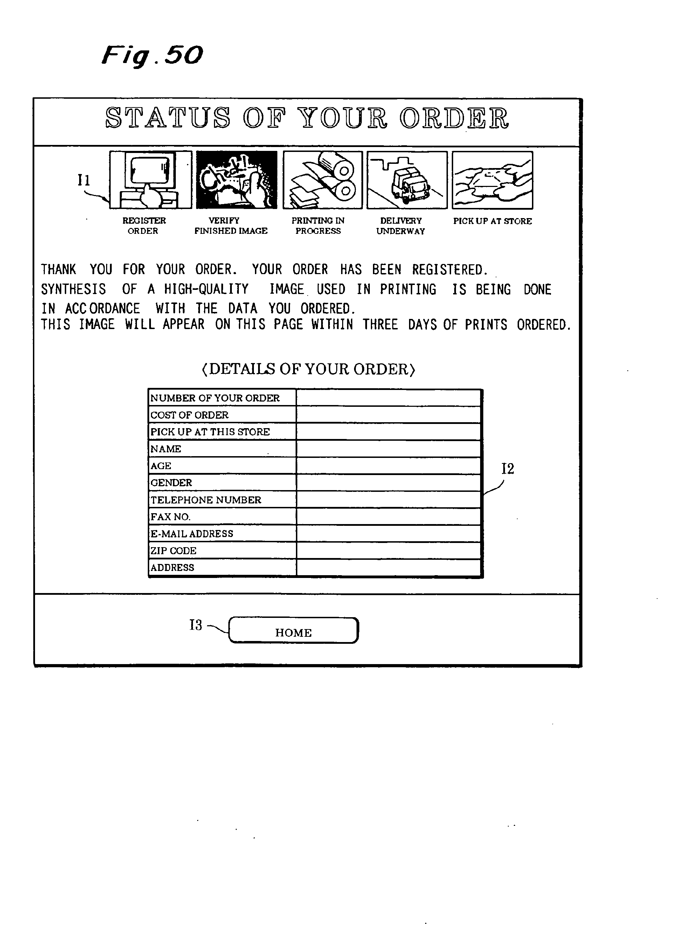

Figs. 50 through 52 illustrate examples of the editing status and printing status of the edited image in the main server 30, these screens being displayed on the display unit 14 of the image editing apparatus 1. If the status cannot be displayed on one screen, the screen is scrolled.

Fig. 50 shows an example of a screen displayed on the display unit 14 of the image editing apparatus 1 based upon status data transmitted from the main server 30 to the image editing apparatus 1 in a case where the verification ID has been transmitted from the image editing apparatus 1 to the main server 30 in order that the user of the image editing apparatus 1 may inquire about the status of printing after an order to print an edited image has been received. It is possible for this screen to be displayed by accessing the top page of a website on the Internet.

Icons I1 representing status in a straightforward manner are displayed on the screen in such a manner that status can be understood at a glance. The icons I1 indicate a plurality of conditions depending upon the particular state. The icon corresponding to the current status is clearly displayed in such a manner that it can be distinguished from other icons. This arrangement makes it possible for the user of the image editing apparatus 1 to immediately comprehend the currently prevailing status. The content of an order placed by the user also is displayed on the screen (in a display area I2). Since the content of an order is displayed, the user can immediately confirm the same. Since it is assumed here that the user will go to pick up an edited image that has been printed, the name of the store at which the image should be picked up also is displayed. The age and gender of the user are displayed as well. By clicking an area I3, the user restores the basic screen.

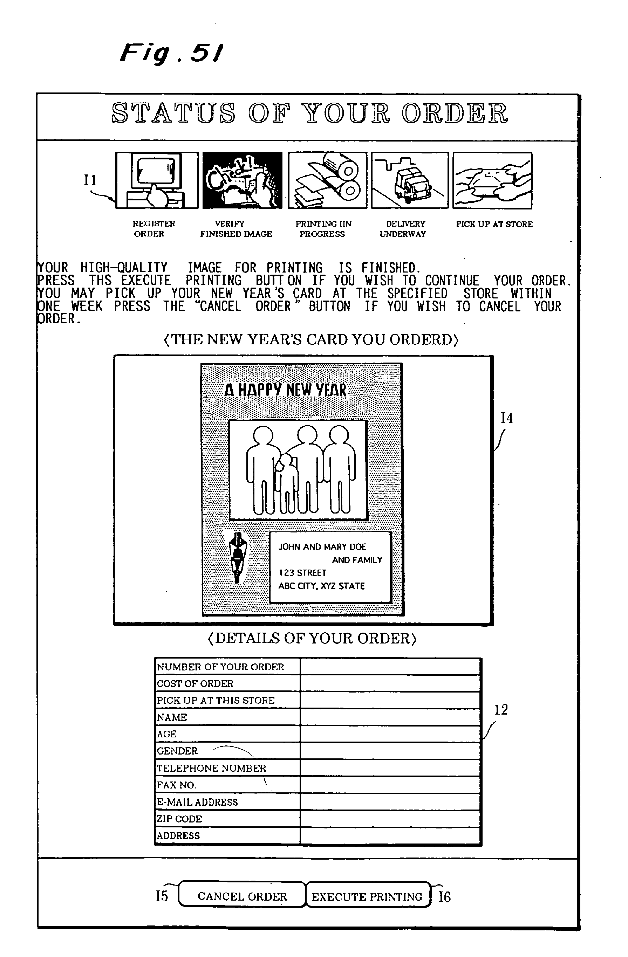

Fig. 51 shows an example of a screen displayed on the display unit 14 of the image editing apparatus 1 when the verification ID is transmitted from the user of the image editing apparatus 1 to the main server 30 in a case where an edited image has been generated by the main server 30.

In this case an icon among the icons I1 that indicates verification of a finished product is clearly displayed so as to distinguish it from the other icons. The edited image is displayed in area I4. By observing the edited image, the user is capable of determining whether the desired edited image has been obtained. If the user verifies that the desired edited image has been obtained, the user clicks an area I6. As a result, printing of the edited image is executed. When the edited image desired by the user has not been obtained, an area I5 is clicked by the user, whereby the order is canceled.

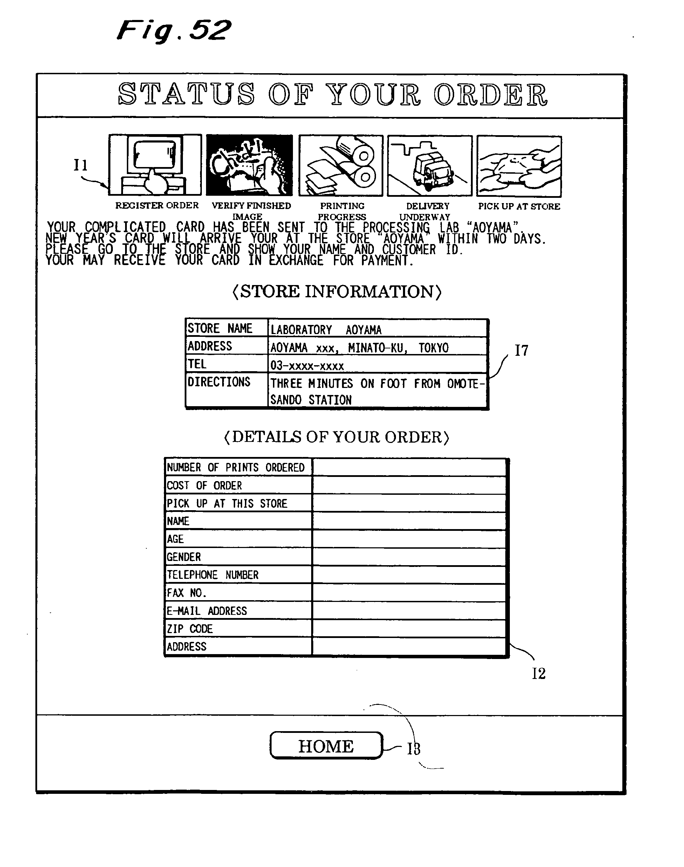

Fig. 52 shows an example of a screen displayed on the display unit 14 of the image editing apparatus 1 when the verification ID is transmitted from the user of the image editing apparatus 1 to the main server 30 in a case where printing of the edited image has been completed and the printed edited image has been dispatched to a store specified by the user.

An icon among the icons I1 that indicates that the edited image is to be picked up at a store is clearly displayed so as to distinguish it from the other icons. Information indicating the store at which the edited image is to be picked up is displayed in an area I7. The user of the image editing apparatus 1 can receive the printed edited image by going to the store indicated.

### (11) Processing for billing of copyright-protected images

### (a) Overview

Billing processing for a case where a copyright-protected image is being utilized as an edited image will now be described.

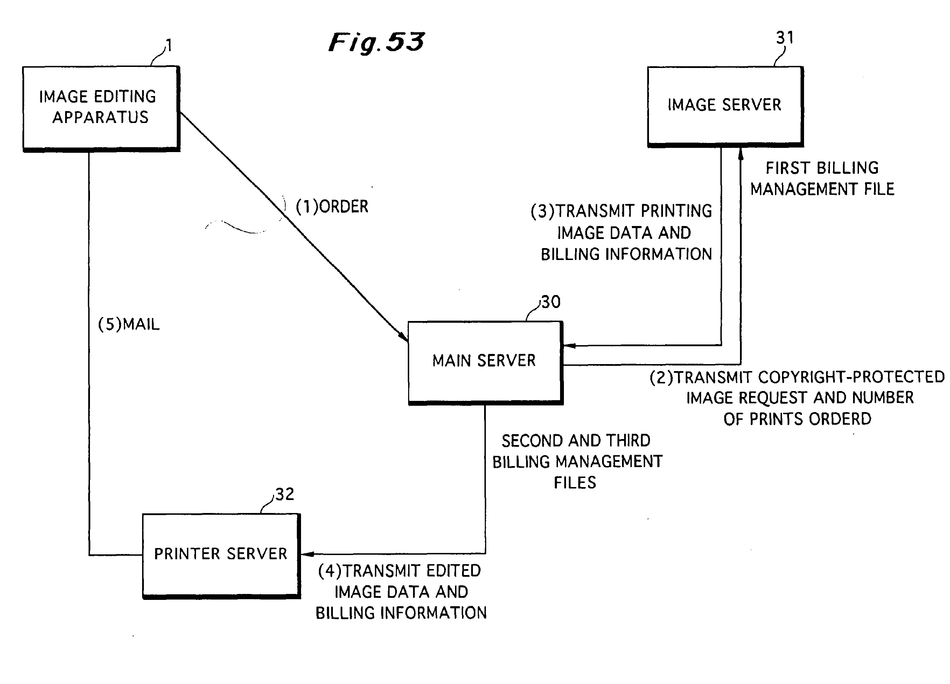

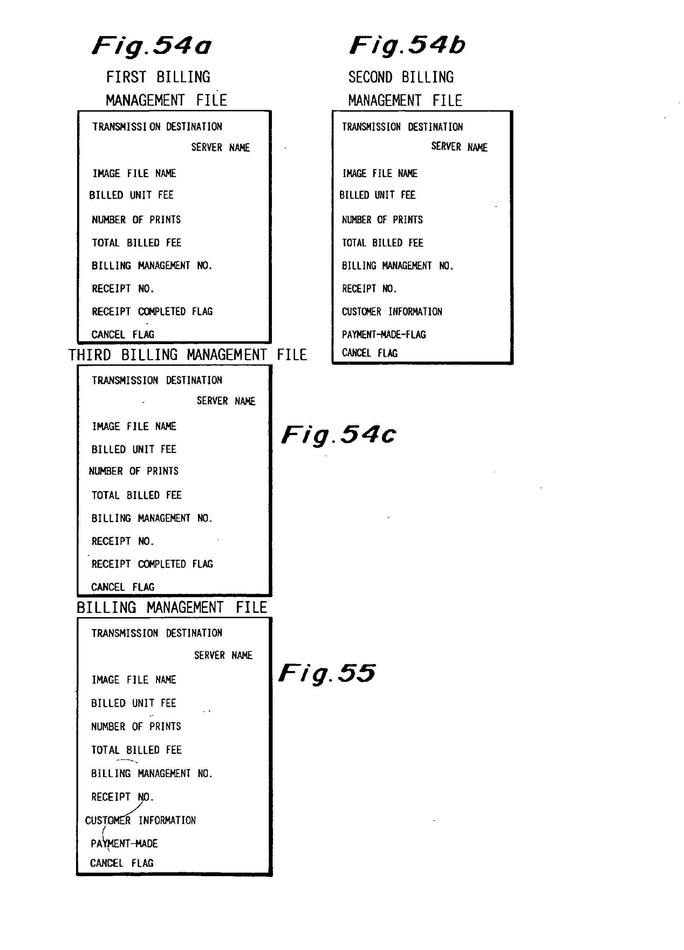

Fig. 53 illustrates the overall flow of processing in the image communication system in a case where billing processing is carried out. Figs. 54 A ∼ C illustrate examples of files generated in the main server 30 and image server 31, and Fig. 55 shows an example of a file generated in the printer server 32.

If billing processing is executed, three billing files are generated in the main server 30 and image server 31 in the manner illustrated in Figs. 54 A ∼ C. The first billing file shown in Fig. 54a is referred to in a case where edited image data is generated using copyright-protected image data that has been stored in the server's own copyright-protected image folder. The second billing file shown in Fig. 54b is referred to in order to perform management in a case where edited image data is generated using copyright-protected image data that has been stored in the copyright-protected image folder of another server. The third billing file shown in Fig. 54c is referred to in order to perform management when copyright-protected image was used as edited image data transmitted to the printer server 32.

The first billing file includes the transmission destination server name, image file name, unit fee billed per copyright-protected image, number of prints, total billed price, billing management number, receipt number, a receipt completed flag and a cancel flag.

The second billing file includes the transmitting server name, customer information and a payment-made flag instead of the transmission destination server name, receipt number and receipt completed flag of the first billing file. The third billing file has the same structure as that of the first billing file.

As shown in Fig. 55, customer information and a payment-made flag are stored in the billing file of the printer server 32 instead of the receipt number and receipt completed flag of the first billing file.

If the edited image data that has been generated by the editing information transmitted from the image editing apparatus 1 does not use copyright-protected image data, the following processing is executed if it is not impossible.

Upon receiving the editing information transmitted from the image editing apparatus 1, the main server 30 determines whether a request for a copyright-protected image is included in this editing information. If there is a request for a copyright-protected image, it is determined, based upon the URL, whether the image data representing the copyright-protected image has been stored in the main server's own copyright-protected image folder or in the copyright-protected image folder of the other image server 31. If the image data has been stored in the server's own copyright-protected image folder, then the billing management number is issued and the transmitting server name, image file name, billed unit price, number of prints, total billed price, billing management number and customer information are stored in the second billing file. If the image data has been stored in the copyright-protected image folder of the other image server 31, then the billing management number and receipt number are transmitted to the other image server 31. Upon receiving the billing management number and receipt number, the other image server 31 stores the transmission destination server name, image file name, billed unit fee per copyright-protected image, number of prints and total billed fee in the first billing file.

When copyright-protected image data is transmitted from the other image server 31 to the main server 30 in a case where copyright-protected image data requested by the image editing apparatus 1 has been stored in the copyright-protected image folder of the other image server 31, the transmission destination server name, image file name, billed unit fee, total billed fee and billing management number are stored as the tag information accompanying this copyright-protected image data. The main server 30 checks this tag information to determine whether the image data has arrived at its own location.

Upon receiving the image data transmitted from the other image server 31, the main server 30 checks the tag information that has been stored in the received image data and reads the information relating to billing. The information relating to billing that has been read is stored in the second billing file.

When the edited image data is generated in the manner described above, the main server 30 stores the information relating to billing for the copyright-protected image used in generation of the edited image data in the third billing file. It goes without saying that if the copyright-protected image that has been stored in the main server 30 is used, then information relating to billing regarding this copyright-protected image data also is stored.

The information relating to billing is stored in the tag information accompanying the edited image data generated in the main server 30 and is transmitted to the main server 30.

Upon receiving the edited image data, the main server 30 reads the information relating to billing from the tag information accompanying the edited image data and stores the information relating to billing in the third billing file.

### (b) Details of billing processing

The details of billing in a case where an image is edited and the edited image is printed will now be described.

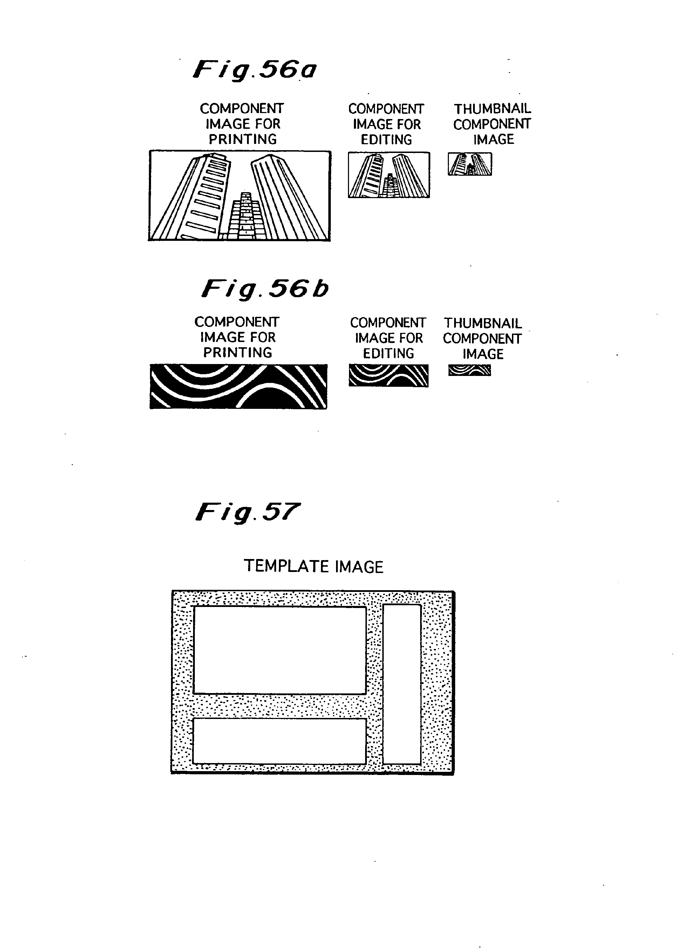

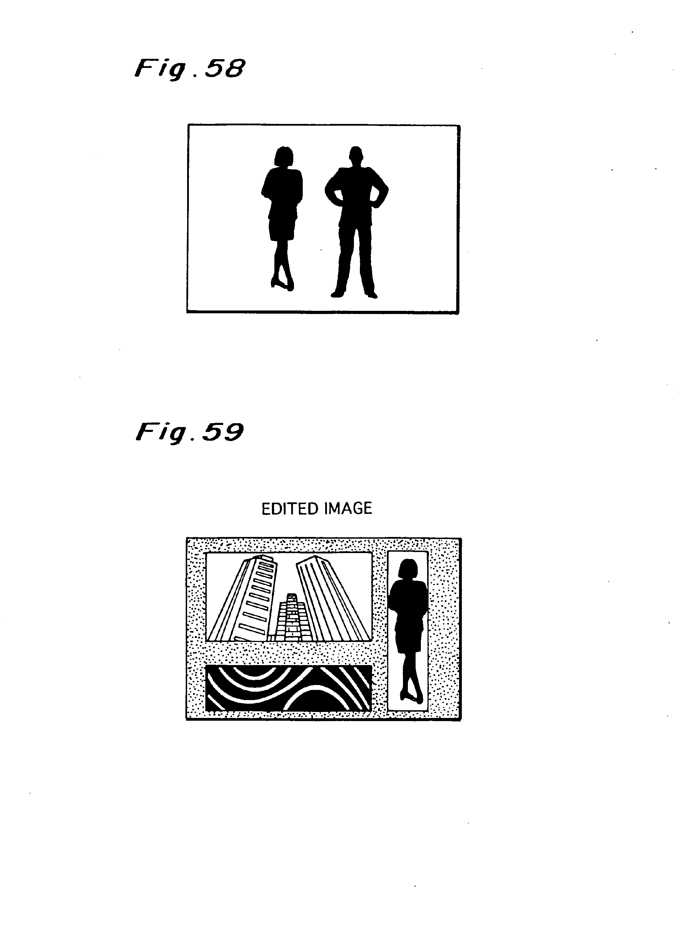

Figs. 56a and 56b illustrate examples of component images which constitute an edited image stored in the main server 30, and Fig. 57 shows an example of a template image serving as the background of the component images. Here the component images and template image are copyright-protected images for which payment is billed. To facilitate understanding, however, these images will be referred to as component images and as a template image, respectively. Fig. 58 shows an example of a component image that has been stored in the image editing apparatus 1, and Fig. 59 shows an edited image. A case in which the image shown in Figs. 59 - 58 is utilized to print the edited image shown in Fig. 59 will be described.

The component images and the template image are generated by a user capable of accessing the main server 30. The generated component images and template image are registered (stored) in the main server 30. A registration fee is required if component images and a template image are registered in the main server 30. Further, in a case where an image has been registered, a fee for designing the image is paid to the individual that created the images. The user of the registered image is required to pay a fee for use as well.

### (i) Processing for billing for registration of component images

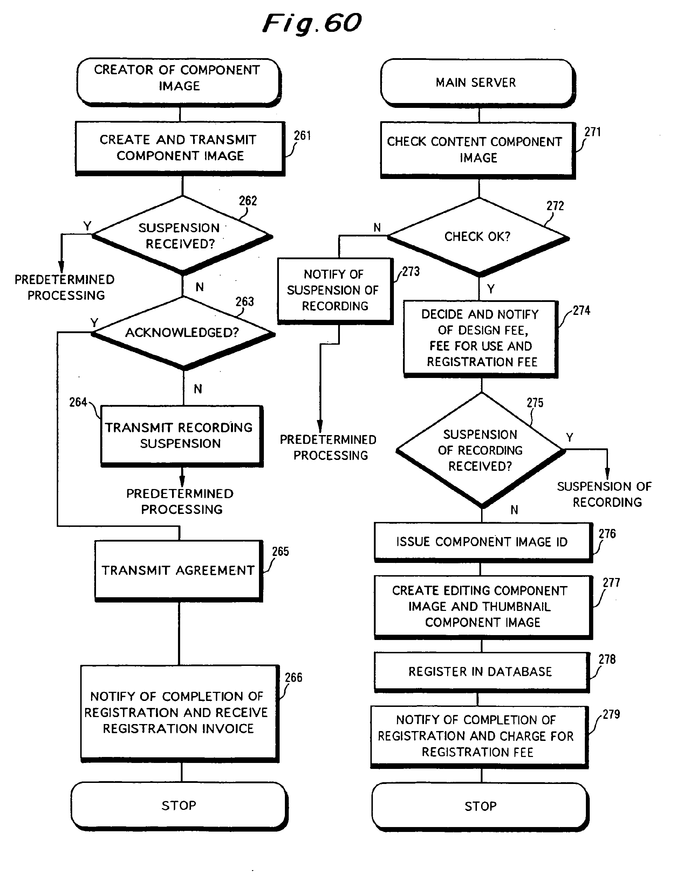

A user is billed in a case where a created component image is registered in the main server 30 in the manner described above. Fig. 60 is a flowchart illustrating the procedure of billing processing in a case where a component image is registered in the main server 30.

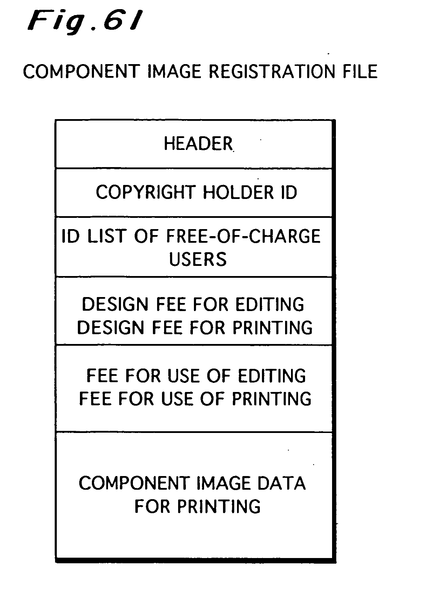

Component images for printing of the kind shown in Fig. 56 A or B are created by the user. The image editing apparatus 1 of the user who has created a component image and the main server 30 are connected and a request for transmission of the component image is sent to the main server 30. The image data representing the generated component image is transmitted from the image editing apparatus 1 to the main server 30 (step 261). The component image data is transmitted by a component image registration file shown in Fig. 61. The component image registration file includes a header, which indicates that the file is the component image registration file, the ID of the component image copyright holder, an ID list of IDs of individuals capable of using the component image free of charge, a design fee required at the time of editing desired by the creator of the component image, a design fee required at the time of printing, an editing use fee, a printing use fee and high-quality component image data used for printing.

When component image data that has been transmitted from the image editing apparatus 1 is received by the main server 30, the component image, which is represented by the component image data, is displayed on the display unit of the main server 30. The operator of the main server 30 observes the component image displayed on the display unit of the main server 30 to make sure that the component image data has not been destroyed (step 271).

If the component image has been destroyed ("NO" at step 272), the main server 30 sends the image editing apparatus 1 data indicating suspension registration of the component image (step 273). Upon receiving the data indicating suspension of registration ("YES" at step 262), the image editing apparatus 1 displays a message to this effect on the display unit 14 of the image editing apparatus 1 and executes prescribed processing, e.g., re-registration.

If the component image has not been destroyed ("YES" at step 272), then reference is had to the design fee and use fee included in the component image registration file and the design fee and use fee for this component image are decided. The decided design fee and use fee and the component image registration fee are transmitted from the main server 30 to the image editing apparatus 1 (step 274). There is also a care where the decided design fee and use fee is a fee set by the user, and there are instances where these fees are revised.

If the user of the image editing apparatus 1 does not acknowledge the design fee and use fee transmitted from the main server 30 ("NO" at step 263), data indicating suspension of registration of the component image is transmitted from the image editing apparatus 1 to the main server 30 (step 264). In response to receipt of the registration suspension data transmitted from the image editing apparatus 1, the main server 30 terminates image editing processing ("YES" at step 275).

If the user of the image editing apparatus 1 agrees to the design fee and use fee transmitted from the main server 30 ("YES" at step 263), data indicating agreement is transmitted from the image editing apparatus 1 to the main server 30 (step 265), whereupon the main server 30 issues a component ID specific to this component image data (step 276).

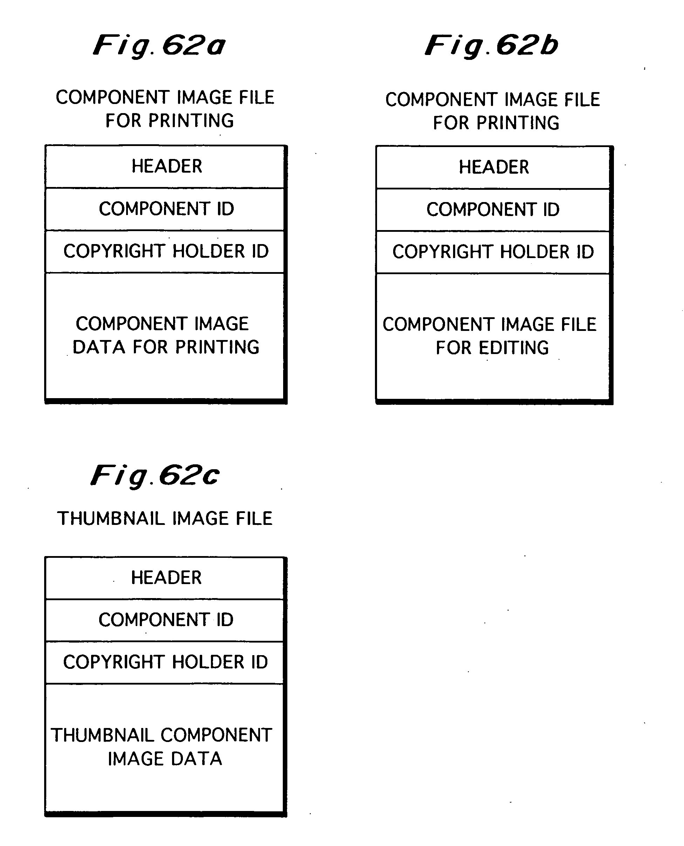

Next, editing component image data used in editing thumbnail image data for selecting editing and component image data is generated from the component image data for printing transmitted from the image editing apparatus 1 (step 277). When the editing component image data and thumbnail image data is generated, a printing component image file illustrated in Fig. 62 A is generated based upon the component image data transmitted from the image editing apparatus 1. Further, an editing component image file shown in Fig. 62 B is generated based upon the editing component image data, and a thumbnail image file shown in Fig. 62 C is generated based upon the thumbnail image data. Each of these files includes a header, a component image ID, a copyright holder ID and image data.

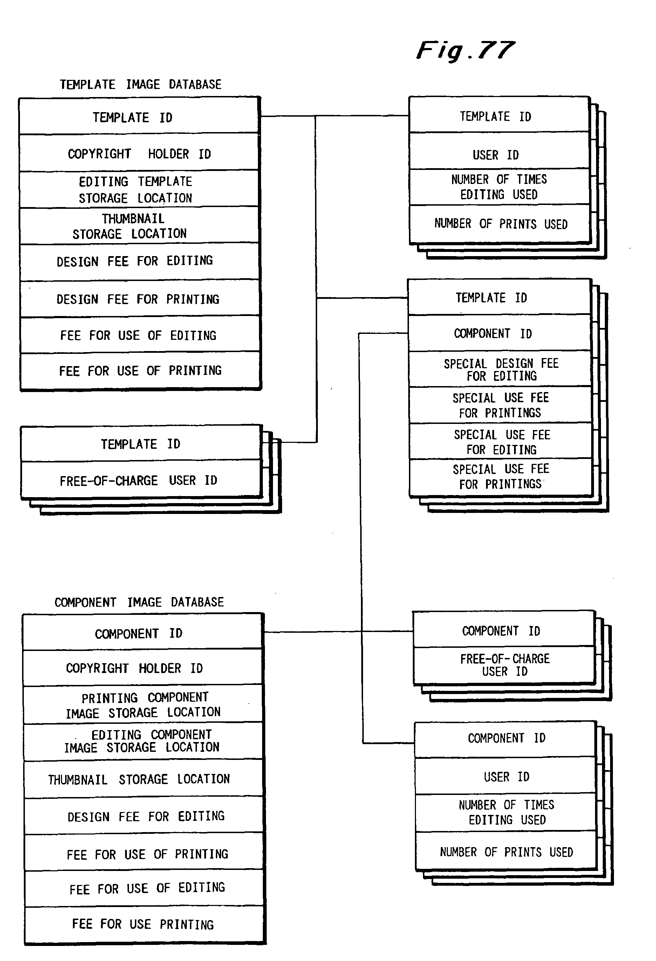

The printing component image file, editing component image file and thumbnail component image file thus generated are stored in a hard disk (database) connected to the main server 30 (step 278; see Fig. 77).

When registration of the image files in the data base of the main server 30 is completed, notification of completion of registration is transmitted from the main server 30 to the image editing apparatus 1 and the user who generated the component image data is billed for the component image registration fee (step 279).

In response to being billed for the component image registration fee by the main server 30, the user of the image editing apparatus 1 pays the registration fee (step 266).

### (ii) Processing for generating template image

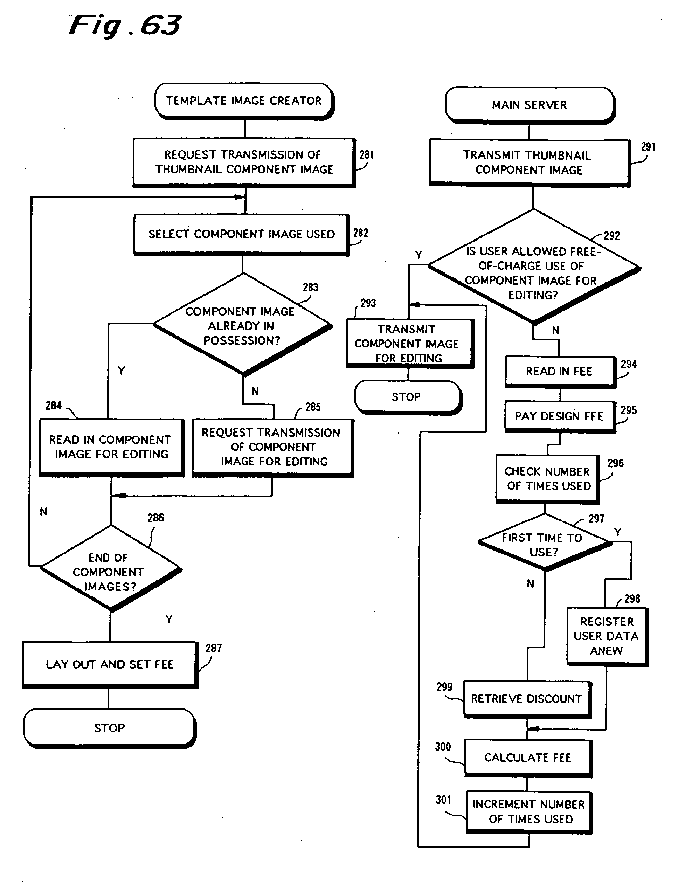

Fig. 63 is a flowchart illustrating the procedure of processing for generating a template image.

A template image can be generated using component images. In a case where a component image is used to generate a template image, the image editing apparatus 1 which generates the template image and the main server 30 communicate with each other.

First, a request for transmission of thumbnail-component images is sent from the image editing apparatus 1 to the main server 30 (step 281).

Upon receiving the thumbnail-component image transmission request, the main server 30 searches its database and transmits the thumbnail-component images to the image editing apparatus 1 (step 291).

Upon receiving the thumbnail-component image data transmitted from the main server 30, the image editing apparatus 1 displays the thumbnail-component images, which are represented by the thumbnail-component image data, as a list on the display unit 14 of the image editing apparatus 1. The user of the image editing apparatus 1 selects a component image, used in generation of the template image, from the list of thumbnail-component images displayed on the display unit 14 (step 282).

Whether the user of the image editing apparatus 1 possesses a selected component image is judged based upon the component ID that corresponds to this component image (step 283).

If the user of the image editing apparatus 1 possesses the selected component image ("YES" at step 283), the image data representing the component image is read in to the image editing apparatus 1 (step 284). If the user of the image editing apparatus 1 does not possess the selected component image ("NO" at step 283), a request for transmission of editing component image data corresponding to this component image is transmitted from the image editing apparatus 1 to the main server 30 (step 285). The processing of steps 282 through 285 is repeated for all component images used in the template image (step 286).

Upon receiving the request for transmission of a component image from the image editing apparatus 1, the main server 30 determines, in accordance with a list of IDs of individuals permitted free use of component images, whether the user of the component image is allowed to use it free of charge (step 292).

If the user of the component image is an individual permitted to use the component image free of charge ("YES" at step 292), editing component image data corresponding to this component image is transmitted from the main server 30 to the image editing apparatus 1 (step 293).

If the user of the component image is not permitted to use it free of charge ("NO" at step 292), the component image editing use fee and editing design fee are read out of the database (step 294). The individual who generated this component image is paid the design fee in accordance with the design fee that has been read out (step 295).

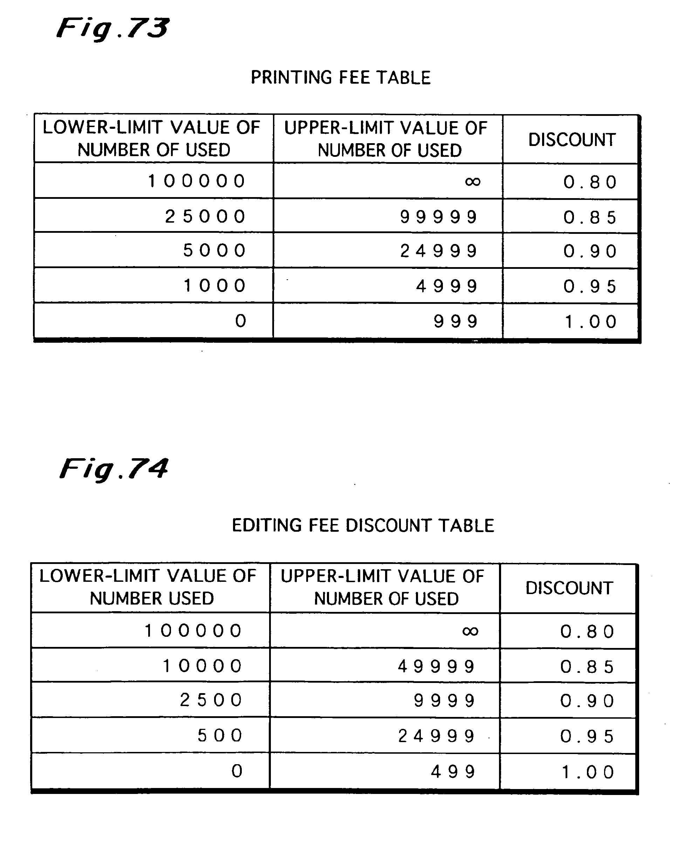

The number of times the user who requested transmission of the component image employed this component image is checked (step 296). The component image editing use fee and the component image printing use fee decline in dependence upon the number of times the component image is used. In this embodiment, the greater the number of times a component image is used, the higher the discount on the component image editing use fee, as illustrated by the editing fee discount table shown in Fig. 74.

If this is the first time for a user to use the component image ("YES" at step 297), then user data is registered anew (step 298). If this is not the first time for a user to use the component image, then the discount is retrieved from the number of times the user used the component image and from the editing fee discount table shown in Fig. 74 (step 299).

In either case, the use fee for the user employing the component image is calculated (step 300) and the number of times the user used the component image is incremented (step 301).

The data of the editing component image that corresponds to the component image requested by the user is transmitted from the main server 30 to the image editing apparatus 1 (step 293).

When the data of the editing component images is obtained, layout of the template image is performed. When the template image is generated, a layout fee regarding the template image is set (step 287).

If the template image is generated, processing for registering the template image is executed next.

### (iii) Processing for billing for registration of template images

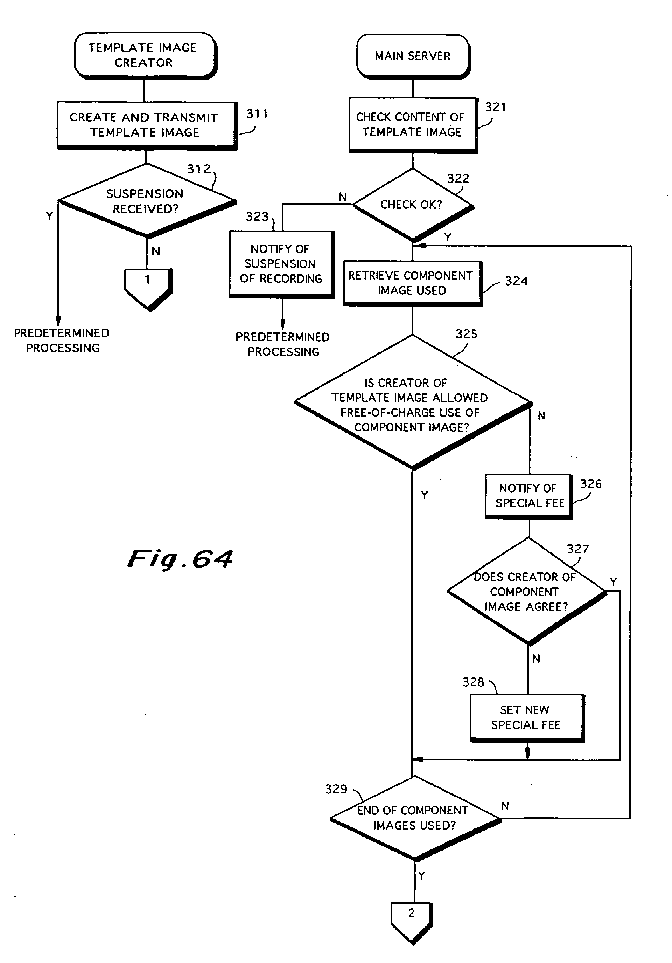

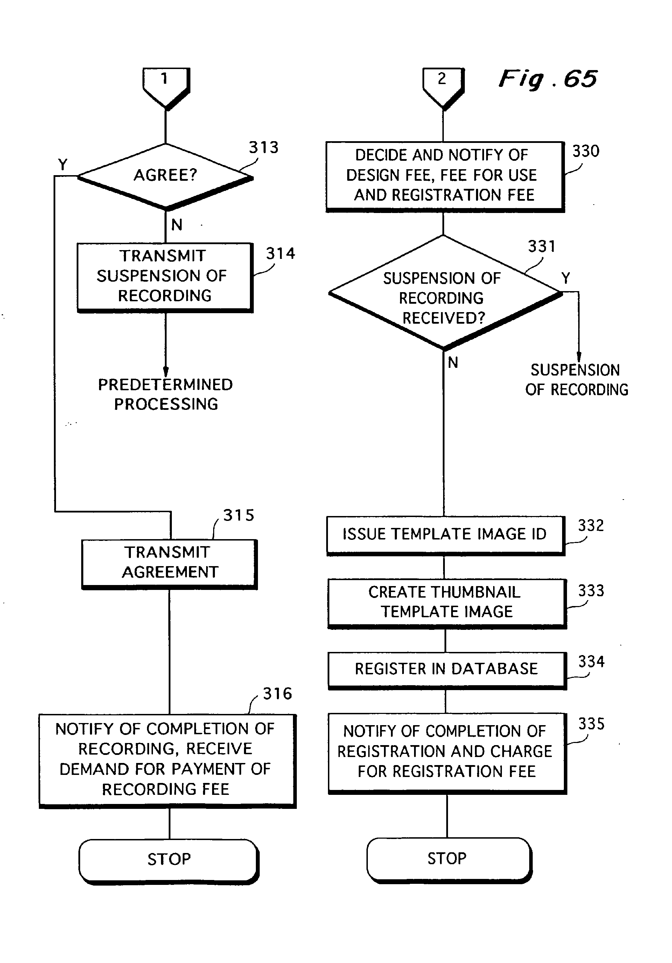

Figs. 64 and 65 are flowcharts illustrating processing for registering a template image.

When a template image is registered in the main server 30, a design fee and use fee (referred to as "special fees") are set also in regard to the component images constituting the template image. This differs from the case in which a component image is registered in the main server 30. Special fees are set by the user and ultimately are decided in communication with the main server 30.

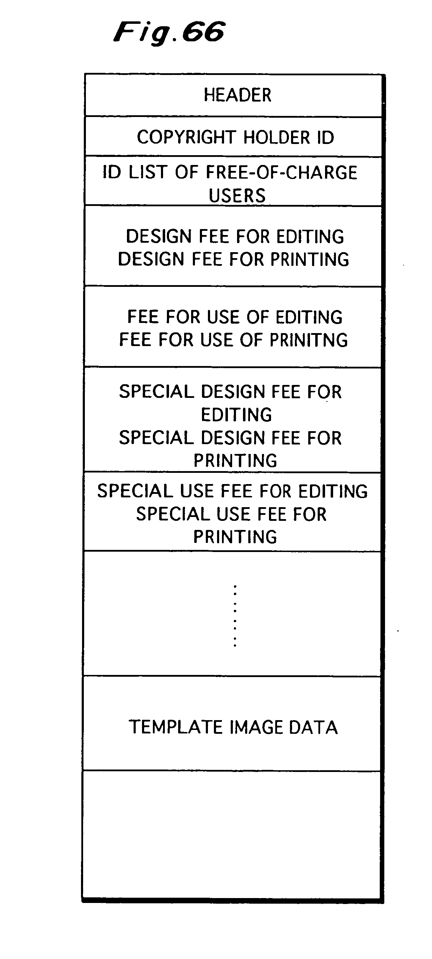

When a template image is registered in the main server 30, a template image registration file shown in Fig. 66 is transmitted from the image editing apparatus 1 to the main server 30 (step 311). Unlike the component image file, the template file includes, in regard to the component images constituting the template image, an editing design fee (a special design fee at time of editing) in regard to the component images constituting the template image, a printing design fee (a special design fee at time of printing), an editing use fee (a special use fee at the time of editing) and a printing use fee (a special use fee at the time of printing), these fees corresponding to the component images constituting the template image.

When the template image file is transmitted to the main server 30, the content of the file is checked (step 321). If the result of checking shows that the image data has been destroyed, this fact is transmitted to the image editing apparatus 1 ("NO" at step 322; step 323). The image editing apparatus 1 executes predetermined processing in dependence upon suspension of registration (step 312). If the result of checking shows that the image data has not been destroyed ("YES" at step 322), then a component image constituting the template image is retrieved (step 324).

It is determined whether the creator of the template image is an individual permitted to use the retrieved component image free of charge (step 325).

If the individual is one not permitted to use the component image free of charge ("NO" at step 325), then the special fee included in the template image file is transmitted to the user who created the component image (step 326). When the user who created the component image does not agree to the special fee transmitted from the main server 30 ("NO" at step 327), a new special fee is set by the user who created the component image (step 328). When the user who created component image agrees to the special fee ("YES" at step 327), the processing of step 328 is skipped. The processing of steps 324 - 239 is repeated in regard to all component images constituting the template image.

The editing design fee, printing design fee, editing use fee and printing use fee of the template image are decided by referring to the special fee that has been decided and the editing design fee, printing design fee, editing use fee and printing use fee decided by the user who generated the template image (step 330). When the fees that have been decided are transmitted to the image editing apparatus 1 which generated the template image and the user who generated the template image agrees to the fees, a template image ID is issued ("YES" at step 313; steps 315, 332). If the user does not agree to the fee, then registration of the template image is suspended ("NO" at step 313; steps 314, 331).

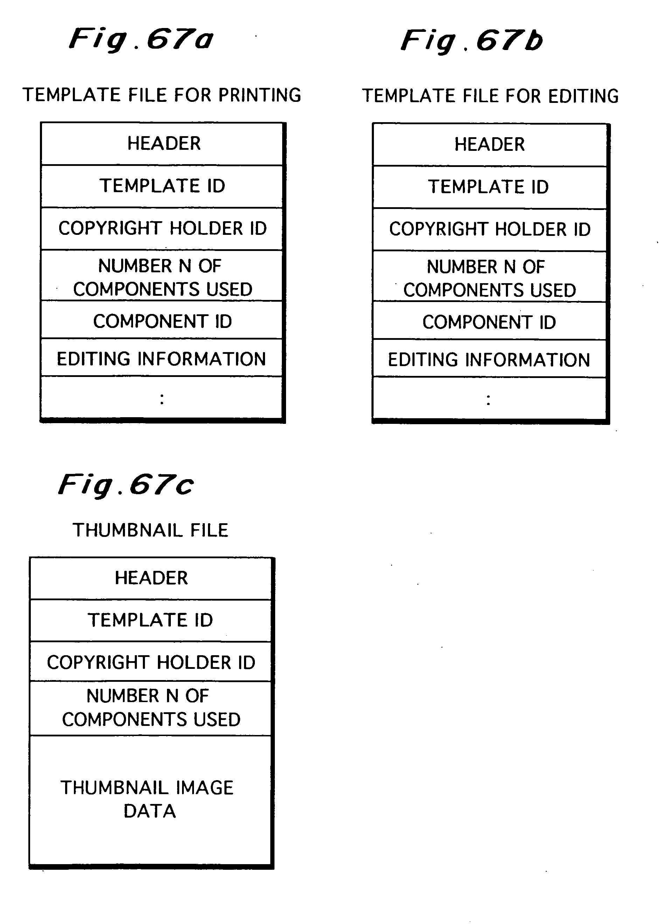

A printing template image file, editing template image file and thumbnail template image file shown in Figs. 67a, 67b and 67c, respectively, are generated and registered in the database of the main server 30 (steps 333, 334). A header, template ID, copyright holder ID and number of component images used are stored in the printing template image file, editing template image file and thumbnail template image file. A component image ID and layout information are stored in the printing template file in correspondence with the number of component images used. A template image is reproduced based upon the component ID and layout information. Thumbnail image data is stored in the thumbnail template image file. The thumbnail template image is reproduced by reading out the thumbnail image data.

### (iv) Processing for billing for image editing

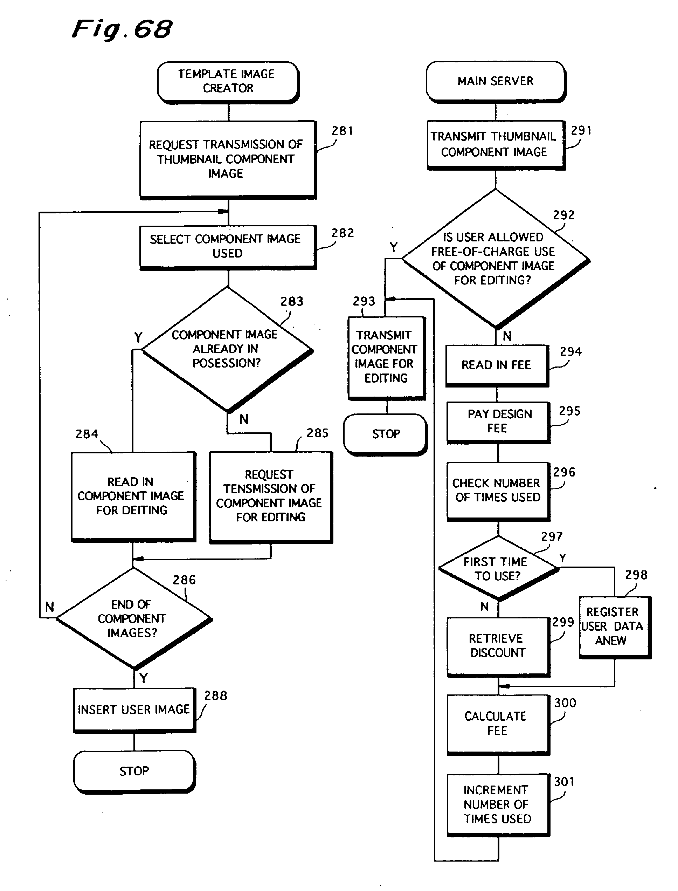

Fig. 68 is a flowchart illustrating the procedure of billing processing when image editing is performed.

Image editing involves executing image editing processing at one's own image editing apparatus 1 using component images that have been registered with the main server 30. Accordingly, billing processing when image editing is performed is substantially the same as the billing processing procedure executed at the time of template creation shown in Fig. 63. Processing steps in Fig. 68 identical with those shown in Fig. 63 are designated by like step numbers and need not be described again.

When all component images constituting a template image are read in the image editing apparatus 1 in accordance with the template billing processing shown in Fig. 63, layout of the template image is performed and the layout fee is set (step 287). With the image editing billing processing shown in Fig. 68, however, image editing processing is carried out by combining a template image or component images transmitted from the main server 30 with a user image that has already been stored in one's own image editing apparatus 1 (step 288).

### (v) Processing for billing for printing of edited image

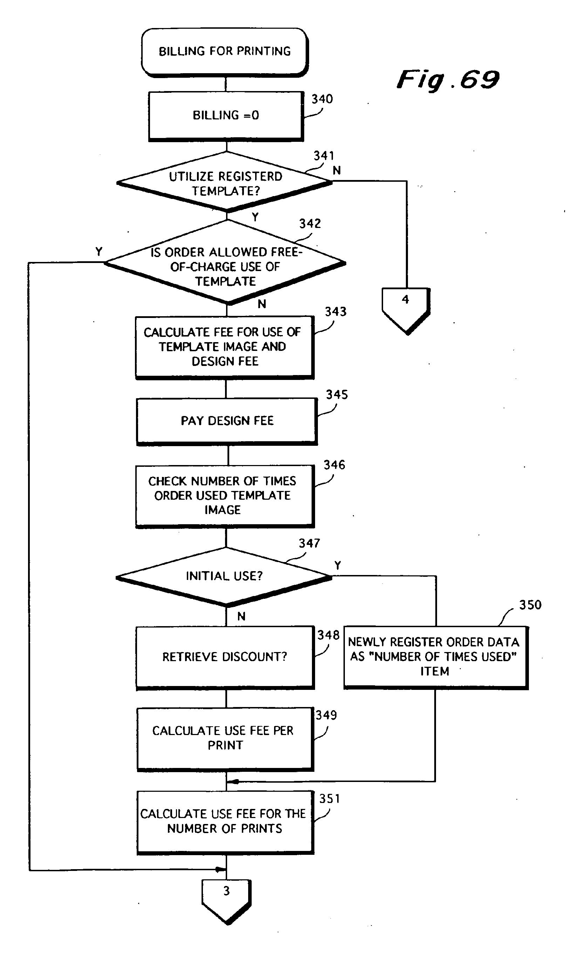

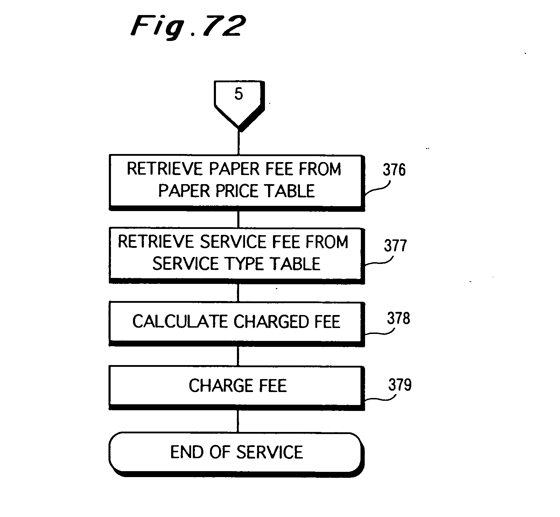

Figs. 69 through 72 are flowcharts illustrating a processing procedure for billing in a case where an editing image is printed.

First, the printing fee is initialized (step 340). Next, it is determined whether an edited image is to be printed utilizing a template image already registered in the main server 30 (step 341).

When the edited image is to be printed using a template image already registered in the main server 30 ("YES" at step 341), the fee in a case where printing is performed using the template image is calculated (steps 342 through 351).

First, it is determined whether the individual who ordered printing of the edited image is one permitted to use the template image free of charge (step 342). If the individual is one permitted to use the edited image free of charge ("YES" at step 342), then no fee is charged for use of the template image. If the individual is not one permitted to use the edited image free of charge ("NO" at step 342), then the fee to use the template image and the design fee are calculated in dependence upon the number of prints ordered (step 343). The calculated design fee is paid by the operator of the main server 30 to the creator of the template image (step 345).

The number of times the user attempting to print the edited image has used this template image is retrieved from the database and checked (step 346).

In a case where this is the first time to use the template image, the data relating to the individual who ordered the printing of the edited image is registered anew in a manner similar to that performed when an image is edited (step 350).

If the template image data has already been utilized ("NO" at step 347), then the number of times it has been used is read out of the database. The fee for printing processing declines as the number of times the same template image is used increases in a manner to similar to that of image editing, as illustrated in Fig. 73. Reference is had to a printing fee discount table shown in Fig. 73 and the discount is retrieved based upon the number of times the template image was used (step 348). The use fee per print of the template image is decided using the retrieved discount (step 349). The use fee that has been decided is multiplied by the number of prints and the use fee of the template image is decided in a case where printing is performed utilizing this template image (step 351). The number of times the template image was used is incremented.

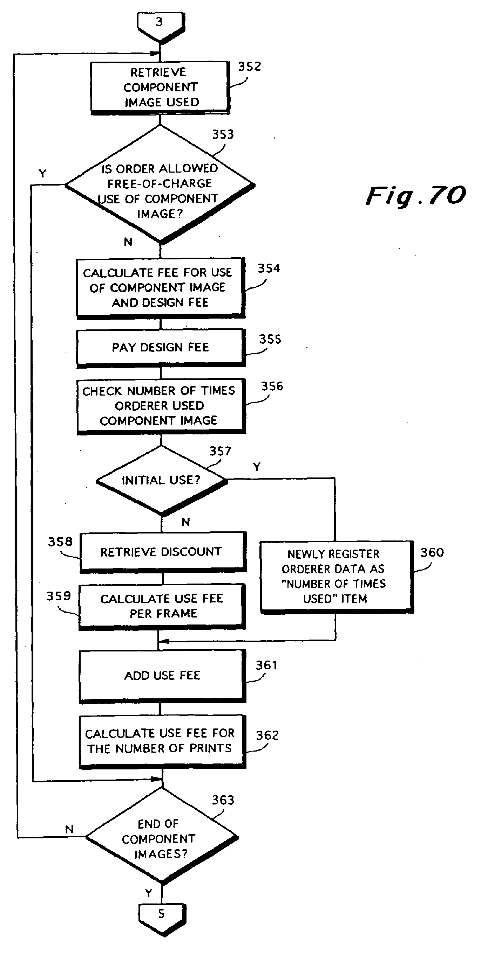

When the fee for using the template image is calculated, the next step is to calculate the fee for using the component images constituting the template image (steps 352 through 363 in Fig. 70).

First, a component image constituting the template image is retrieved by the main server 30 (step 352). The fee is calculated for each retrieved component image in the same manner that the fee for the template image was calculated above. That is, it is determined whether the orderer is an individual permitted to use the component image free of charge. If the orderer is not such an individual, then the design fee for the component image is paid to the user who created this component image (steps 354, 355).

The number of times this component image has been used is retrieved and the component image use fee for each frame is decided in dependence upon the frequency or use. The decided component image use fee for each frame is multiplied by the number of prints and the fee for use of the component image constituting the template image is decided (steps 361 - 363)

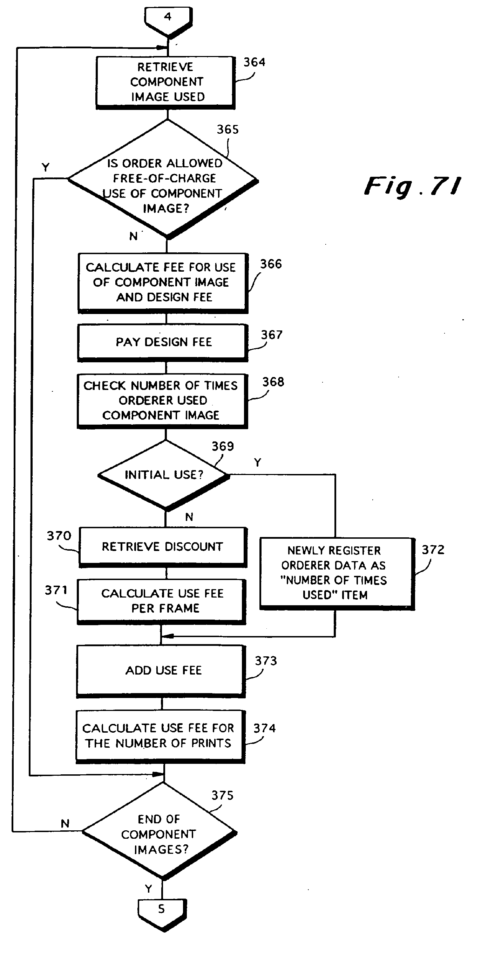

When a template image registered in the main server 30 is not used, the fee regarding the component image used in printing is calculated (steps 364 - 375 in Fig. 71).

The calculation of the fee regarding the component image is performed in the same manner as the above-described calculation of the fee for the template image and the calculation for the fee of a component image constituting the template image.

First, the component image is retrieved by the main server 30 (step 364). It is determined, for each retrieved component image, whether the orderer of printing is an individual allowed to make free use of the component image. If the orderer is not such an individual, then the design fee is paid to the creator of this component image (steps 366, 367). The number of times the component image has been used is checked and the use fee for one frame of the component image is calculated in dependence upon the number of times (steps 369 - 373). The calculated fee for one frame is multiplied by the number of prints and the fee for the component image in case of printing is calculated (step 374).

When the use fee for printing of the template image and component image constituting the template image or the use fee for printing the component image is calculated, the cost of the paper is calculated.

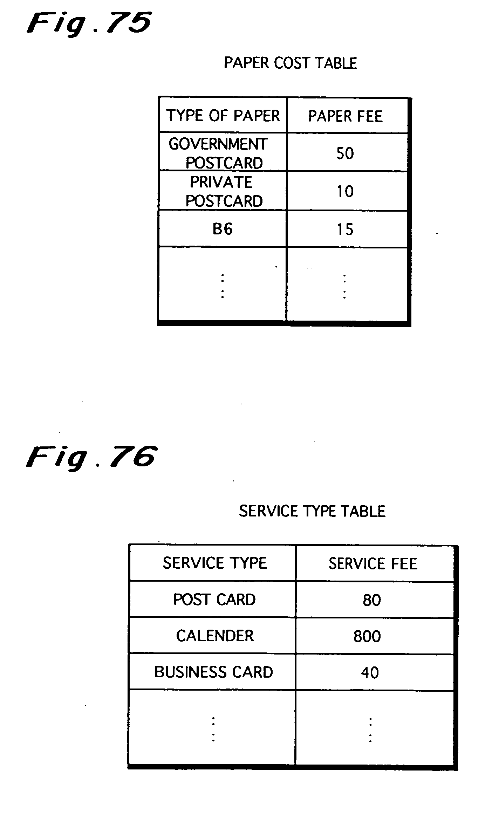

Fig. 75 illustrates a paper cost discount table. The paper cost is decided for each type of paper and the paper cost corresponding to the type of paper specified by the ordered is read out (step 376).

The fee for the type of service, such as how printing is to be performed, is decided.

Fig. 76 illustrates a table of costs for various services. The cost is decided for each type of printing service and the corresponding cost is read out of the table (step 377).

The fee for use of the image, the paper cost and the cost of the printing service thus calculated are added together to calculate the final printing fee (step 379). The orderer of printing is invoiced for the final printing fee.

### (12) Processing for receipt of payment

Processing for receipt of payment will be described next.

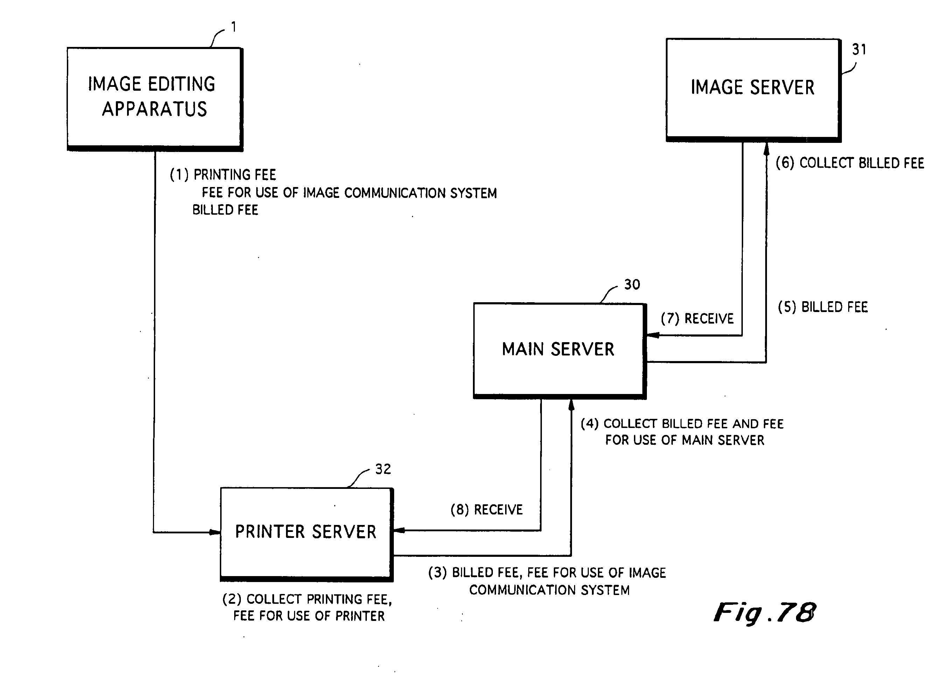

When a printed article, namely an edited image printed by the printer server 32, is received by C.O.D. post, as shown in Fig. 78, the payment is sent to the operator of the printer server 32. The payment includes the printing fee, the fee for using the image communication system and the fee billed for a copyright-protected image. Processing is the same even in a case where the printed article is accepted at a store instead of by C.O.D. post.

The operator of the printer server 32 collects the printing fee and sends the remainder of the payment to the operator of the main server 30. At this time the payment-made flag in the billing management file of the printer server 32 is checked.

Upon receiving the payment, the operator of the main server 30 collects the fee for using the main server 30 and the fee for using the copyright-protected image and sends the remainder of the payment to the other image server 31. At this time the payment-made flag of the second billing management file of main server 30 is checked. Further, the receipt information (the encrypted receipt number, image file name, unit billed fee, total billed fee, date and billed customer name) is transmitted to the printer server 32. The receipt number is encrypted in order to prevent forgery.

Upon receiving payment, the operator of the image server 31 collects the fee for using the copyright image. In addition, the receipt completed flag in the first image billing file of the image server 31 is checked. Receipt information which includes the encrypted receipt number, image file name, billed unit fee, total billed fee and date is transmitted from the image server 31 to the printer server 32. As a result, the operator of the printer server 32 is capable of confirming the fact that the operators of all servers have received the fees. The printer server 32 may notify other servers of the fact that payment has been received.

### (13) Processing when printing is canceled

Processing by the printer server 32 in a case where printing of an edited image is canceled will now be described.

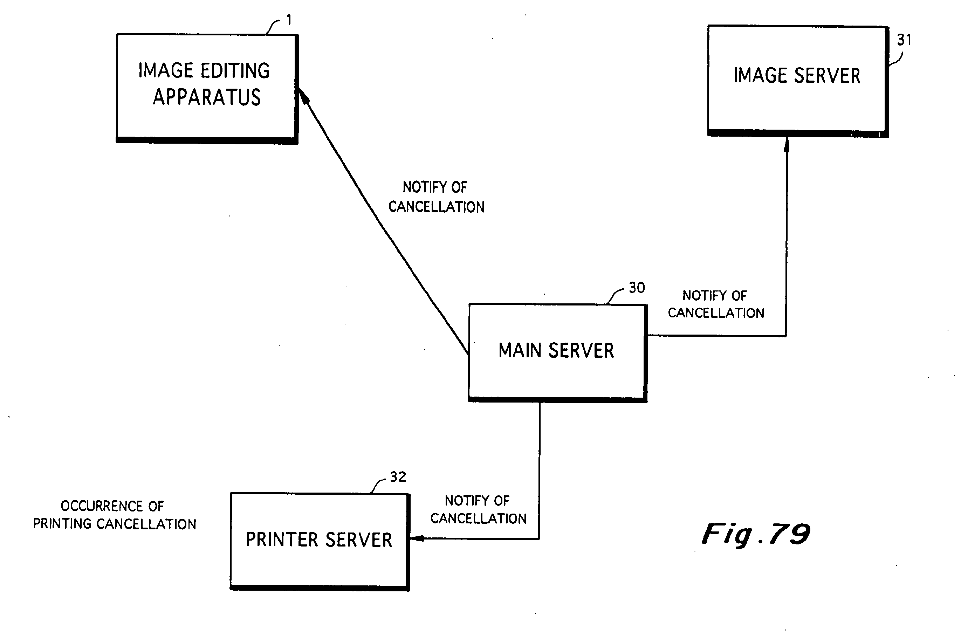

In a case where a malfunction occurs at the printer server 32 and an edited image cannot be printed as a consequence, a cancellation flag in the billing management file of the printer server 32 is checked (see Fig. 79). In addition, the main server 30 is notified of cancellation. Upon receiving notification of cancellation, the main server 30 checks the cancellation flag of the second billing management file of the main server 30. The image server 31 is notified of cancellation as well. Upon receiving notification of cancellation, the image server 31 checks the cancellation flag of the first image billing file.

Upon receiving notification of cancellation, the main server 30 and image server 31 send the printer server 32 cancellation notification mail which includes the encrypted receipt number, image file name, date and billed customer name. Further, the main server 30 sends the image editing apparatus 1 cancellation mail which includes the receipt number, billed customer name, image file name, cancellation name and date. As a result, the user of the image editing apparatus 1 is capable of giving notification of the fact that printing of the edited image has been canceled, as well as the reason for cancellation.

### (14) Authentication processing

In the embodiment described above, the image editing apparatus 1, main server 30 and image server 31 execute processing for sending and receiving image data to and from each other without executing authentication processing. However, data can be sent and received upon utilizing an authentication station to verify, by an electronic signature, whether an individual is authorized to send and receive data.

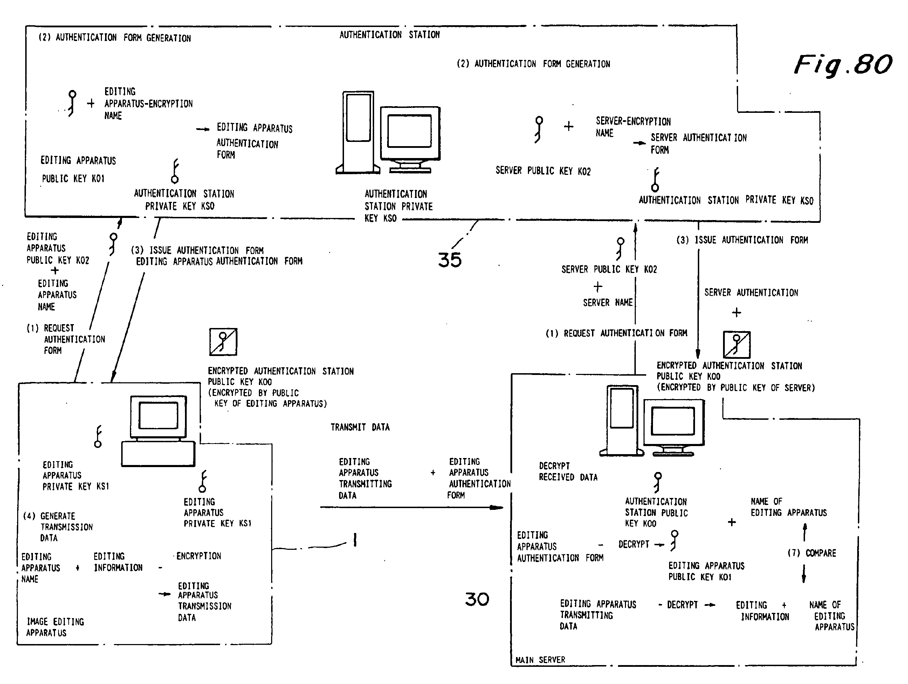

Fig. 80 illustrates a procedure in a case where data is sent and received between the image editing apparatus 1 and the main server 30 utilizing an authentication station.

An authentication station 35 is provided in addition to the image editing apparatus 1 and main server 30. The image server 31 and printer server 32 are not shown in Fig. 80.

In order to request authentication, the user of the image editing apparatus 1 and the operator of the main server 30 each transmit the public key of the requester and the requester name to the authentication station 35. In this case a public key K01 and name (ID) of the image editing apparatus 1 are transmitted from the image editing apparatus 1 to the authentication station 35, and a public key K02 and name (ID) of the main server 30 are transmitted from the main server 30 to the authentication station 35.

If the authentication station 35 confirms that the image editing apparatus 1 and main server 30 are legitimate, then the authentication station 35 generates an authentication form obtained by encrypting the received public key K01 and name of the image editing apparatus 1 by a private key KS0 of the authentication station. Similarly, the authentication station 35 generates an authentication form obtained by encrypting a received public key K02 and name of the main server 30 by the private key KS0 of the authentication station.

A public key K00 of the authentication station is encrypted by the public key K01 of the image editing apparatus 1, and the encrypted public key K00 of the authentication station and authentication form are transmitted to the image editing apparatus 1. The encrypted public key K00 of the authentication station encrypted can be decrypted in the image editing apparatus 1 using a private key KS1 of the image editing apparatus 1. The public key K00 of the authentication station is encrypted by the public key K02 of the main server 30, and the encrypted public key K00 of the authentication station and authentication form are transmitted to the main server 30. The encrypted public key K00 of the authentication station can be decrypted in the main server 30 using a private key KS2 of the main server 30.

When the authentication form is received by the image editing apparatus 1, the latter encrypts order information by the private key KS1 of the image editing apparatus 1 and transmits the encrypted order information and the authentication form of the image editing apparatus 1 to the main server 30.

Upon receiving the data transmitted from the image editing apparatus 1, the main server 30 decrypts the authentication form of the image editing apparatus 1 by the public key K00 of the authentication station. As a result, the main server 30 obtains the public key K01 of the image editing apparatus 1 and the information relating to the image editing apparatus 1. Further, the main server 30 decrypts the editing information, which has been transmitted from the image editing apparatus 1 and encrypted, by the decrypted public key K01 of the image editing apparatus 1 to obtain the editing information and information relating to the image editing apparatus 1. It is determined whether the two items of information relating to the image editing apparatus 1 thus obtained agree. If the two items of information agree, this means that the image editing apparatus 1 is legitimate, it is judged that the order is legitimate and the edited image is printed. This makes it possible to prevent illegitimate ordering of printed images.

An arrangement may be adopted in which legitimate invoicing of payment is judged in similar fashion in a case where information relating to billing has been authenticated.

### (15) Example of application of image printing system

An example has been described in which the image editing apparatus 1 and printer server 32 are installed at different locations. However, the image editing apparatus 1 and printer server 32 may be placed at the same location (in the user's home). Further, the image editing apparatus 1 and printer server 32 may be constituted by a single apparatus.

A case in which an edited image to be printed is generated by the image editing apparatus 1 will be described first.

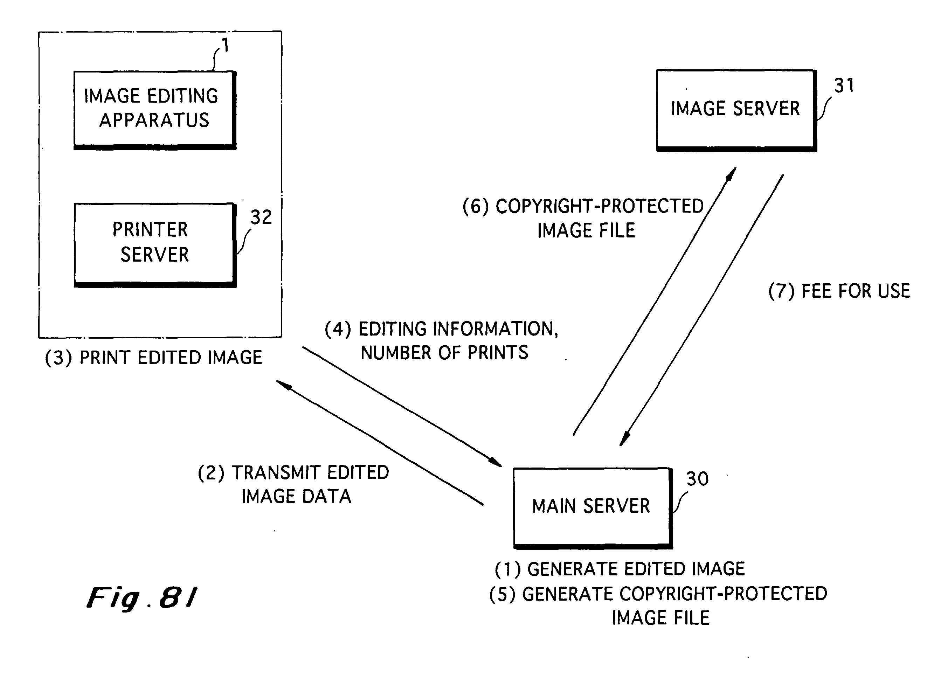

Fig. 81 illustrates the manner in which data communication is carried out among the image editing apparatus 1, main server 30, image server 31 and printer server 32.

An edited image is generated from a plurality of images and edited image data representing the edited image is transmitted from the main server 30 to the printer server 32, which is at the same location as that of the image editing apparatus 1. The printer server 32 prints the edited image from the edited image data.

When the edited image is printed by the printer server 32, the editing information of the printed edited image and the data representing the number of prints are transmitted from the printer server 32 to the main server 30.

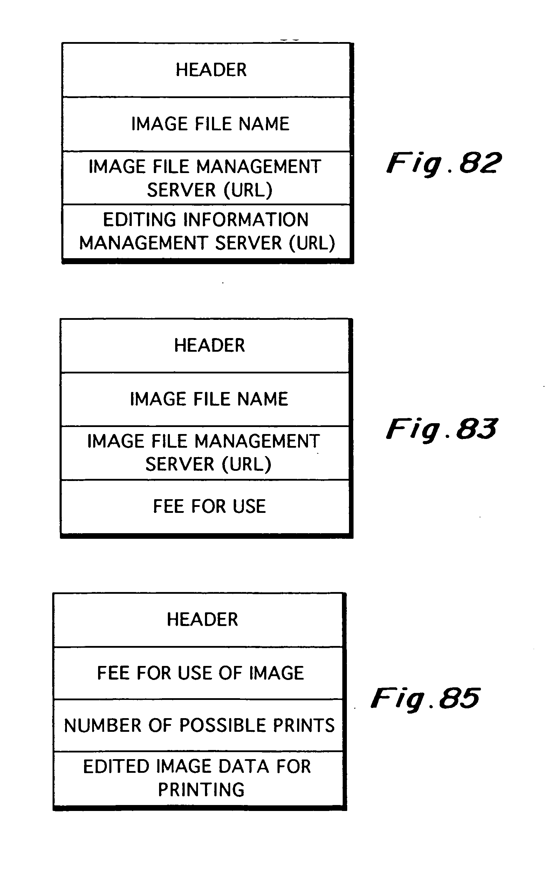

When the editing information of the printed edited image and the number of prints are received, a file of copyright-protected images used is generated by the main server 30 from the received data, as shown in Fig. 82.

A header indicative of the file of copyright-protected images used, the file name of the copyright-protected images, the server name (URL) managing the copyright-protected images, the server name (URL) managing the editing information and the number of times printing is performed are stored in the file of copyright-protected images used.

On the basis of the editing information transmitted from the printer server 32, it is determined whether the printed edited image includes a copyright-protected image being managed by a server (here assumed to be the image server 31) other than the main server 30. When a copyright-protected image being managed by the image server 31 is included in the printed edited image, the file of copyright-protected images used is transmitted to the image server 31.

On the basis of the file of copyright-protected images used transmitted from the main server 30, the image server 31 charges the main server 30 for the fee for use of the copyright-protected image.

The fee for using a copyright-protected image managed by the image server 31 and the fee for using a copyright-protected image managed by the main server 30 are transmitted from the main server 30 to the printer server 32.

Upon being charged for use of a copyright-protected image, the user of the printer server 32 (who is also the user of the image editing apparatus 1) pays the operator of the main server 30 the fee for using the copyright-protected image.

The fee for using the copyright-protected image is calculated in the following manner:
Fig. 83 shows a list file of copyright-protected images used. This file is managed by the main server 30 and is generated for every copyright-protected image. A header indicative of the file of copyright-protected images used, the file name of the copyright-protected images, the server name (URL) managing the file of copyright-protected images and the fee for use are stored in the file list of copyright-protected images used.

If it is the copyright-protected image managed by the main server 30,the use fee is recorded in the copyright-protected image file, since the use fee is recognized by the main server 30.

If an image is a copyright-protected image managed by the image server 31, the file of copyright-protected images used is transmitted from the main server 30 to the image server 31, where the fee for use is calculated. The calculated fee for use is transmitted from the image server 31 to the main server 30.

When data representing the fee for using a copyright-protected image is received from the image server 31, the fee represented by this data is written in a use fee section of the file of copyright-protected images used.

When all fees for using copyright-protected images are obtained, the total sum is calculated by the main server 30 and data representing the total sum calculated is transmitted from the main server 30 to the printer server 32.

Next, an explanation is given to a case where the main server 30 generates the edited image, and an editing image for printing, of which the number of printing is restricted became of that the use fee is received from the user of the printer server 32, is transmitted to the printer server 32 from main server 30.

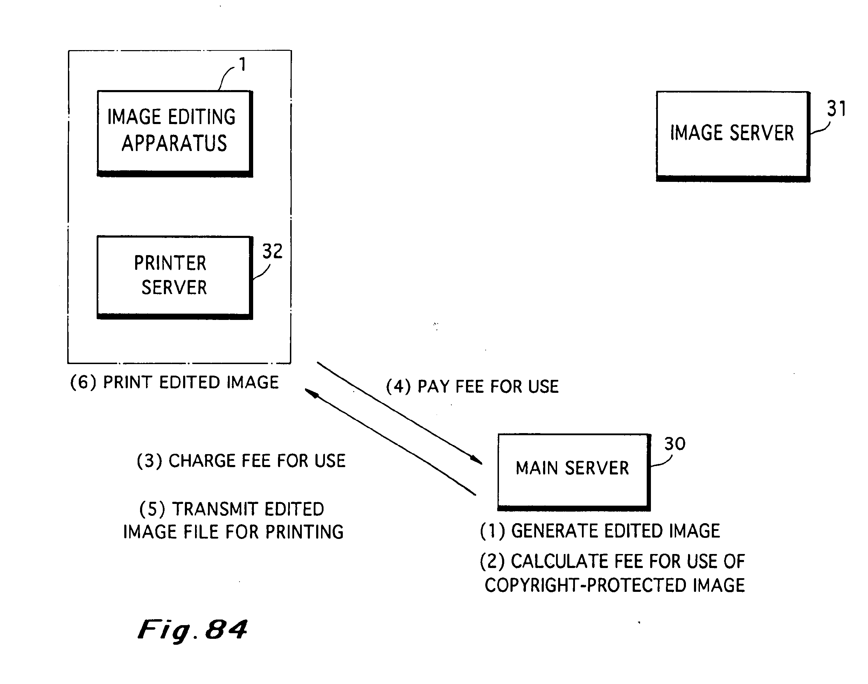

As shown in Fig. 84, the image editing apparatus 1 requests the main server 30 to generate an edited image for printing purposes. The main server 30 responds to the request by generating the edited image for printing. The main server 30 calculates the fee for using a copyright-protected image from the editing information transmitted from the image editing apparatus 1 and the number of prints.

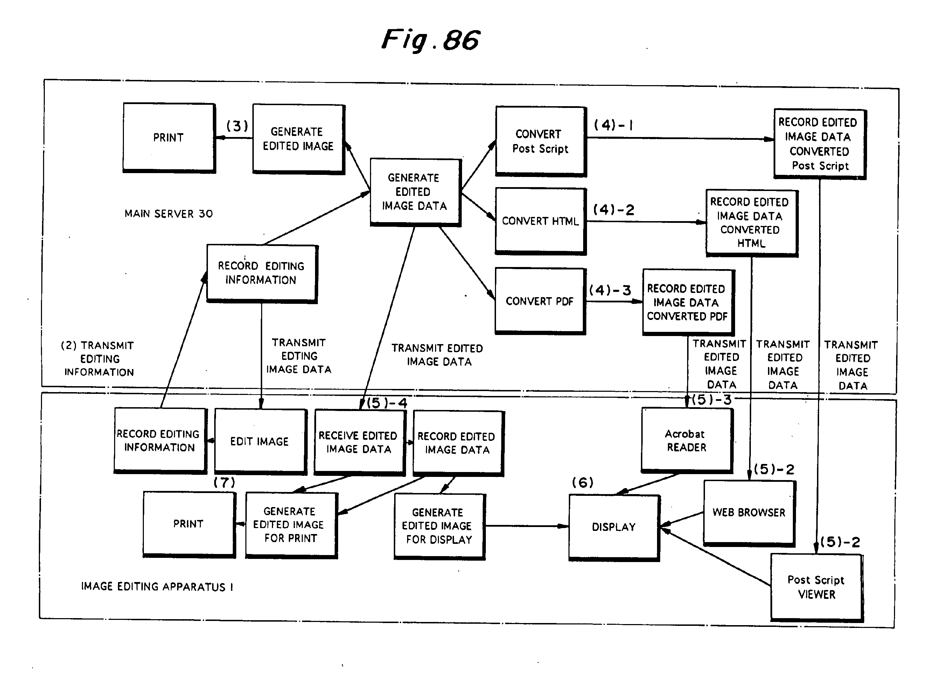

When the fee for using the copyright-protected image is calculated, the main server 30 charges the user of the image editing apparatus 1 for the calculated use fee. If the user of the image editing apparatus 1 pays in response to being charged, an edited image file for printing shown in Fig. 85 is transmitted from the main server 30 to the printer server 32.

The edited image file for printing includes a header indicative of the edited image file for printing, the fee for using a copyright-protected image, the number of prints capable of being printed and edited image data for printing.

The printer server 32 receives the edited image file for printing, the latter reads in the edited image data for printing contained in the edited image file for printing and, whenever printing is performed, decrements the number of prints, which are capable of being printed, included in the edited image file for printing. Printing of edited images represented by the edited image data for printing is inhibited when the number of prints capable of being printed reaches zero. The number of times printing is performed by the printer server 32 can be limited even though it is installed at the same location as that of the image editing apparatus 1.

In the above application example, the edited image is printed in the printer server 32. The main server 30 may transmit the edited image data generated therein to the image editing appears 1, which may display and print the edited image represented by the edited image data transmitted from the main server 30. In this case, the edited image data is registered in the main server 30, and the registered edited image data is transmitted to the image editing apparatus 1. The image editing apparatus 1 displays and prints the edited image represented by the edited image data transmitted from the main server 30. It goes without saying that the edited image is only displayed but is not printed, or the edited image is only printed but is not displayed. The above processing or operation is referred to as "obtaining" of the edited image in the image editing apparatus by the user.

An user who registered the edited image in the main server 30 can obtain not only the edited image registered by himself or herself, but also edited images which have been registered by other users. In a case where obtaining is permitted, deletion of the edited image data in the main server 30 is suspended. In a case where obtaining is permitted, image editing processing using the copyright-protected image is prohibited.

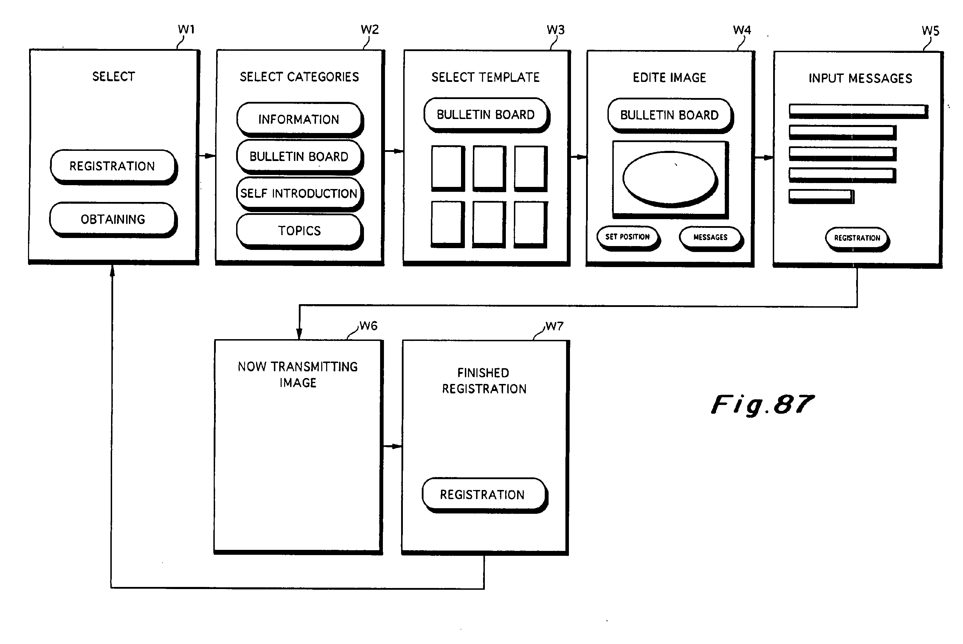

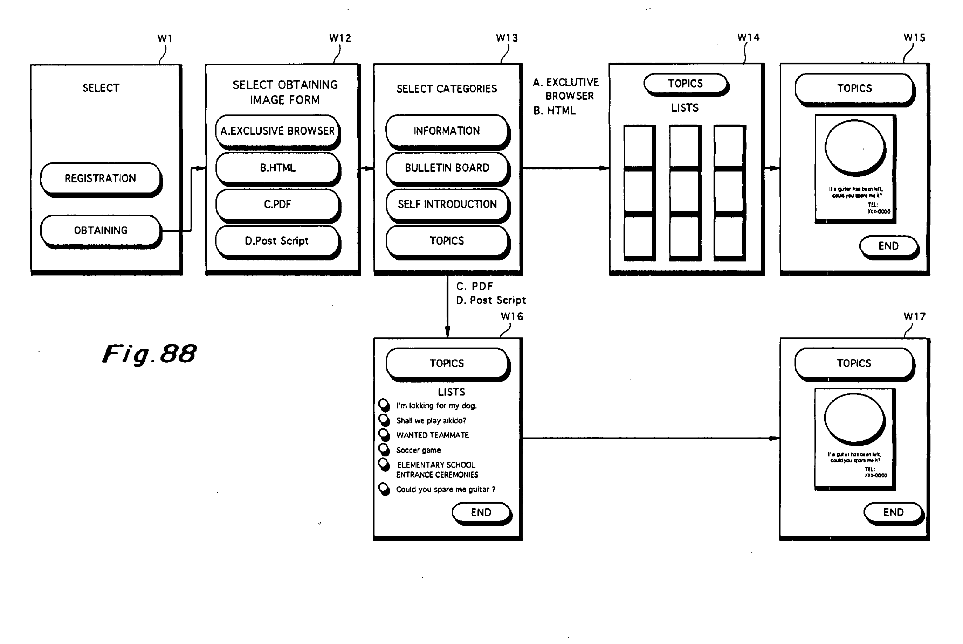

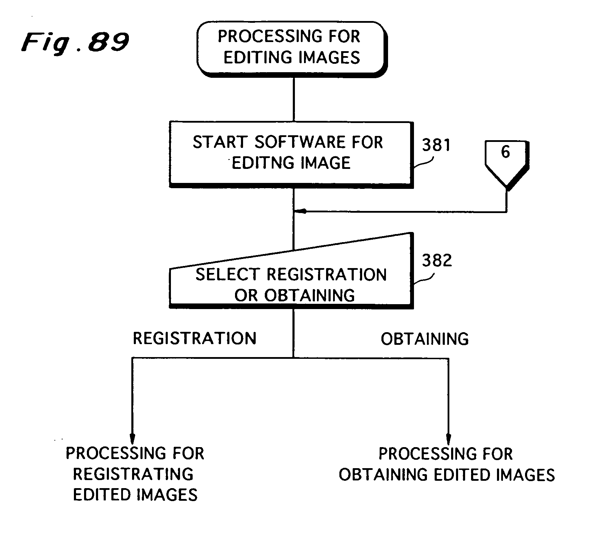

Fig. 86 shows processing for printing the edited image represented by the edited image data in the image editing apparatus 1. Figs. 87 and 88 show examples of screens appearing on the display unit 14 of the image editing apparatus 1 when the processing shown in Fig. 86 is performed, and Figs. 89 thorough 93 are flow charts illustrating the details of the processing shown in Fig. 86.

The image editing software installed in the image editing apparatus 1 is started by the user (step 381). When the image editing software starts, a selection window W1 for carrying out selection of registration or obtaining shown in Figs. 87 and 88 appears on the display screen of the display unit 14. The selection window W1 includes an area which is clicked by the user when the edited image is registered in the main server 30 and an area which is clicked by the user when the edited image is obtained. In response to that one of the areas is clicked by the user, processing for registration of the edited image or processing for obtaining of edited image is carried out in accordance with the clicked area (step 381).

First, the registration processing will be described. Here, the edited images are registered for each category. When the edited image is registered, an unique ID is assigned to the edited image data by the main server 30 such that the same ID with that of other edited image data is not assigned. The assigned unique ID is recorded in a tag area of the edited image file.

With reference to mainly Figs. 87 and 89, in the processing for registration of the edited image, a category selection window W2 which shows categories classifying the edited image is displayed on the display screen of the display unit 14 of the image editing apparatus 1 (step 401). It is assumed that "INFORMATION", "BULLTIN BOARD", "SELF-INTRODUCTION" and "TOPICS" are predetermined as categories. The user watches the displayed categories and judges, to which category the edited image should belong. The category, in which the edited image is to be registered, is selected by clicking area of the category desired by the user (step 402). Here, it is assumed that "BULLTIN BOARD" is selected as the desired category.

A transmission request for a list of template image data registered in the selected category is generated in response to the selection of the category by the user, and the transmission request is transmitted to the main server 30 from the image editing apparatus 1 (step 403).

When the main server 30 receives the transmission request for the list of template image data from the image editing apparatus 1 (step 410), a list of reduced-image-file names of the templates which have been registered in the category selected by user of the image editing apparatus 1 is generated (step 411). The reduced images of the templates, the names of which appear in the generated list of the file names, are retrieved, and data for displaying the multi-screen of the retrieved template images is generated (step 412).

The generated data for displaying the list of the template images is transmitted to the image editing apparatus 1 from the main server 30. The template list is displayed on the display screen of the display unit 14 of the image editing apparatus 1 based on the received data for displaying the list of the template images (step 404, an window W3)

The template list window W3 shows various editing template images corresponding to the category selected by the user. The user selects a template image from among the editing template images shown in the template list window W3 by clicking the desired template image (step 405).

When the template image desired by the user is selected, data requesting the selected template image data is transmitted to the main server 30 from the image editing apparatus 1 (step 406). When the main server 30 receives the template image requesting data from the image editing apparatus 1, editing template image data of the requested template is searched in response to the receipt. The found template image data is transmitted to the image editing apparatus 1 from the main server 30 (step 413). The editing template image data transmitted from the main server 30 is received in the image editing apparatus 1 (step 406).

When the editing template image data is received, the processing for editing image is carried out using the editing template image represented by the editing template image data, the free image or the like, as described above (step 407). In the processing for editing image, the editing window W4 is displayed on the display screen of the display unit 14. In the processing for editing image, the editing information is also inputted. Here, the message put up to the bulletin board is also inputted in addition to the editing information (step 408). The individual information input window W5 is displayed on the display screen of the display unit 14 for the input of the message.

When processing for editing image is completed, the user image, the editing information and the message necessary for generating the edited image data are transmitted to the main server 30 from the image editing apparatus 1 (step 409). At this time, a window W6 showing that data transmission is in process is displayed.

The received image, the editing information, individual information or the like are registered in the main server 30 (step 414). Further, the edited image data representing the edited image generated by the user of the image editing apparatus 1 is generated from the free image, the editing information and the message. The generated edited image data is converted to PostScript. Further, the generated edited image data is also converted to HTML (Hyper Text Markup Language). Furthermore, the generated edited image data is converted to PDF (Portable Document Format). The generated edited image data, in this way, is converted to three different image formats and they are registered. Further, a reduced image of the edited image is generated (step 415). The window W7 showing completion of registration is displayed on the display unit 14 of the image editing apparatus 1.

The processing results of the processing for generating of the edited image data, processing for converting to various image formats and processing for generating the reduced image are transmitted to the image editing apparatus 1 from the main server 30. The user of the image editing apparatus 1 which has received the processing results may performs again the processing for editing image so as to complete the incomplete processing, if necessary, upon checking the processing results.

As described above the processing for registration of the edited image is completed. Next, the processing for obtaining will be explained (step 382).

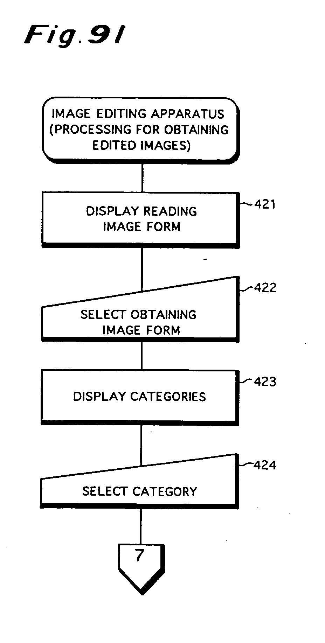

With reference to mainly Fig. 88 and Figs. 91 through 93, when the obtaining area of the selection window W1 is clicked by the user, an window W12 for selecting an image format from among image formats which are allowed to be obtained is displayed on the display screen of the display unit 14 (Fig. 91, step 421). The image format selection window W12 includes areas for designating obtaining image formats. Included in the window W12 are an area for obtaining image using a browser dedicated to the display of the edited image, an area for obtaining image using HTML format, an area for obtaining image using PDF format and an area for obtaining image using PostScript format. The obtaining image format is selected by clicking the area desired by the user from among the displayed above areas (Fig. 91, step 422).

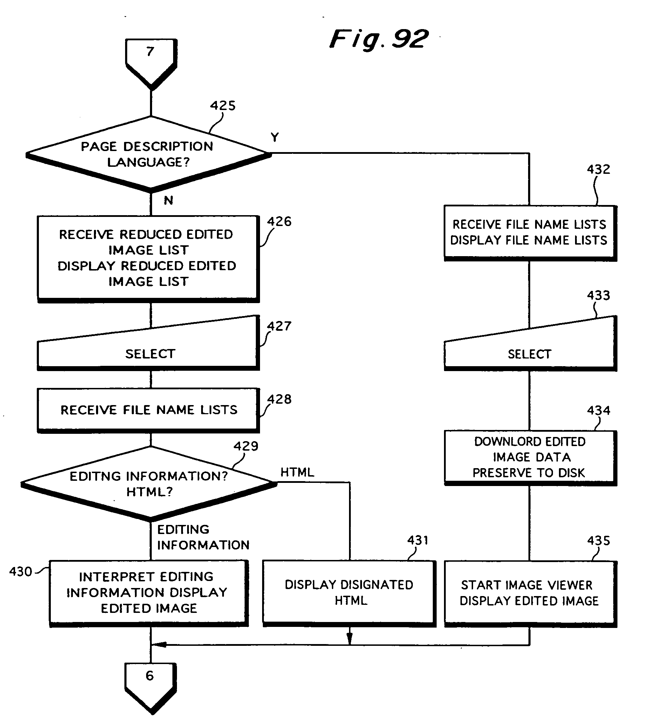

Next, an obtaining category selection window W13 is displayed on the display screen of the display unit 14 (Fig. 91, step 423). The edited images which can be obtained are classified under categories, the desired category is selected by the user (Fig. 92, step 424). The obtaining category selection window W13 shows areas which indicate categories allowed to be obtained. An area representing a desired category is clicked by the user.

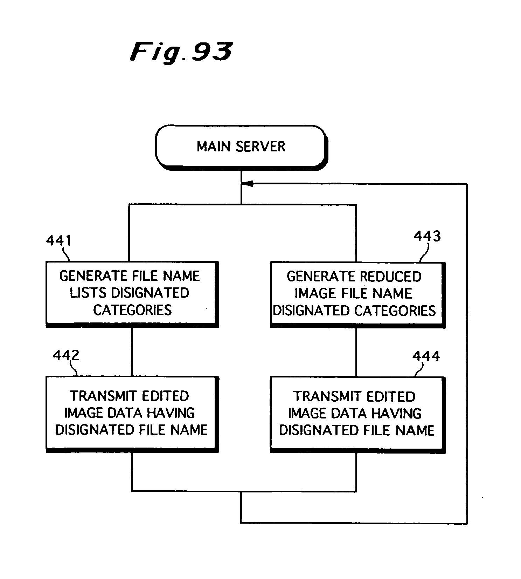

When the desired category is selected by the user, processing thereafter will proceed to in accordance with the selected image format. If the obtaining image is that the format of which is the page description language (i.e., PostScript and PDF) (Fig. 92, "YES" at step 423), a list of file names of edited images which are registered in the category selected by the user is generated in the main server 30 (Fig. 93, step 441). The data representing the file names appearing in the generated list is transmitted to the image editing apparatus 1 from the main server 30. The file names of the selected category are displayed on a file name list window W16 of the display unit 14 of the image editing apparatus 14 (Fig. 92, step 432).

The edited image to be obtained is selected by clicking a desired file name shown in the file name list window W16 (Fig. 92, step 433). The data representing the selected file name, as well as a transmitting request, are transmitted to the main server 30 from the image editing apparatus 1. When the data representing the file name and the transmitting request are received by the main server 30, the edited image data (the edited image data for printing) having the file name is searched. The found edited image data is transmitted to the image editing apparatus 1 from the main server 30 (Fig. 93, step 444).

The edited image data transmitted from the main server 30 is recorded on the harddisk of the image editing apparatus 1 by the HD drive 24 (Fig. 92, step 434). An image viewer software corresponding to the selected obtaining image format is started, and the edited image represented by the edited image data recorded on the harddisk is displayed on the display screen of the display unit 14 (Fig. 92, step 434, window W17). For example, if page description language is PostScript, a PostScript viewer is started, if the image format is HTML, an web brower is started. Further, the edited image represented by the edited image data recorded on the harddisk is printed by the printer 20 connected to the image editing apparatus 1, if required.

Next, it is assumed that an obtaining image format selected by the user of the image editing apparatus 1 is the image format other than the page description language (i.e., HTML, or one which has not been converted to any of the above formats) (Fig 92, "NO" at step 425). In a case where the selected image format is that other than page description language, the list of the file names of the reduced images of the edited images registered in the selected category is generated by the main server 30 (Fig. 93, step 443). The multi-screen of the reduced images is generated from the image data representing the reduced images, the image data representing the multi-screen is transmitted to the image editing apparatus 1 from the main server 30.

When the image data representing the multi-screen is transmitted to the image editing apparatus 1, a multi-screen window W14 is displayed on the display unit 14 of the image editing apparatus 1 (Fig. 92, step 424).

When a desired reduced image displayed on the window W14 is clicked by the user of the image editing apparatus 1, the data representing the file name of the selected edited image is transmitted to the main server 30 from the image editing apparatus 1 (Fig. 92, step 428).

When the data representing the file name of the selected edited image is received by the main server 30, the edited image data designated by the received data is searched in the main server 30. If the edited image data representing edited image selected by the user of the image editing apparatus 1 is found, the edited image data is transmitted to the image editing apparatus 1 from the main server 30 (Fig. 93, step 442).

The image editing apparatus 1 receives the edited image data transmitted from the main server 30. It is judged whether the format of the received image data is HTMK or the other (which means that the image data is edited by the image editing software in the main server 30 but is not converted to any of above the three formats (Fig. 92, step 429). If the image format is based on the image format of the image editing software, the edited image is displayed from the edited image data received based on the editing image software dedicated to the image editing apparatus (Fig. 92, step 430). Further, the edited image is printed, if necessary. If the format of the edited image data is the HTML format, the edited image is displayed by the HTML format(Fig. 92, step 431). As a result, the edited image is displayed on the screen of the display unit 14 (window W15).

The edited image is registered not only in one image format, but also in a plurality of types of image formats (inclusive of one which is not converted to any of the above three special formats). The possibility in which the user can obtain the edited image becomes high.

Furthermore, the image editing apparatus 1 described above is normally placed in the user's house. However, it may be disposed on streets, in front of stores, in stores and the like.

As many apparently widely different embodiments of the present invention can be made without departing from the spirit and scope thereof, it is to be understood that the invention is not limited to the specific embodiments thereof except as defined in the appended claims.

## Claims

1. An image server for use in a system constituted by an image editing apparatus, the image server, which has image data storage means in which image data representing images of a plurality of frames has been stored and image data transmitting means for transmitting image data, which represents images of at least two frames from among the images of the plurality of frames, to said image editing apparatus based upon a transmission command from said image editing apparatus, and a printer server, said image editing apparatus, said image server and said printer server being capable of communicating with one another, said image server comprising:
image generating data receiving means for receiving, from said image editing apparatus, information relating to editing of an edited image of one frame generated in said image editing apparatus using image data representing images of at least two frames transmitted from said image data transmitting means of said image server, and image identification data for specifying the image data that has been transmitted from said image server;
edited image data generating means for retrieving image data, which corresponds to the images of at least two frames that have been stored in the image data storage means included in said image server, on the basis of the image identification information transmitted from said image generating data transmitting means, and generating edited image data, which represents the edited image, on the basis of the image data that has been retrieved and information relating to generation of the edited image; and
edited image data transmitting means for transmitting the edited image data to said printer server in order to print the edited image using the edited image data that has been generated by said edited image generating means.

2. An image server comprising:
image data storage means for storing image data;
image generating data receiving means for receiving information relating to editing of an edited image of one frame generated using image data representing images of at least two frames, and image identification data for specifying image data;
edited image data generating means for retrieving image data, which corresponds to the images of at least two frames that have been stored in said image data storage means, on the basis of the image identification information, and generating edited image data, which represents the edited image, on the basis of the image data that has been retrieved and information relating to generation of the edited image; and
edited image data transmitting means for transmitting the edited image data to said printer server in order to print the edited image using the edited image data that has been generated by said edited image generation means.

3. A computer-readable recording medium storing a program for controlling a computer of an image server so as to:
receive information relating to editing of an edited image of one frame generated using image data representing images of at least two frames, and image identification information for specifying image data;
retrieve image data, which corresponds to the images of at least two frames that have been stored in image data storage means, on the basis of the image identification information, and generate edited image data, which represents the edited image, on the basis of the image data that has been retrieved and information relating to generation of the edited image; and
transmit the edited image data to a printer server in order to print the edited image using the edited image data that has been generated.

4. An image server for use in an image communication system constituted by the image server, in which first image data used in editing of an image has been stored, an image editing apparatus, in which second image data used in editing of an image has been stored, and a printer server, said image server, said image editing apparatus and said printer server being capable of communicating with one another; said image server comprising:
first image data transmitting means for transmitting the first image data to said image editing apparatus on the basis of a transmission command from said image editing apparatus;
image generating data receiving means for receiving, from said image editing apparatus, information relating to generation of an edited image of one frame generated in said image editing apparatus using the first image data transmitted from said first image data transmitting means and the second image data that has been stored in said image editing apparatus, image identification information for specifying the first image data, and the second image data that was used in generation of the edited image;
edited image data generating means for retrieving the first image data, which has been stored in said first image data storage means, on the basis of the image identification information, and generating edited image data, which represents the edited image, on the basis of the first image data that has been retrieved, the second image data that has been transmitted from said image editing apparatus, and information relating to generation of the edited image; and
transmitting means for transmitting the edited image data to said printer server in order to print the edited image using the edited image data that has been generated.

5. An image server for use in an image communication system constituted by the image server, which has first image data storage means in which image data representing images of a plurality of frames has been stored, an image editing apparatus having second image data storage means in which second image data representing an image has been stored, and a printer server, said image server, said image editing apparatus and said printer server being capable of communicating with one another, said image server comprising:
first image data transmitting means for transmitting, to said image editing apparatus, first image data representing an image of at least one frame from among the images of the plurality of frames that have been stored in said first image data storage means;
image generating data receiving means for receiving, from said image editing apparatus, information relating to generation of an edited image of one frame generated in said image editing apparatus using the first image data transmitted from said first image data transmitting means and the second image data that has been stored in said image editing apparatus, and image identification information for specifying the first image data and the second image data;
edited image data generating means for retrieving, on the basis of the image identification information, the first image data from among image data that has been stored in said image server, receiving the second image data from said image editing apparatus and generating edited image data representing the edited image on the basis of the first image data that has been retrieved and the second image data that has been received and the image identification information; and
edited image data transmitting means for transmitting the edited image data to said printer server in order to print the edited image using the edited image data that has been generated.

6. An image server comprising:
first image data storage means in which image data representing images of a plurality of frames has been stored;
first image data transmitting means for transmitting, to an image editing apparatus in which second image data has been stored, first image data representing an image of at least one frame from among the images of the plurality of frames that have been stored in said first image data storage means;
image generating data receiving means for receiving, from said image editing apparatus, information relating to generation of an edited image of one frame generated in said image editing apparatus using the first image data transmitted from said first image data transmitting means and the second image data that has been stored in said image editing apparatus, and image identification information for specifying the first image data and the second image data;
edited image data generating means for retrieving, on the basis of the image identification information, the first image data from among image data that has been stored in said image server, receiving the second image data from said image apparatus, and generating edited image data representing the edited image on the basis of the first image data that has been retrieved, the second image data that has been received and the image identification information; and
edited image data transmitting means for transmitting the edited image data to said printer server in order to print the edited image using the edited image data that has been generated.

7. A computer-readable recording medium storing a program for controlling a computer of an image server so as to:
transmit first image data representing an image to an image editing apparatus in which second image data has been stored;
receive, from said image editing apparatus, information relating to generation of an edited image of one frame generated in said image editing apparatus using the first image data and the second image data, which has been stored in said image editing apparatus, and image identification information for specifying the first image data and the second image data;
retrieve, on the basis of the image identification information, the first image data from among image data that has been stored in the image server, receive the second image data from said image editing apparatus, and generated edited image data representing the edited image on the basis of the first image data that has been retrieved, the second image data that has been received, and the image identification information; and
transmit the edited image data to a printer server in order to print the edited image using the edited image data that has been generated.

8. A printer server for use in an image communication system constituted by an image editing apparatus, which has image data storage means in which image data representing images of a plurality of frames has been stored, and a printer server capable of communicating with each other, wherein said printer server comprises:
edited image data receiving means for receiving edited image data representing an edited image of one frame that has been generated using image data representing images of at least two frames from among the image data that has been stored in said image data storage means; and
printing means for printing the edited image using the edited image data.

9. A printer server comprising:
edited image data receiving means for receiving edited image data representing an edited image of one frame that has been generated using image data representing images of at least two frames; and
printing means for printing the edited image using the edited image data.

10. A computer-readable recording medium storing a program for controlling a computer of a printer server so as to:
receive edited image data representing an edited image of one frame generated using image data representing images of at least two frames; and
print the edited image using the edited image data.

11. An image server for use in an image communication system constituted by the image server, which has first image data storage means in which image data representing images of a plurality of frames has been stored, an image editing apparatus having second image data storage means in which image data representing images of a plurality of frames has been stored, and a printer server, said image server, said image editing apparatus and said printer server being capable of communicating with one another, said image server comprising:
image generating data receiving means for receiving, from said image editing apparatus, information relating to generation of an edited image of one frame generated using images of at least two frame from among image of a plurality of frames represented by image data that has been stored in said first image data storage means, and image identification information for specifying images of at least two frames that were used in generation of the edited image;
edited image data generating means for retrieving, on the basis of the image identification information, image data representing images of at least two frames, which were used in generation of the edited image, from among image data that has been stored in said first image data storage means, and generating edited image data representing the edited image on the basis of the retrieved image data, which represents the images of at least two frames, and the image identification information; and
edited image data transmitting means for transmitting the edited image data to said printer server in order to print the edited image using the edited image data that has been generated.

12. An image server comprising:
first image data storage means in which image data representing images of a plurality of frames has been stored;
image generating data receiving means for receiving information relating to generation of an edited image of one frame generated using images of at least two frames from among images represented by image data that has been stored in said first image data storage means, and image identification information for specifying images of at least two frames that were used in generation of the edited image;
edited image data generating means for retrieving, on the basis of the image identification information, image data representing images of at least two frames, which were used in generation of the edited image, from among image data that has been stored in said first image data storage means, and generating edited image data representing the edited image on the basis of the retrieved image data, which represents the images of at least two frames, and the image identification information; and
edited image data transmitting means for transmitting the edited image data to said printer server in order to print the edited image using the edited image data that has been generated.

13. A computer-readable recording medium storing a program for controlling a computer of an image server so as to:
receive information relating to generation of an edited image of one frame generated using images of at least two frames from among images represented by image data that has been stored in said first image data storage means, and image identification information for specifying images of at least two frames that were used in generation of the edited image;
retrieve, on the basis of the image identification information, image data representing images of at least two frames that were used in generation of the edited image, and generate edited image data representing the edited image on the basis of the retrieved image data, which represents the images of at least two frames, and the image identification information; and
transmit the edited image data to said printer server in order to print the edited image using the edited image data that has been generated.

14. The image server according to claim 1, 4, 5 or 11, wherein said image server and said printer server constitute a single apparatus.
